# EUROPEAN PATENT APPLICATION

(11) **EP 4 428 668 A1**
(43) Date of publication of application: **11.09.2024**
(21) Application number: 22915081.8
(22) Date of filing: 29.12.2022
(51) Int. Cl.: G06F 3/0481, G06F 3/0484

(54) **IMAGE SHARING METHOD AND ELECTRONIC DEVICE**

(30) Priority: 31.12.2021 CN 202111674211
(71) Applicant: Petal Cloud Technology Co., Ltd., Dongguan, Guangdong 523799 (CN)
(72) Inventor: TANG, Wei, Dongguan, Guangdong 523799 (CN); WANG, Fangshan, Dongguan, Guangdong 523799 (CN); XIAO, Mengqi, Dongguan, Guangdong 523799 (CN); LIU, Xiaobo, Dongguan, Guangdong 523799 (CN)
(74) Representative: Goddar, Heinz J.
(86) International application number: PCT/CN2022/143494
(87) International publication number: WO 2023/125832

(57) **Abstract**

This application provides a picture sharing method. According to the method, when sharing a picture with another user or device, an intelligent terminal like a mobile phone or a tablet computer may generate one or more photo bubbles based on image content in the to-be-shared picture. The bubbles carry information associated with the image content of the picture. The associated information is, for example, an introduction to the image content, another picture or video or news information that includes the image content, source information of the picture, a travel scheme generated based on a geographical location in the picture and a location in which an electronic device is located, and picture-related information entered by a user. According to method, the user who initiates the sharing and the user who receives the sharing may obtain and learn more information related to the image content of the to-be-shared picture based on the bubbles. In addition, the receiver may modify the content in the bubbles shared by the sender, and share the picture again.

## Description

This application claims priority to Chinese Patent Application No. 20211 167421 1. X, filed with the China National Intellectual Property Administration on December 31, 2021 and entitled "PICTURE SHARING METHOD AND ELECTRONIC DEVICE", which is incorporated herein by reference in its entirety.

### TECHNICAL FIELD

This application relates to the terminal field, and in particular, to a picture sharing method and an electronic device.

### BACKGROUND

Picture sharing is one of operations that a user of a terminal often uses. The user of the terminal often takes photos and shares the photos with others. Alternatively, after downloading a picture, the user of the terminal often shares the picture with another user.

During sharing, the user usually edits the to-be-shared photo or picture (referred to as a picture below), adds some comments, and then shares an edited picture with another user. The shared user may receive the picture with the comments. However, the shared user cannot receive the original picture and re-edit the original picture. In addition, the content added to the picture after the user edits the picture is single.

### SUMMARY

This application provides a picture sharing method. According to the method, an electronic device like a mobile phone may create a bubble that displays information associated with image content of a to-be-shared picture, and share, in a process of sharing the picture, the associated information displayed in the bubble. A device that receives the sharing may correspondingly display the bubble in a process of displaying the picture, so that a user is provided with more information associated with the image content and an editing operation for the picture.

According to a first aspect, an embodiment of this application provides a picture sharing method, where the method is applied to a first electronic device, and the method includes: The first electronic device displays a first interface, where a first picture is displayed on the first interface; the first electronic device detects a first user operation; the first electronic device displays a second interface in response to the first user operation, where the second interface includes the first picture and a first control, the first control includes first content, and the first content is associated with a first object in the first picture; the first electronic device detects a second user operation; and the first electronic device sends a first message to a second electronic device in response to the second user operation, where the first message includes the first picture and the first content, the first message is used by the second electronic device to display the first picture and a second control, and the second control includes the first content.

According to the method provided in the first aspect, an electronic device that initiates sharing may create, in a to-be-shared picture, a bubble carrying information associated with image content of the to-be-shared picture. When sharing the to-be-shared picture, the first electronic device may share the bubble with an electronic device that receives the sharing. In this way, the second electronic device that receives the sharing may obtain more information about the image content of the picture based on the bubble. Further, based on an operation, for example, editing the bubble or deleting the bubble, the electronic device that receives the sharing may modify or delete an editing operation performed on the first picture by the electronic device that initiates the sharing.

With reference to embodiments provided in the first aspect, in some embodiments, before the first electronic device displays the second interface, where the second interface includes the first picture and the first control, the method further includes: displaying one or more options. That the first electronic device displays a second interface, where the second interface includes the first picture and a first control includes: The first electronic device detects a fourth user operation performed on a first option, where the first option is one of the one or more options; and the first electronic device displays the first control in the first picture in response to the fourth user operation, where the first option is used to determine a type of the first control.

According to the method provided in the foregoing embodiments, the electronic device that initiates the sharing may support creation of a plurality of types of bubbles. Different types of bubbles display different information. In a process of creating a bubble, a user may select a type of the to-be-created bubble, to obtain associated information that corresponds to the type and that matches the image content.

With reference to embodiments provided in the first aspect, in some embodiments, the fourth user operation includes an operation of selecting the first option and a second option, the second option is one of the one or more options, and the method further includes: The second user interface further includes a third control, the third control includes third content, the third content is associated with the first object in the first picture, and the third content is different from the first content.

According to the method provided in the foregoing embodiments, the electronic device that initiates the sharing may support creation of a plurality of types of bubbles. In addition, the electronic device that initiates the sharing further supports simultaneous creation of a plurality of different types of bubbles. In this way, the user may simultaneously obtain a plurality of different types of information associated with the image content.

With reference to embodiments provided in the first aspect, in some embodiments, before the first electronic device detects the second user operation, the method further includes: The first electronic device detects a fifth user operation performed on the first control; and the first electronic device displays fourth content in response to the fifth user operation, where the fourth content is associated with the first content.

According to the method provided in the foregoing embodiments, the user may open a page based on the bubble displayed in the picture. Information displayed on the page includes information displayed in the original bubble, and further includes more information that cannot be displayed in the original bubble, so that the user can quickly and conveniently obtain, based on the bubble, more information associated with the image content.

With reference to embodiments provided in the first aspect, in some embodiments, the first message includes a first web address, and the fourth content is content included in a page corresponding to the first web address.

According to the method provided in the foregoing embodiments, the user may open a web page based on the bubble displayed in the picture. The user may obtain, based on content displayed on the web page, more information associated with the image content. In addition, the electronic device that receives the sharing may receive the website. The electronic device that receives the sharing may also quickly and conveniently obtain, based on the web address included in the bubble, more information associated with the image content.

With reference to embodiments provided in the first aspect, in some embodiments, the method further includes: The first electronic device detects a seventh user operation performed on the first control; and the first electronic device modifies, in response to the seventh user operation, the first content included in the first control to sixth content. After the first electronic device modifies the first content included in the second control to the sixth content, the sixth content may be used to replace the first content displayed in the second control of the second electronic device.

According to the method provided in the foregoing embodiments, after the bubble is shared, the user who initiates the sharing may modify content in the bubble. In addition, in a scenario of synchronizing bubble content, the electronic device that initiates the sharing may synchronize content included in the modified bubble to the electronic device that receives the sharing.

With reference to embodiments provided in the first aspect, in some embodiments, the one or more options include one or more of the following: an encyclopedia, a picture, a video, information, a source, and a recommendation.

With reference to embodiments provided in the first aspect, in some embodiments, if the first option is an encyclopedia, the fourth content includes an encyclopedia introduction of the first object; or if the first option is a picture, the fourth content includes a picture whose image content is the first object; or if the first option is a video, the fourth content includes a video whose video content is the first object; or if the first option is information, the fourth content includes news information that introduces the first object; or if the first option is a source, the first content includes a second web address, the second web address is a web address used by the first electronic device to obtain the first picture, and the fourth content is content included in a web page indicated by the second web address.

According to the method provided in the foregoing embodiments, the user may choose to create a bubble of a type of an encyclopedia, a picture, a video, information, a source, or a recommendation. The bubble may display associated information such as an encyclopedia introduction, a picture, a video, news information, a picture source, and a travel recommendation corresponding to the image content of the to-be-shared picture.

With reference to embodiments provided in the first aspect, in some embodiments, if the first option is a source, the first content includes a second web address, the second web address is a web address provided by shopping software, and the first picture is an image included in a page indicated by the second web address.

According to the method provided in the foregoing embodiments, in a process of storing a picture from the shopping software and sharing the picture, the user may create a bubble carrying a web address for obtaining the picture. In this way, the user and the user who receives the sharing can quickly obtain, based on the web address included in the bubble, a page for purchasing a displayed commodity in the picture, to quickly obtain commodity information.

With reference to embodiments provided in the first aspect, in some embodiments, the first control includes travel information corresponding to a first location and a second location. The first location is related to the first object, the second location is related to the first electronic device, and the first content includes the first location. The second control includes travel information corresponding to a third location and the first location, and the third location is related to the second electronic device.

According to the method provided in the foregoing embodiments, the user can create a travel recommendation bubble. The travel recommendation bubble may display a travel scheme between a current location of the user and a location indicated in the picture.

With reference to embodiments provided in the first aspect, in some embodiments, the travel information includes at least one of the following travel options: a train, a flight, or a bus; the fifth user operation is an operation performed on a second option in the at least one travel option; and the fourth content includes a timetable and a ticket price that are of the second option and that are between the third location and the first location, and the timetable includes one or more of a shift number, a departure location, a destination, a departure time, and an arrival time.

According to the method provided in the foregoing embodiments the travel recommendation bubble may display the travel scheme between the current location of the user and the location indicated in the picture, including travel directions based on different vehicles, such as a train, a flight, and a bus. Further, the user may further correspondingly obtain information such as tickets and prices of the foregoing different vehicles.

With reference to embodiments provided in the first aspect, in some embodiments, the first user operation is an operation of touching and holding the first picture; or the first user operation is an operation of tapping a fourth control on the first interface.

According to a second aspect, an embodiment of this application provides a picture sharing method, where the method is applied to a second electronic device, and the method includes: The second electronic device receives a first message sent by a first electronic device, where the first message includes a first picture and first content, and the first content is associated with a first object in the first picture; and the second electronic device displays a third interface based on the first message, where the first picture and a second control are displayed on the third interface, and the second control includes the first content.

According to the method provided in the second aspect, an electronic device that initiates the sharing may create, in a to-be-shared picture, a bubble carrying information associated with image content of the to-be-shared picture. When sharing the to-be-shared picture, the first electronic device may share the bubble with an electronic device that receives the sharing. In this way, the second electronic device that receives the sharing may obtain more information about the image content of the picture based on the bubble. Further, based on an operation, for example, editing the bubble or deleting the bubble, the electronic device that receives the sharing may modify or delete an editing operation performed on the first picture by the electronic device that initiates the sharing.

With reference to embodiments provided in the second aspect, in some embodiments, the method further includes: The second electronic device detects a third user operation performed on the second control; and the second electronic device displays second content in response to the third user operation, where the second content is associated with the first content.

According to the method provided in the foregoing embodiments, a user who receives the sharing may obtain, based on the bubble displayed on the second electronic device, information associated with the image content in the picture. When content displayed in the bubble is limited, further, the user may click the bubble to obtain more associated information.

With reference to embodiments provided in the second aspect, in some embodiments, the first message further includes third content, the third interface further includes a third control, the third control includes the third content, the third content is associated with the first object in the first picture, and the third content is different from the first content in the second control.

According to the method provided in the foregoing embodiments, the electronic device that receives the sharing may receive a plurality of different types of bubbles. In this way, the user may simultaneously obtain a plurality of different types of information associated with the image content.

With reference to embodiments provided in the second aspect, in some embodiments, the first message includes a first web address, and the second content includes page content corresponding to the first web address.

According to the method provided in the foregoing embodiments, the bubble may include a web page. The electronic device that receives the sharing may receive the website. After the operation of clicking the bubble is detected, the foregoing web address may be used to display more associated information. Therefore, the user who receives the sharing may also click the bubble to obtain more associated information.

With reference to embodiments provided in the second aspect, in some embodiments, the method further includes: The second electronic device detects a sixth user operation performed on the second control; and the second electronic device modifies, in response to the sixth user operation, the first content included in the second control to fifth content. After the second electronic device modifies the first content included in the second control to the fifth content, the fifth content may be used to replace the first content displayed in the first control of the first electronic device.

According to the method provided in the foregoing embodiments, after a bubble is shared, the user who receives the sharing may modify content in the bubble. In addition, in a scenario of synchronizing bubble content, the electronic device that receives the sharing may synchronize content included in the modified bubble to an electronic device that initiates the sharing.

With reference to embodiments provided in the second aspect, in some embodiments, a type of the second content includes one or more of the following: an encyclopedia, a picture, a video, information, a source, and a recommendation.

With reference to embodiments provided in the second aspect, in some embodiments, if the type is an encyclopedia, the second content includes an encyclopedia introduction of the first object; or if the type is a picture, the second content includes a picture whose image content is the first object; or if the type is a video, the second content includes a video whose video content is the first object; or if the type is information, the second content includes news information that introduces the first object; or if the type is a source, the first content includes a second web address, the second web address is a web address used by the first electronic device to obtain the first picture, and the second content is content included in a web page indicated by the second web address.

According to the method provided in the foregoing embodiments, the user who receives the sharing may receive a bubble of a type of an encyclopedia, a picture, a video, information, a source, or a recommendation, and then obtain associated information such as an encyclopedia introduction, a picture, a video, news information, a picture source, and a travel recommendation corresponding to the image content of the to-be-shared picture.

With reference to embodiments provided in the second aspect, in some embodiments, if the type is a source, the first content includes a second web address, the second web address is a web address provided by shopping software, and the first picture is an image included in a page indicated by the second web address.

According to the method provided in the foregoing embodiments, in a process of storing a picture from the shopping software and sharing the picture, the user may create a bubble carrying a web address for obtaining the picture. In this way, the user and the user who receives the sharing can quickly obtain, based on the web address included in the bubble, a page for displaying a commodity in the purchase picture, to quickly obtain commodity information.

With reference to embodiments provided in the second aspect, in some embodiments, the second control includes travel information corresponding to a first location and a third location, where the first location is related to the first object, and the third location is related to the second electronic device.

According to the method provided in the foregoing embodiments, the user who receives the sharing may create, based on an environment in which the user is located, a travel recommendation bubble that adapts to the current environment. The travel recommendation bubble may display a travel scheme between a current location of the user and a location indicated in the picture.

With reference to embodiments provided in the second aspect, in some embodiments, the first message includes first location information.

According to the method provided in the foregoing embodiments, when generating a travel bubble, the electronic device that receives the sharing may no longer need to recognize a geographical location indicated by the image content in the image, so that computing resources are saved.

With reference to embodiments provided in the second aspect, in some embodiments, the travel information includes at least one of the following travel options: a train, a flight, or a bus; the third user operation is an operation performed on a second option in the at least one travel option; and the second content includes a timetable and a ticket price that are of the second option and that are between the third location and the first location, and the timetable includes one or more of a shift number, a departure location, a destination, a departure time, and an arrival time.

According to the method provided in the foregoing embodiments, the travel recommendation bubble may display the travel scheme between the current location of the user and the location indicated in the picture, including travel directions based on different vehicles, such as a train, a flight, and a bus. Further, the user may further correspondingly obtain information such as tickets and prices of the foregoing different vehicles.

According to a third aspect, a picture sharing method is provided, and the method includes: The first electronic device displays a first interface, where a first picture is displayed on the first interface; the first electronic device detects a first user operation; the first electronic device displays a second interface in response to the first user operation, where the second interface includes the first picture and a first control, the first control includes first content, and the first content is associated with a first object in the first picture; the first electronic device detects a second user operation; the first electronic device sends a first message to a second electronic device in response to the second user operation, where the first message includes the first content; and the second electronic device displays a third interface, where the first picture and a second control are displayed on the third interface, and the second control includes the first content.

With reference to embodiments provided in the third aspect, in some embodiments, the method further includes: The second electronic device detects a third user operation performed on the second control; and the second electronic device displays second content in response to the third user operation, where the second content is associated with the first content.

With reference to embodiments provided in the third aspect, in some embodiments, before the first electronic device displays the second interface, where the second interface includes the first picture and the first control, the method further includes: displaying one or more options. That the first electronic device displays a second interface, where the second interface includes the first picture and a first control includes: The first electronic device detects a fourth user operation performed on a first option, where the first option is one of the one or more options; and the first electronic device displays the first control in the first picture in response to the fourth user operation, where the first option is used to determine a type of the first control.

With reference to embodiments provided in the third aspect, in some embodiments, the fourth user operation includes an operation of selecting the first option and a second option, the second option is one of the one or more options, and the method further includes: The second user interface further includes a third control, the third control includes third content, the third content is associated with the first object in the first picture, and the third content is different from the first content.

With reference to embodiments provided in the third aspect, in some embodiments, before the first electronic device detects the second user operation, the method further includes: The first electronic device detects a fifth user operation performed on the first control; and the first electronic device displays fourth content in response to the fifth user operation, where the fourth content is associated with the first content, and the fourth content is the same as or related to the second content.

With reference to embodiments provided in the third aspect, in some embodiments, the first message includes a first web address, and the second content includes page content corresponding to the first web address.

With reference to embodiments provided in the third aspect, in some embodiments, the method further includes: The second electronic device detects a sixth user operation performed on the second control; and the second electronic device modifies, in response to the sixth user operation, the first content included in the second control to fifth content. After the second electronic device modifies the first content included in the second control to the fifth content, the fifth content may be used to replace the first content displayed in the first control of the first electronic device.

With reference to embodiments provided in the third aspect, in some embodiments, the method further includes: The first electronic device detects a seventh user operation performed on the first control; the first electronic device modifies, in response to the seventh user operation, the first content included in the first control to sixth content; and after the first electronic device modifies the first content included in the second control to the sixth content, the second electronic device modifies the first content included in the second control to the sixth content.

With reference to embodiments provided in the third aspect, in some embodiments, the one or more options include one or more of the following: an encyclopedia, a picture, a video, information, a source, and a recommendation.

With reference to embodiments provided in the third aspect, in some embodiments, if the first option is an encyclopedia, the second content includes an encyclopedia introduction of the first object; or if the first option is a picture, the second content includes a picture whose image content is the first object; or if the first option is a video, the second content includes a video whose video content is the first object; or if the first option is information, the second content includes news information that introduces the first object; or if the first option is a source, the first content includes a second web address, the second web address is a web address used by the first electronic device to obtain the first picture, and the second content is content included in a web page indicated by the second web address.

With reference to embodiments provided in the third aspect, in some embodiments, if the first option is a source, the first content includes a second web address, the second web address is a web address provided by shopping software, and the first picture is an image included in a page indicated by the second web address.

With reference to embodiments provided in the third aspect, in some embodiments, the first control includes travel information corresponding to a first location and a second location. The first location is related to the first object, the second location is related to the first electronic device, and the first content includes the first location. The second control includes travel information corresponding to a third location and the first location, and the third location is related to the second electronic device.

With reference to embodiments provided in the third aspect, in some embodiments, the first message includes first location information.

With reference to embodiments provided in the third aspect, in some embodiments, the travel information includes at least one of the following travel options: a train, a flight, or a bus; the third user operation is an operation performed on a third option in the at least one travel option; and the second content includes a timetable and a ticket price that are of the second option and that are between the third location and the first location, and the timetable includes one or more of a shift number, a departure location, a destination, a departure time, and an arrival time.

With reference to embodiments provided in the third aspect, in some embodiments, the first user operation is an operation of touching and holding the first picture; or the first user operation is an operation of tapping a fourth control on the first interface.

According to a fourth aspect, this application provides an electronic device, where the electronic device includes one or more processors and one or more memories. The one or more memories are coupled to the one or more processors, the one or more memories are configured to store computer program code, and the computer program code includes computer instructions. When the one or more processors execute the computer instructions, the electronic device is enabled to perform the method according to any one of the first aspect and the possible implementations of the first aspect, or perform the method according to any one of the second aspect and the possible implementations of the second aspect.

According to a fifth aspect, this application provides a computer-readable storage medium, including instructions. When the instructions are run on an electronic device, the electronic device is enabled to perform the method according to any one of the first aspect and the possible implementations of the first aspect, or perform the method according to any one of the second aspect and the possible implementations of the second aspect.

According to a sixth aspect, this application provides a computer program product including instructions. When the computer program product runs on an electronic device, the electronic device is enabled to perform the method according to any one of the first aspect and the possible implementations of the first aspect, or perform the method according to any one of the second aspect and the possible implementations of the second aspect.

It may be understood that the electronic device provided in the fourth aspect, the computer storage medium provided in the fifth aspect, and the computer program product provided in the sixth aspect are all configured to perform the method provided in this application. Therefore, for beneficial effects that can be achieved by the electronic device, the computer storage medium, and the computer program product, refer to the beneficial effects in the corresponding method. Details are not described herein again.

### BRIEF DESCRIPTION OF DRAWINGS

FIG. 1A is a system architecture for long-range picture sharing according to an embodiment of this application;
FIG. 1B is a system architecture for short-range picture sharing according to an embodiment of this application;
FIG. 2A to FIG. 2I are a group of user interfaces of picture sharing according to an embodiment of this application;
FIG. 3A to FIG. 3E are a group of user interfaces of picture sharing according to an embodiment of this application;
FIG. 4A to FIG. 4H are a group of user interfaces of picture sharing according to an embodiment of this application;
FIG. 5A to FIG. 5I are a group of user interfaces of picture sharing according to an embodiment of this application;
FIG. 6A to FIG. 6C are a group of user interfaces of picture sharing according to an embodiment of this application;
FIG. 7A to FIG. 7I are a group of user interfaces of picture sharing according to an embodiment of this application;
FIG. 8A is a software architecture of long-range picture sharing according to an embodiment of this application;
FIG. 8B is a software architecture of short-range picture sharing according to an embodiment of this application;
FIG. 9A is a flowchart of creating a bubble according to an embodiment of this application;
FIG. 9B is a schematic diagram of recognizing image content in a picture according to an embodiment of this application;
FIG. 9C is a flowchart of sharing a picture and a bubble in the bubble according to an embodiment of this application;
FIG. 9D is another flowchart of sharing a picture and a bubble in the bubble according to an embodiment of this application;
FIG. 10 is a flowchart of synchronizing bubble content after sharing according to an embodiment of this application;
FIG. 11 is a flowchart of picture sharing according to an embodiment of this application; and
FIG. 12 is a schematic diagram of a hardware structure of an electronic device according to an embodiment of this application.

### DESCRIPTION OF EMBODIMENTS

Terms used in the following embodiments of this application are merely intended to describe specific embodiments, but are not intended to limit this application.

Picture sharing is one of operations that a user of a terminal often uses. After taking a photo or downloading a picture, the user of the terminal often shares the photo or picture (referred to as a picture) with another user. Before sharing, the user or a platform that provides a sharing capability may add some auxiliary information to a to-be-shared picture, to transmit more information to the user who receives the sharing. The following first describes two existing manners of adding auxiliary information to a to-be-shared picture.

### 1. Automatically generate a picture watermark.

When a user uses a mobile phone or another terminal device that has a shooting capability (referred to as a first electronic device) to shoot a photo, the first electronic device may add a label, for example, a picture watermark, to the shot picture, to recognize source information of the picture. The user may be referred to as a first user. The first user is a user using the first electronic device.

For example, after the first user shoots a picture, the first electronic device may add a watermark of "2021.11.01" to the picture, to reflect a shooting time of the picture. In this way, after the first user shares the picture, a person who receives the sharing may know the shooting time of the picture from the watermark.

In some other embodiments, in a process in which the first user shares the picture, a platform that provides a sharing service may alternatively add some auxiliary information used for recognizing the to-be-shared picture. For example, when the photo is shared to a public sharing platform like a blog (Blog), the platform may automatically add, to each to-be-shared picture, a watermark used to recognize a publisher, for example, "@user X", to recognize that the shared picture is from a user X.

### 2. Add picture and text content specified by a first user.

Before the first user sends a to-be-shared picture to a shared person, the first user may add a mark to the to-be-shared picture, to record specific indication information added by the first user for the picture. The mark includes but is not limited to handwriting, geometry, a text, a sticker, and the like. For example, before the first user shares a picture including a person X with a second user, the first user may use handwriting to circle the person X in the picture, and add a text "Zhang San" near the handwriting to indicate the second user that the person X in the picture is Zhang San.

The foregoing two methods respectively show that in a picture sharing scenario, the first electronic device, the platform that provides the sharing service, and the first user may add auxiliary information to a to-be-shared picture, to provide more information related to the shared picture.

In the picture sharing method for automatically generating a picture watermark, the first electronic device and/or the platform that provides the sharing service may automatically generate a label that matches each picture, to indicate a source of the picture. However, in the method, content of the label added by the first electronic device and/or the platform that provides the sharing service to the to-be-shared picture is simple. Therefore, the shared first user can obtain little auxiliary information other than the content displayed in the picture.

In the picture sharing method for adding picture and text content specified by the first user, the first electronic device and/or the platform that provides the sharing service may add specific indication information to the shared picture based on an editing operation performed by the first user. However, in the method, the picture received by the second user who receives the sharing is a picture carrying the indication information, and the indication information depends on an ideographic representation of the first user. Therefore, the information received by the second user is also limited. In addition, the second user who receives the sharing can only modify the picture based on the picture, and cannot modify the editing operation of the first user.

For example, when the second user determines that the person X marked by the first user is not Zhang San, the second user cannot undo the handwriting and the text in the picture and then mark the correct person. Therefore, the picture edited by the second user further includes error information originally marked by the first user.

**To enable a user who receives the sharing to obtain both a picture and auxiliary information carried in the picture, and re-edit the auxiliary information, embodiments of this application provide a picture sharing method.**

According to the picture sharing method provided in embodiments of this application, a first electronic device may add, to a to-be-shared picture based on a user operation, a bubble carrying information related to image content of the to-be-shared picture.

The bubble is a control that can be used to carry information. The control may be a control of a <TextView> or <ImageView> type, and may be used to display information of a text or picture type. A text link mode (autolink) may be set in the <TextView> and the <ImageView> to set a web page link. In this way, when detecting an operation performed on the control, the first electronic device may display a control that is of the <WebView> type and that is used to display a web page. The bubble may alternatively be a control set including a group of controls. For example, the bubble may include <TextView> and <ImageView> controls. In this way, the bubble may display a text and a picture simultaneously. In addition, the bubble may also include a control of a <EditText> type for receiving a user input. The information carried by the bubble is information related to the image content of the to-be-shared picture.

The first electronic device may represent a device (an initiating device) that initiates the sharing. After adding the bubble, the first electronic device may send the to-be-shared picture and the added bubble together to a second electronic device. The second electronic device may represent a device (a receiving device) that receives the sharing. Therefore, the second electronic device may not only receive the picture shared by the first electronic device, but also receive the bubble carrying the information related to the image content included in the picture. In this way, the user can obtain more information related to the image from the received bubble. The user includes a user of the first electronic device and a user of the second electronic device.

Further, the second electronic device may edit the received picture and the bubble based on an operation of the user, and then share an edited picture and bubble with another electronic device. The another electronic device herein includes the first electronic device. In other words, the second electronic device may share the edited picture and bubble with the first electronic device, or may share the edited picture and bubble with an electronic device other than the first electronic device.

It may be understood that, when the second electronic device shares the received picture and bubble with the another electronic device, the second electronic device is the first electronic device, namely, the initiating device. For an action performed by the second electronic device and a service provided by the second electronic device for the user, refer to the foregoing initiating device. Details are not described herein again. Correspondingly, when the second electronic device shares the received picture and bubble with the first electronic device, the first electronic device serves as a receiving device. For an action performed by the first electronic device and a service provided by the first electronic device for the user, refer to the second electronic device in the foregoing sharing process. Details are not described herein again.

The picture sharing method may be applied to a terminal device like a mobile phone or a tablet computer. In other words, the first electronic device and the second electronic device each may be a terminal device like a mobile phone or a tablet computer. Not limited to a mobile phone or a tablet computer, the first electronic device and the second electronic device each may alternatively be a desktop computer, a laptop computer, a handheld computer, a notebook computer, an ultra-mobile personal computer (ultra-mobile personal computer, UMPC), a netbook, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

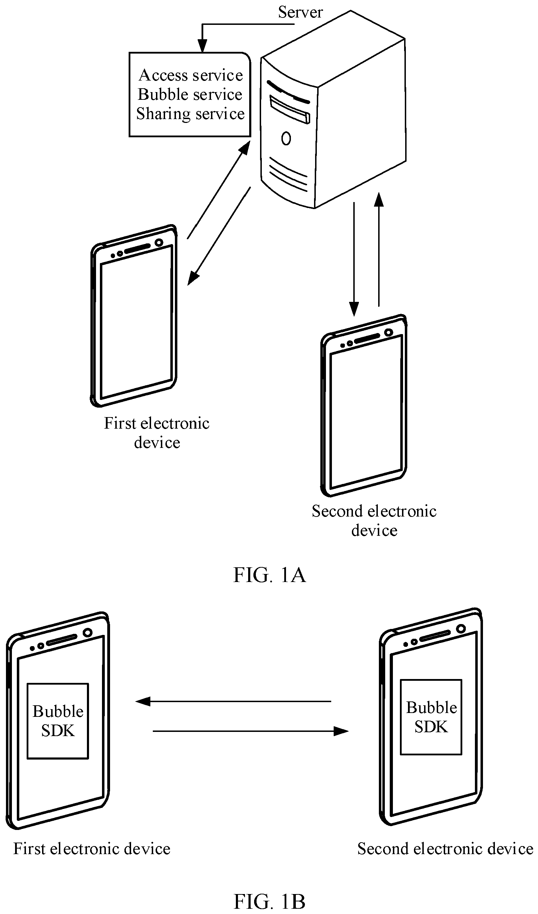

**First,** **FIG. 1A and FIG. 1B** **are examples of system architectures for implementing the picture sharing method provided in embodiments of this application.**

Network-based sharing can be divided into long-range sharing and short-range sharing. The long-range sharing generally refers to a process in which when a device (an initiating device) that initiates the sharing and a device (a receiving device) that receives the sharing are far away from each other, data is exchanged between the initiating device and the receiving device through forwarding of a server and a plurality of networks. The short-range sharing refers to a process in which an initiating device directly establishes a communication connection with a receiving device to exchange data.

In a long-range sharing scenario, for a system architecture for implementing the picture sharing method provided in embodiments of this application, refer to FIG. 1A. In a short-range sharing scenario, for a system architecture for implementing the picture sharing method provided in embodiments of this application, refer to FIG. 1B.

### (1) System architecture of long-range sharing shown in FIG. 1A:

As shown in FIG. 1A, devices related to long-range sharing include a first electronic device, a second electronic device, and a server. The first electronic device and the second electronic device are terminal devices. Based on the picture sharing method provided in embodiments of this application, the terminal devices serving as the first electronic device and the second electronic device further need to meet a requirement of having a display capability.

The terminal device generally supports a plurality of applications, such as a camera application, an image management application, an image processing application, a word processing application, a phone application, an email application, an instant messaging application, a network communication application, a media play application, a geographical location positioning application, and a time management application.

The server may be a Linux server, a Windows server, or a server device that can be connected to a plurality of devices simultaneously, and may alternatively be a server cluster including a plurality of regions, equipment rooms, and servers. The server generally supports a message storage and distribution program, a multi-user access management program, a large-scale data storage program, a large-scale data processing program, a data redundancy backup program, and the like.

The first electronic device and the second electronic device separately establish a communication connection to the server. The communication connection includes a wireless communication connection and a wired communication connection. The first electronic device or the second electronic device may send information to the server and obtain information from the server based on a communication network between the server and the first electronic device or the second electronic device.

The wired communication connection is, for example, a wired network established based on a device like a router or a switch. The wireless communication network includes but is not limited to a mobile network that supports 2G, 3G, 4G, 5G, and a subsequent standard protocol. The wireless communication network further includes a network constructed by using a high-fidelity wireless communication (wireless fidelity, Wi-Fi) connection. The first electronic device and the second electronic device may access a wired network based on the Wi-Fi network.

Based on the communication connection established between the first electronic device (the initiating device) and the server and the communication connection established between the second electronic device (the receiving device) and the server, the initiating device may request a service from the server, to implement a function of adding a bubble to a picture, and send the picture carrying the bubble and the bubble together to the receiving device.

Specifically, the server may provide an access service, a bubble service, and a sharing service for the first electronic device and the second electronic device.

The access service refers to a service that is provided for the first electronic device and the second electronic device to access the server. It may be understood that the access service is optional. When there are a large quantity of first electronic devices and second electronic devices, and the first electronic devices and the second electronic devices are far away from the server, a server (an access server) that receives the request of the first electronic device and the second electronic device may not be a server that provides the bubble service. In this case, the access server needs to forward the received request for obtaining the bubble service to the server that actually provides the bubble service. By contrast, when there are a small quantity of first electronic devices and second electronic devices, and the first electronic devices and the second electronic devices are close to the server, the server may directly provide the bubble service for the first electronic device and the second electronic device without access of another server.

The bubble service refers to a service that is of generating a bubble and editing a bubble and that is provided for the first electronic device and the second electronic device. The generating a bubble is specifically recognizing image content of a to-be-shared picture selected by a user, and generating a bubble that includes information related to the image content. The editing a bubble includes adding a bubble, deleting a bubble, modifying information included in a bubble, changing a location of a bubble, and the like.

The sharing service refers to a service that is of sharing a picture carrying a bubble or receiving a picture carrying a bubble and that is provided for the first electronic device and the second electronic device.

### (2) System architecture of short-range sharing shown in FIG. 1B:

As shown in FIG. 1B, devices related to short-range sharing include a first electronic device and a second electronic device. A wireless communication connection may be established between the first electronic device and the second electronic device. The wireless communication connection is, for example, a short-range wireless connection like a Wi-Fi connection, a Bluetooth connection, an infrared connection, an NFC connection, or a ZigBee connection.

A bubble software development kit (Software Development Kit, SDK) is preset in the first electronic device and the second electronic device. The bubble SDK may provide a bubble service and a sharing service for an electronic device. For the bubble service and the sharing service, refer to the descriptions in FIG. 1A. Details are not described herein again.

After a picture bubble is generated by using the bubble SDK, the sharing service provided by the bubble SDK may send, based on the wireless communication connection, a to-be-shared picture and a bubble that are determined by an initiating device to a receiving device, so that the receiving device can obtain the picture shared by the initiating device and the bubble carrying more information related to picture content in the picture.

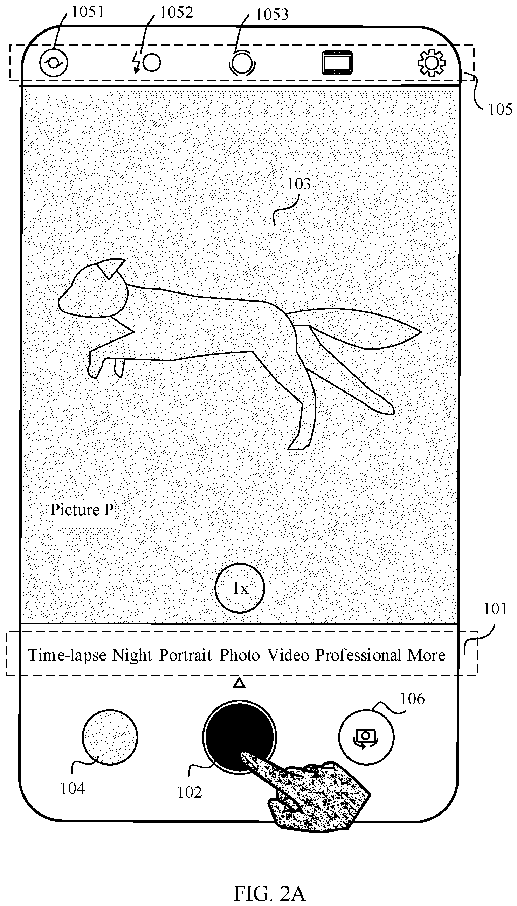

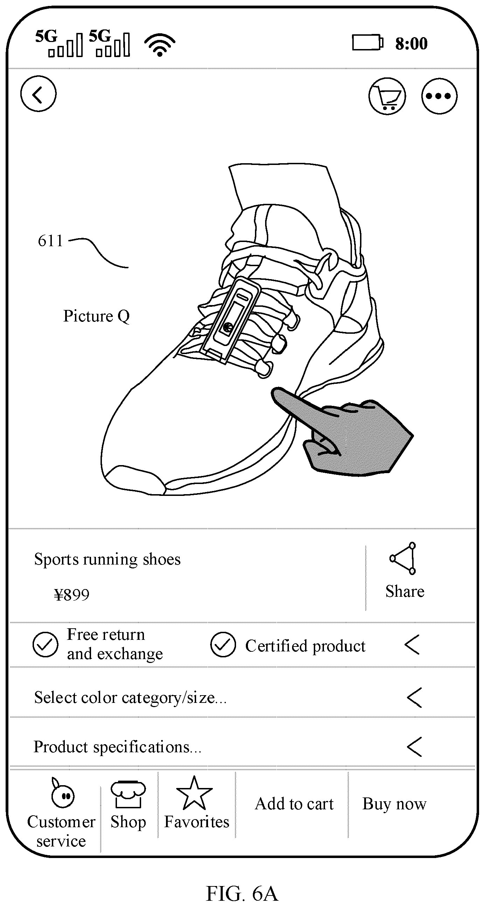

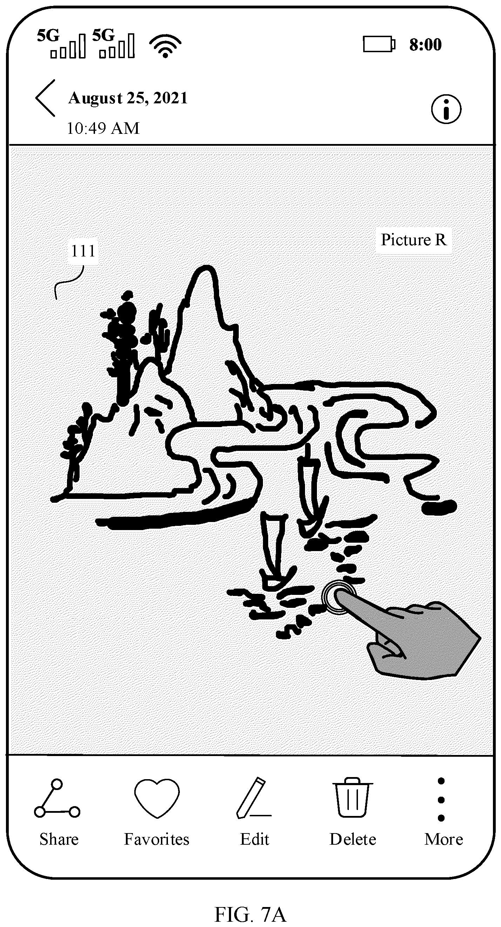

**In the following,** **FIG. 2A to FIG. 2I****,** **FIG. 3A to FIG. 3E****,** **FIG. 4A to FIG. 4H****,** **FIG. 5A to FIG. 5I****,** **FIG. 6A to FIG. 6C****, and** **FIG. 7A to FIG. 7I** **show examples of user interfaces used by the first electronic device to implement the picture sharing method provided in embodiments of this application.**
1. The first electronic device recognizes image content in a photo, and generates, based on the image content in the photo, a bubble that matches the image content. Refer to the user interfaces shown in FIG. 2A to FIG. 2I, FIG. 3A to FIG. 3E, FIG. 4A to FIG. 4H, and FIG. 5A to FIG. 5I.
2. The first electronic device obtains information carried in a downloaded picture, and generates a bubble that includes the information. Refer to the user interfaces shown in FIG. 6A to FIG. 6C.
3. The first electronic device generates an interactive bubble that provides a recommendation service based on location information of the first electronic device and image content in a to-be-shared picture. Refer to the user interfaces shown in FIG. 7A to FIG. 7I.

### 1. The first electronic device recognizes image content in a photo, and generates, based on the image content in the photo, a bubble that matches the image content.

First, FIG. 2A shows an example of a user interface on which the first electronic device invokes a camera to perform shooting. The user interface includes a menu bar 101, a shooting control 102, a preview window 103, and a picture view control 104.

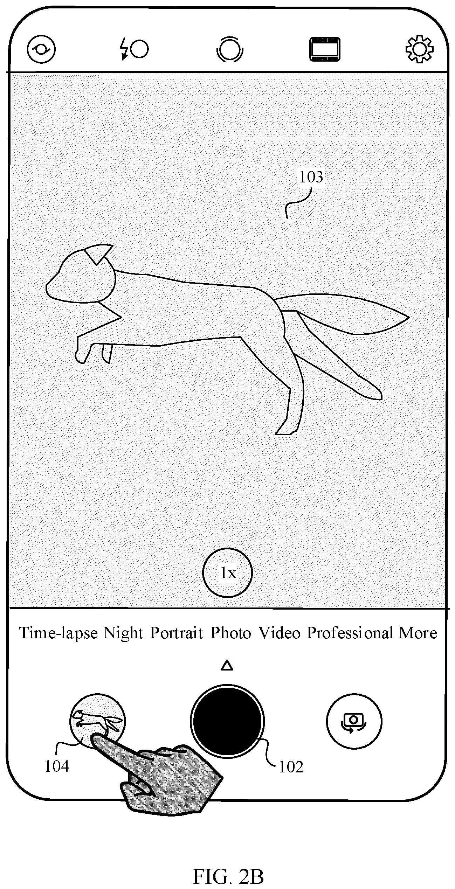

A plurality of shooting options may be displayed in the menu bar 101, such as "photo", "video", "portrait", and "night". The first electronic device may detect a user operation performed on "photo". In the "photo" mode, after detecting a user operation performed on the shooting control 102, the first electronic device may store an image displayed in the preview window 103, and generate a photo. After the photo is generated, the picture view control 104 may display a thumbnail of the photo. Refer to FIG. 2B.

The user interface shown in FIG. 2A further includes a setting bar 105 and a switching control 106.

A plurality of shooting parameter controls may be displayed in the setting bar 105. A shooting control is used to adjust a type of parameters of the camera, so that an image captured by the camera in the preview window and a display effect can be changed. For example, the setting bar 105 may display more shooting parameters such as an "aperture" 1051, a "flash" 1052, and an "automatic tracking" 1053. The "aperture" 1051 may be used to adjust an aperture size of the camera, so that picture brightness is adjusted. The "flash" 1052 may be used to turn on or off the flash for adjustment. The "automatic tracking" 1053 may be used to set a tracked object and display an image centered on the tracked object in the preview window 103.

The switching control 106 may be used to switch an in-use rear-facing camera to a front-facing camera, or switch an in-use rear-facing camera to a front-facing camera.

As shown in FIG. 2A, after detecting a user operation performed on the shooting control 102, the first electronic device may store, in response to the operation, an image displayed in the preview window 103, and generate a photo. Refer to FIG. 2B. In FIG. 2B, the first electronic device may display, on the picture view control 104, a thumbnail of the photo.

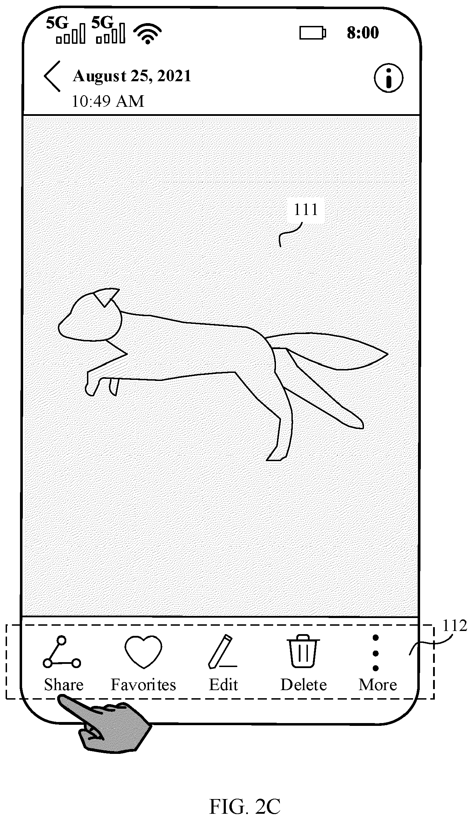

Then, the first electronic device may detect a user operation performed on the picture view control 104, and the first electronic device may display, in response to the operation, the photo corresponding to the thumbnail displayed on the picture view control 104. Refer to FIG. 2C.

As shown in FIG. 2C, a user interface used by the first electronic device to display the photo may include a window 111 and a menu bar 112.

The window 111 may be used to display the photo corresponding to the thumbnail displayed in the picture view control 104 in FIG. 2B. The menu bar 112 may display a plurality of function controls, such as "share", "favorites", "edit", and "delete". "Share" may be used to send the photo displayed in the window 111 to another electronic device. "Favorites" may be used to mark favorite photos of a first user. "Edit" may be used to modify a size and/or image content of the photo displayed in the window 111. "Delete" may be used to delete the photo displayed in the window 111.

In the picture sharing method provided in embodiments of this application, after detecting a user operation performed on the "share" control, the first electronic device may first recognize image content included in a to-be-shared picture. The to-be-shared picture is the picture displayed in the window 111 when it is detected that the first user taps the "share" control, namely, a picture that is selected by the first user and that is to be shared.

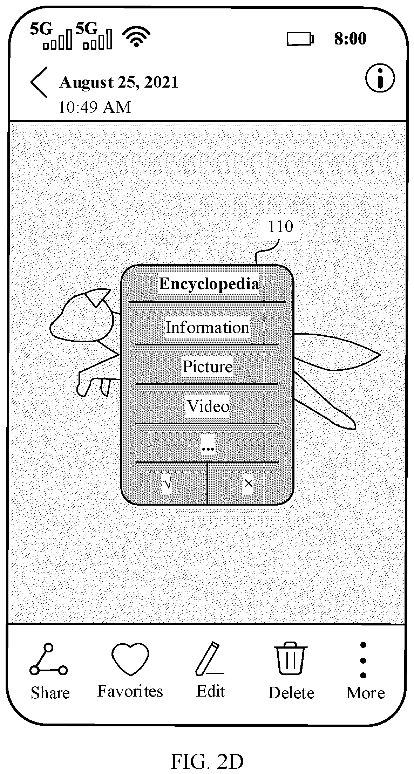

After detecting the user operation performed on the "share" control, the first electronic device may display a window 110 in response to the operation. Refer to a user interface in FIG. 2D. The window 110 may display a plurality of options, such as "encyclopedia", "information", "picture", and "video". The first electronic device may match, based on an option selected by the user, information that is of the type and that is associated with the image content of the to-be-shared picture. For example, when the user selects "encyclopedia", the first electronic device matches encyclopedia information of a dog in the picture in the window 111.

After determining the option selected by the user, the first electronic device may recognize, according to an image recognition algorithm, the image content included in the photo (denoted as a photo P) displayed in the window 111 in FIG. 2D. The picture P may be referred to as a to-be-shared picture. For example, the first electronic device may recognize, from the photo P, a "Chinese pastoral dog" included in the photo. Then, the first electronic device may match, based on the recognized image content and the information type of the "encyclopedia" selected by the user, encyclopedia information that describes the image content, and further display the encyclopedia information in a bubble form in the to-be-shared picture.

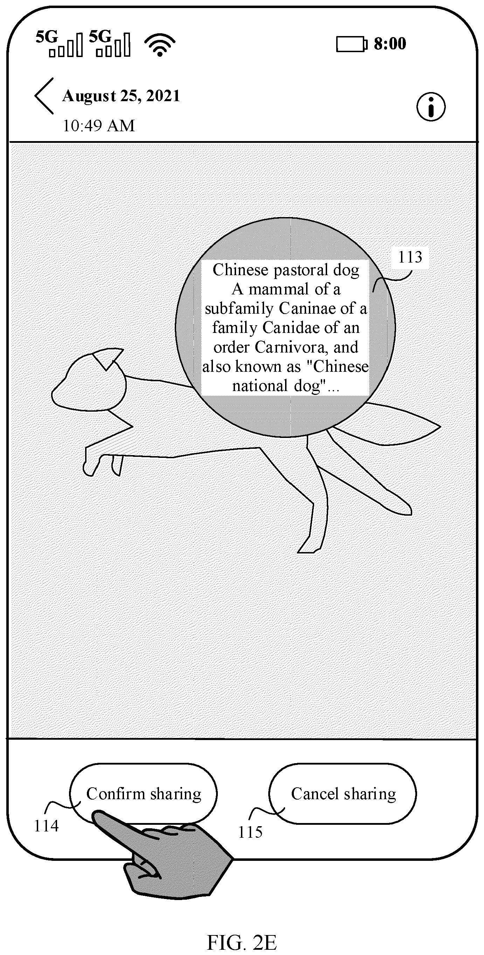

For example, when the "encyclopedia" is selected, after the "Chinese pastoral dog" is recognized from the photo P, the first electronic device may determine the encyclopedia information describing the "Chinese pastoral dog", for example, information such as a mammal of a subfamily Caninae of a family Canidae of an order Carnivora, and known as a "Chinese national dog". A specific process of matching information related to the image content based on the image content is described in detail in subsequent embodiments. This is not described herein. Then, the first electronic device may display a bubble 113 in the photo P. Refer to FIG. 2E. The recognized image content and the information describing the image content may be displayed in the bubble 113.

In this way, the user may learn about the image content in the picture based on the information displayed in the bubble 113. When the bubble is shared together, a receiver can not only receive the picture, but also obtain the bubble simultaneously. In this way, the receiver can also learn about the image content in the picture through the bubble.

In some embodiments, the first electronic device may first recognize the image content in the to-be-shared picture, and then adjust an option in the window 110 based on an attribute of the image in the picture. The process is described in detail in subsequent embodiments. This is not described herein.

A user interface shown in FIG. 2E further includes a confirm control 114 and a cancel control 115.

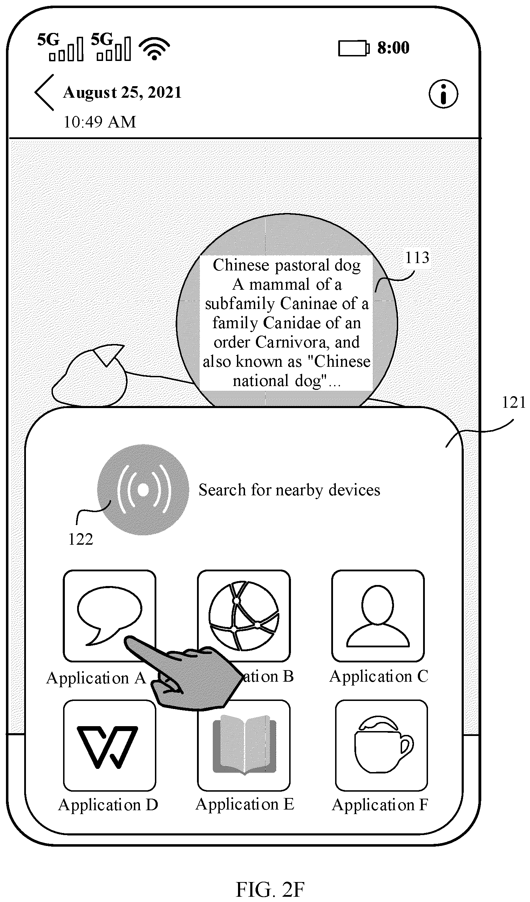

When detecting a user operation performed on the confirm control 114, the first electronic device may display one or more sharing interfaces in response to the operation. Refer to a user interface in FIG. 2F. When detecting a user operation performed on the cancel control 115, the first electronic device may display the user interface for browsing a picture shown in FIG. 2C in response to the operation.

As shown in FIG. 2F, after detecting a user operation performed on the confirm control 114, the first electronic device may display a window 121 in response to the operation. A plurality of sharing interfaces are displayed in the window 121. The sharing interfaces include two types: a device sharing interface and an application sharing interface. The device sharing interface is an interface generated based on another nearby shareable electronic device detected by the first electronic device. The device sharing interface may be configured to share the to-be-shared picture with the another nearby electronic device. The application sharing interface may be configured to send the to-be-shared picture to a specific application, and then share the to-be-shared picture to a contact in the application based on a sharing function provided by the application.

For example, the window 121 may include a search control 122 and one or more application controls (an "application A", an "application B", an "application C", an "application D", an "application E", and an "application F"). An application control corresponds to an application sharing interface. The search control 122 may be used to discover another nearby electronic device that can receive sharing. After detecting that there is another nearby electronic device that can receive sharing, the first electronic device may display a device sharing interface in the window 121. Details are described subsequently, and are not described herein.

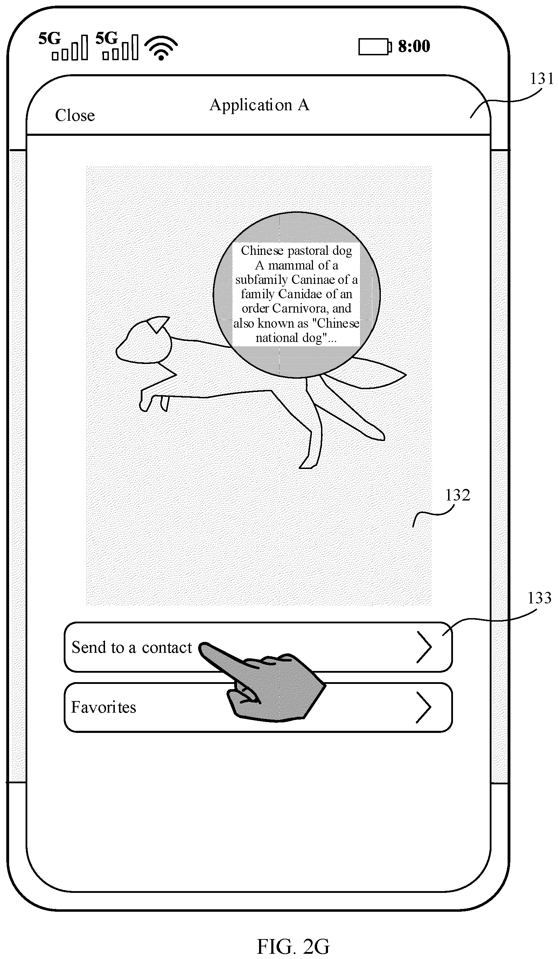

The "application A" is used as an example. After detecting a user operation performed on the "application A", the first electronic device may display, in response to the operation, a sharing window provided by the "application A". Refer to a user interface in FIG. 2G.

As shown in FIG. 2G, the user interface may include a sharing window 131 provided by the "application A". The window 131 may include a subwindow 132 and an option control 133. The subwindow 132 may be used to display the to-be-shared picture. Herein, the to-be-shared picture is a picture that includes an interactive bubble. The option control 133 may be used to read and display a contact in the "application A".

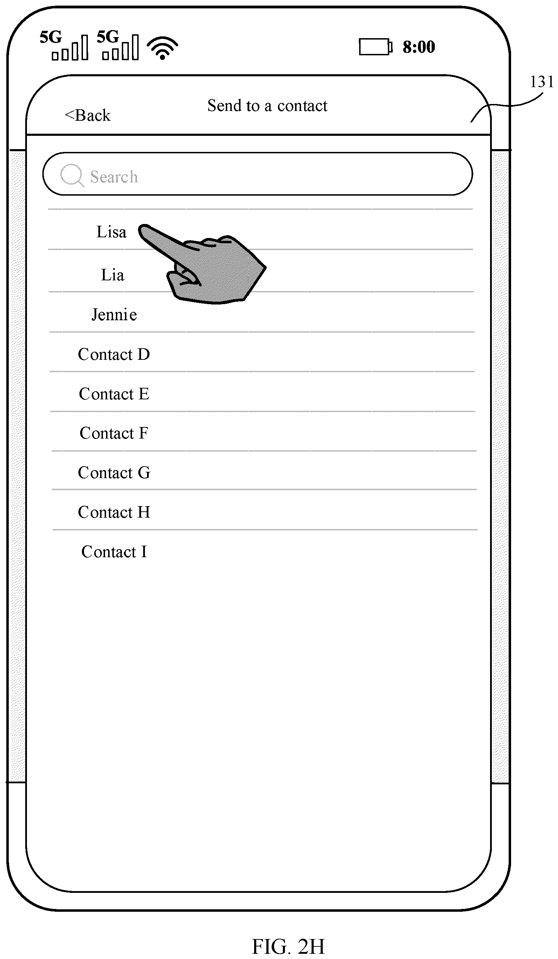

For example, after detecting a user operation performed on the option control 133, the first electronic device may display, in response to the operation, a user interface shown in FIG. 2H. On this user interface, contacts in the "application A" such as "Lisa", "Lia", "Jennie", a "contact D", and the like may be displayed in the window 131.

After detecting a user operation performed on a contact, in response to the operation, the first electronic device may send, to the contact, the to-be-shared picture carrying the interactive bubble. For example, the first electronic device may detect a user operation performed on "Lisa". In response to the operation, the first electronic device may send, to "Lisa", the photo P that carries the interactive bubble and that is displayed in the subwindow 132. A second electronic device that is logged in with an account of "Lisa" may receive the photo P and the bubble 113.

According to the image sharing method provided in embodiments of this application, the first electronic device may further share the to-be-shared picture with another electronic device in a manner of establishing a communication connection between devices.

Specifically, on the user interface shown in FIG. 2F, the first electronic device may detect a user operation performed on the search control 122, and the first electronic device may search for another nearby electronic device in response to the operation. The another nearby electronic device may be an electronic device located in a same local area network as the first electronic device, an electronic device whose distance to the first electronic device is less than a preset value, or the like. This is not limited in embodiments of this application.

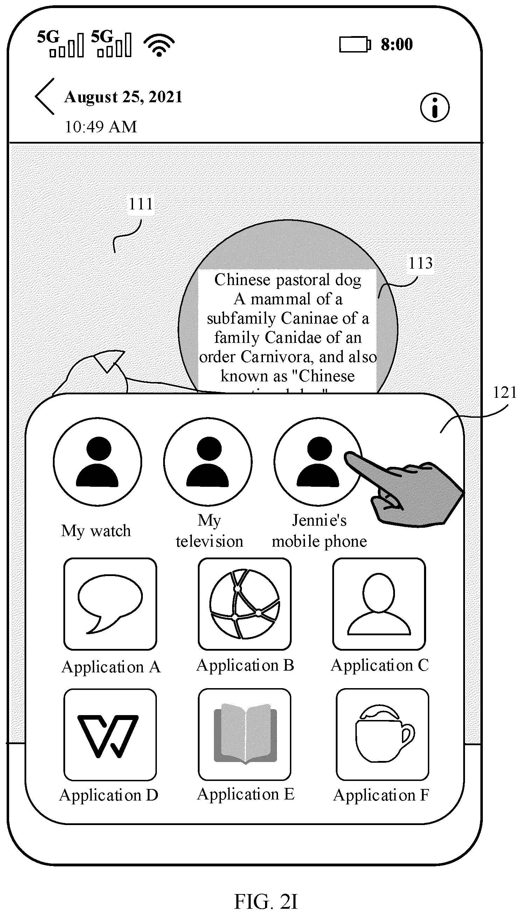

When the another nearby electronic device is found, the first electronic device may display the another electronic device in the window 121. Refer to FIG. 2I. As shown in FIG. 2I, the first electronic device may obtain three nearby other electronic devices through scanning. In this case, the first electronic device may display, in the window 121, controls indicating the three electronic devices, which are respectively "my watch", "my mobile phone", and "Jennie's mobile phone".

Then, the first electronic device may detect a user operation performed on a control, and the first electronic device may share, in response to the operation, the to-be-shared picture carrying the interactive bubble with an electronic device corresponding to the device control.

For example, after detecting a user operation performed on "Jennie's mobile phone", in response to the operation, the first electronic device may share, with Jennie's mobile phone, the photo P that carries the interactive bubble 113 and that is displayed in the window 111. Therefore, the user Jennie may receive the photo P carrying the bubble 113.

According to the method shown in FIG. 2A to FIG. 2I, the first electronic device may automatically generate, based on the to-be-shared picture, the bubble carrying the content describing the to-be-shared picture, and send the to-be-shared picture carrying the bubble to the electronic device and the user that receive the sharing. In this way, the electronic device and the user that receive the sharing can obtain more information from the shared picture.

**In some embodiments, the first electronic device may alternatively generate a bubble for a picture before sharing.** Then, at any moment after the bubble is generated, the first electronic device may detect a sharing operation of the first user. In this case, the first electronic device may share the picture carrying the bubble with another device.

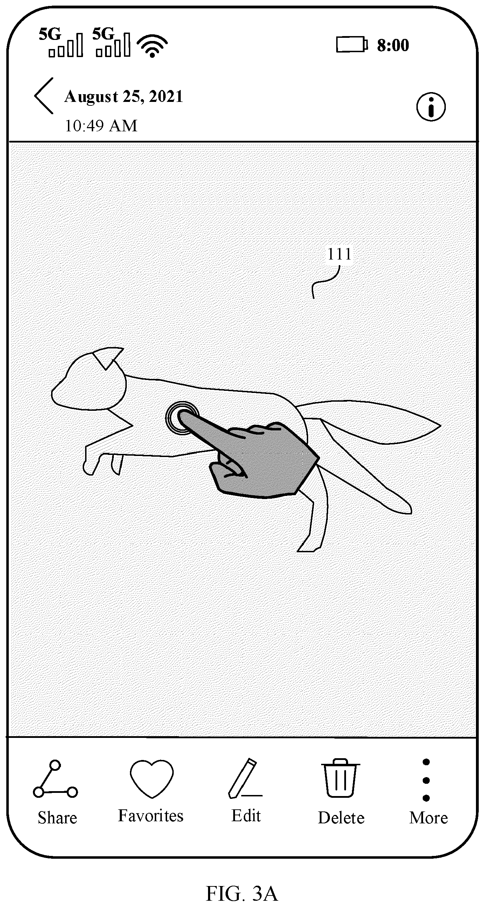

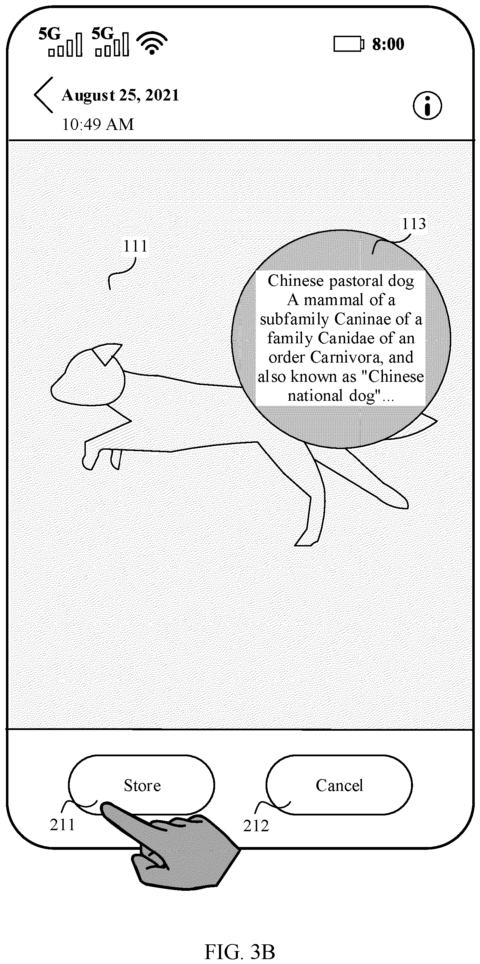

FIG. 3A to FIG. 3E show a user scenario in which a bubble is generated before the picture is shared. As shown in FIG. 3A, when the photo P is displayed, the first electronic device may detect a user operation performed on the photo P. The operation is, for example, a touching and holding operation. In response to the operation, the first electronic device may recognize the image content in the photo P, and generate and carry a bubble 113 describing the image content. The first electronic device may then display the bubble 113 in the photo P. Refer to FIG. 3B.

Similarly, after detecting the user operation performed on the to-be-shared picture in FIG. 3A, and before displaying a user interface shown in FIG. 3B, the first electronic device may also display the window 110 shown in FIG. 2D that provides the information type of the associated information selected by the user. Refer to the foregoing description. Details are not described herein again. On user interfaces shown in FIG. 3A to FIG. 3E, that the first electronic device detects that a type of information selected by the user is "encyclopedia" is used as an example.

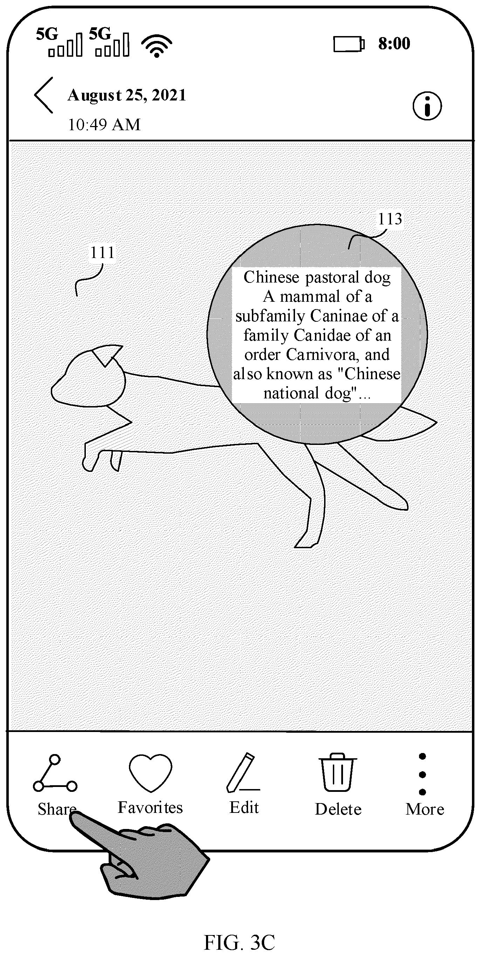

On the user interface shown in FIG. 3B, the user interface further includes a store control 211 and a cancel control 212. After detecting a user operation performed on the store control 211, the first electronic device may display, in response to the operation, a user interface shown in FIG. 3C. In this case, the photo P displayed in the window 111 further includes the bubble 113. After detecting a user operation performed on the cancel control 212, the first electronic device may display, in response to the operation, the user interface shown in FIG. 2C. In this case, the photo P displayed in the window 111 does not include the bubble 113 created by the first user.

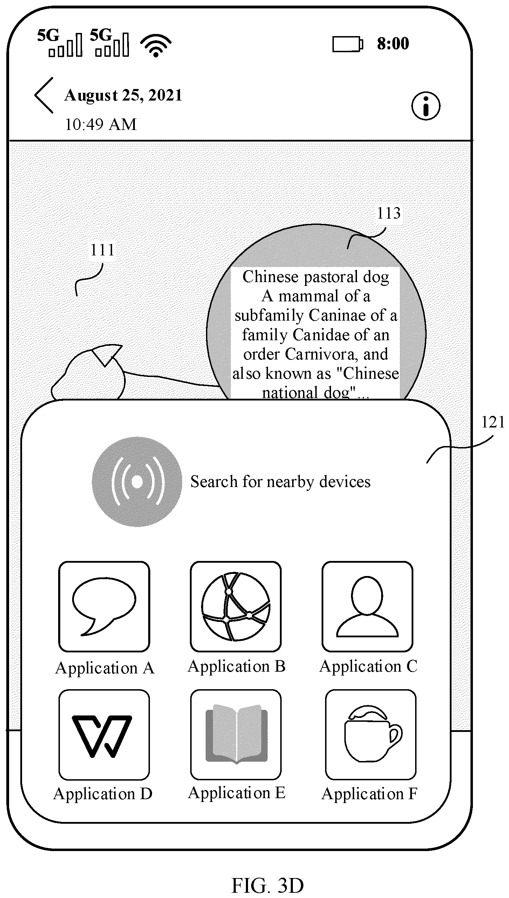

In the scenario shown in FIG. 3C, the first electronic device may detect a user operation performed on a "share" control, and in response to the foregoing operation, the first electronic device may display a window 121 including a plurality of sharing interfaces. Refer to FIG. 3D. For a subsequent sharing operation, refer to the user interfaces shown in FIG. 2F to FIG. 2I. Details are not described herein again.

In another embodiment, the first electronic device may further display, in a user interface for displaying a picture, a control used to obtain a bubble service. After detecting a user operation performed on the control, the first electronic device may display a bubble of the to-be-shared picture as shown in the process shown in FIG. 3B to FIG. 3D, and send the to-be-shared picture carrying the bubble to another electronic device.

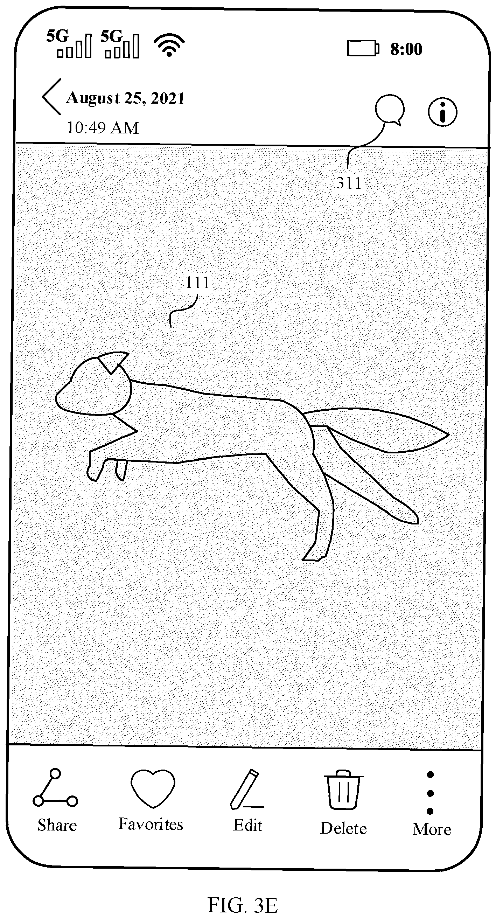

For example, with reference to FIG. 3E, a user interface shown in FIG. 3E may further include a control 311. The first electronic device may detect a user operation performed on the control 311. In response to the user operation, the first electronic device may display the user interface shown in FIG. 2D or FIG. 3B. Details are not described herein again.

According to the method shown in FIG. 3A to FIG. 3E, the first electronic device may decouple a process of generating an interactive bubble from a process of sharing a picture carrying the interactive bubble. In this way, the first user may create a bubble for the picture at any time, and then the first user may share, at any time, the picture that already carries the interactive bubble. In addition, when the first user does not need to send the picture carrying the interactive bubble, the method shown in FIG. 3A to FIG. 3E can avoid a user operation of closing the bubble, so that user experience is improved.

In the process in which the first electronic device generates a bubble based on the image content in the to-be-shared picture shown in FIG. 2A to FIG. 2I and FIG. 3A to FIG. 3E, the first electronic device may generate a plurality of bubbles. The plurality of bubbles may be used to carry different types of description information about the image content.

With reference to the shown user interface of the window 110 in FIG. 2D, the first electronic device may determine a plurality of options selected by the user, and then generate a plurality of bubbles. Types of information that is associated with the image content of the to-be-shared picture and that is carried in the plurality of bubbles separately correspond to options in the window 110.

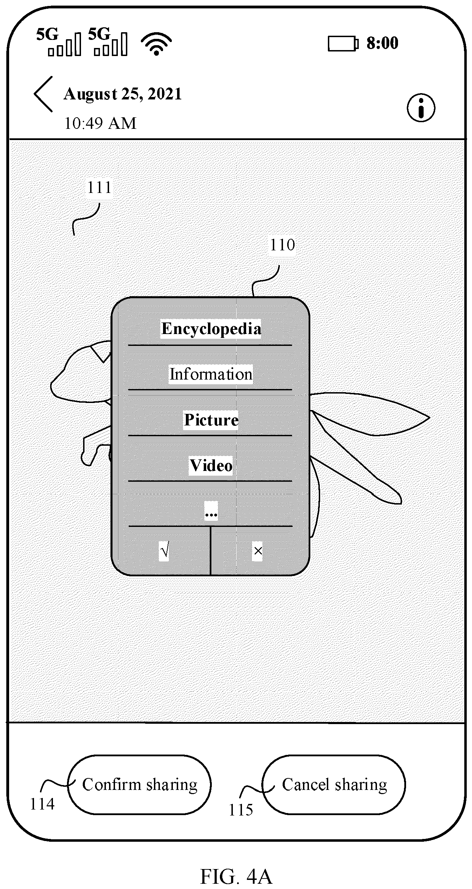

**After detecting the user operation performed on the "share" control shown in** **FIG. 2C****, or after detecting the user operation performed on the photo P shown in** **FIG. 3A****, as shown in** **FIG. 4A****,** the first electronic device may display the window 110 shown in FIG. 2D. The window 110 displays a plurality of options, such as "encyclopedia", "information", "picture", and "video".

The first electronic device may detect a user operation performed on a plurality of options in the plurality of options, and in response to the user operation, the first electronic device may generate a plurality of bubbles that include selected information types. For example, the first electronic device may detect a user operation performed on the "encyclopedia", the "picture", and the "video", and the first electronic device may display a bubble 113, a bubble 116, and a bubble 117 in the photo P in response to the operation. Content displayed in the bubble 113, the bubble 116, and the bubble 117 is various types of information matched with the Chinese pastoral dog recognized in the photo P.

For example, the content displayed in the bubble 113 includes encyclopedia information of the Chinese pastoral dog and the Chinese pastoral dog. The information displayed in the bubble 116 includes the Chinese pastoral dog and a video link about the Chinese pastoral dog searched by the first electronic device. The content displayed in bubble 117 includes the Chinese pastoral dog and a picture link about the Chinese pastoral dog searched by the first electronic device.

The link may be a uniform resource locator (Uniform Resource Locator, URL), or may be an index that indicates a group of data in the first electronic device. When the link is a URL, the first electronic device may display, based on the URL, a web page corresponding to the URL. When the link is an index, the first electronic device may locate data in local storage space based on the index.

Due to a limitation of a bubble size, the information that can be directly displayed in the bubble is limited. Therefore, when a large amount of information needs to be displayed in the bubble, the first electronic device may display a part of information in the bubble, and prompt the user to click the bubble to obtain more information.

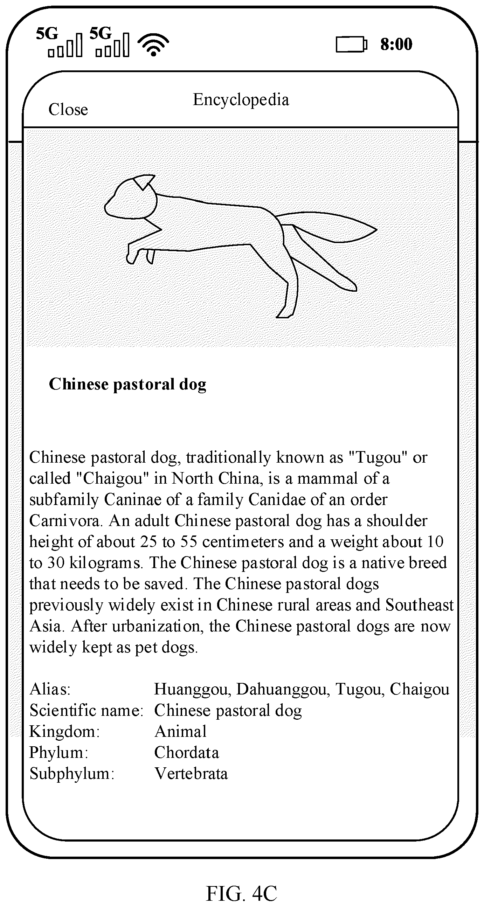

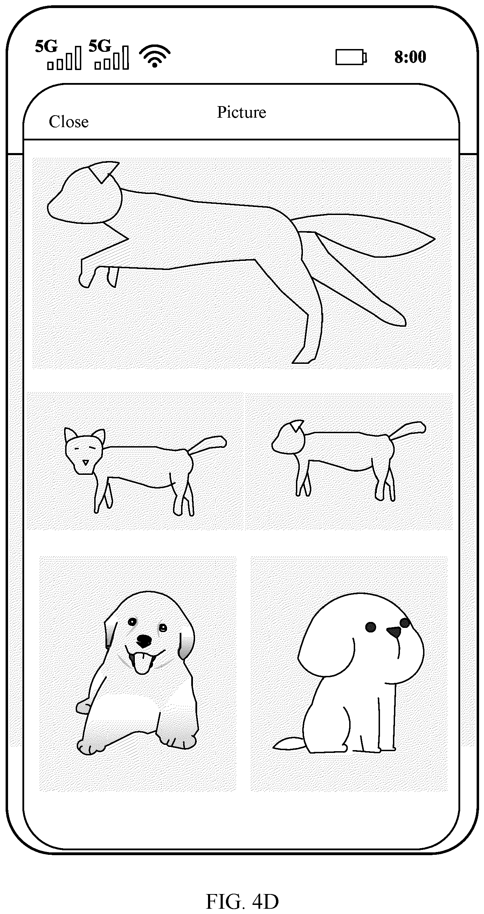

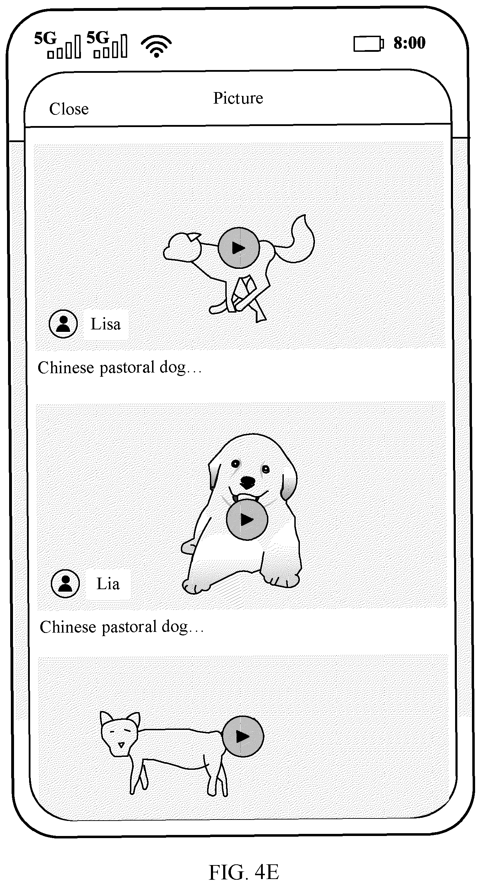

For example, the first electronic device may detect a user operation performed on the bubble 113, and the first electronic device may display, in response to the operation, a user interface shown in FIG. 4C. As shown in FIG. 4C, the first electronic device may display more encyclopedia information about the Chinese pastoral dog for the user. The first electronic device may detect a user operation performed on the bubble 117, and the first electronic device may display, in response to the operation, a user interface shown in FIG. 4D. As shown in FIG. 4D, the first electronic device may display a plurality of pictures of the Chinese pastoral dog for the user. The first electronic device may detect a user operation performed on the bubble 116, and the first electronic device may display, in response to the operation, a user interface shown in FIG. 4E. As shown in FIG. 4E, the first electronic device may display a video about the Chinese pastoral dog for the user.

In this way, based on bubbles such as the bubble 113, the bubble 116, and the bubble 117, the first user can quickly and conveniently obtain richer information about the image content in the to-be-shared picture.

After the bubbles are generated, the first electronic device may detect a user operation performed on the confirm control 114. The first electronic device may share, in response to the operation, the to-be-shared picture carrying the three bubbles with another electronic device.

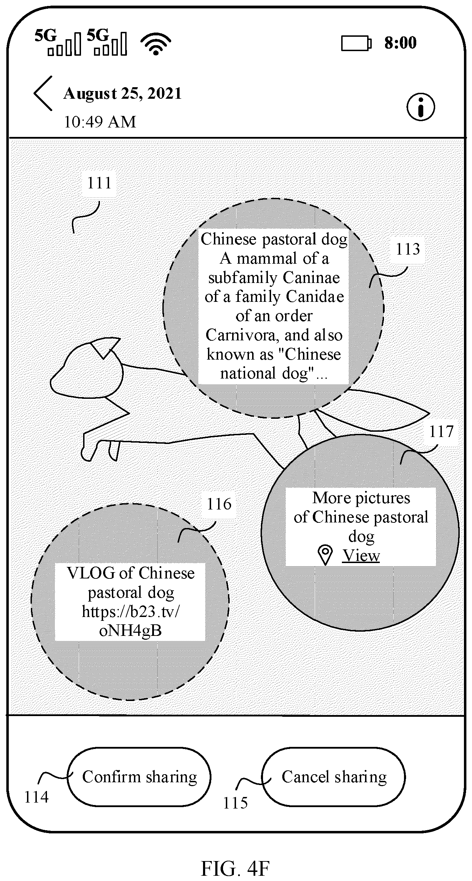

When the to-be-shared picture carries a plurality of interactive bubbles, the first electronic device may further support the first user to share some bubbles in the picture. FIG. 4F to FIG. 4H show a method of sharing a picture and some bubbles in the picture.

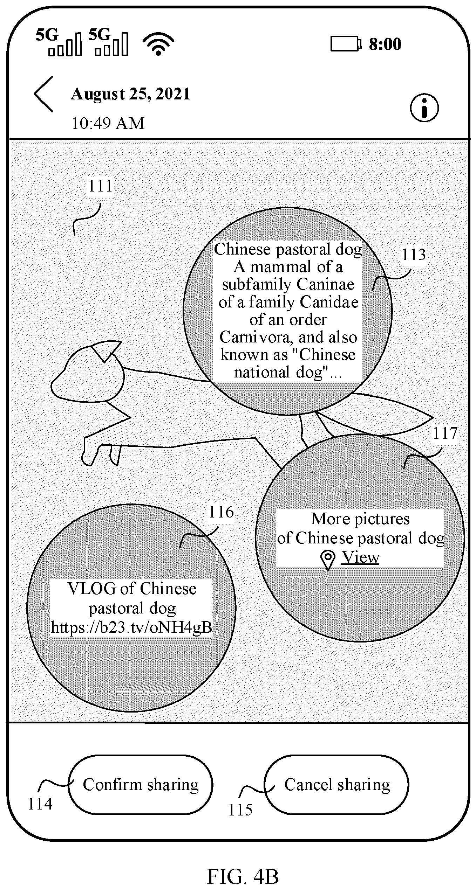

For example, on the user interface shown in FIG. 4B, the first electronic device may detect a user operation performed on the bubble 113 and the bubble 116. The operation is, for example, a touching and holding operation or a double-tapping operation. In response to the operation, the bubble 113 and the bubble 116 may be marked as to-be-shared bubbles. In this case, the bubble 113 and the bubble 116 may prompt the first user that the bubble 113 and the bubble 116 are to-be-shared bubbles in an emphasized display manner. The emphasized display manner is, for example, a display method of floating and shaking. Not limited to floating and shaking, the emphasized display manner may alternatively be implemented by changing a color of a bubble, a color of content displayed in the bubble, or the like. This is not limited in embodiments of this application.

The display method of floating and shaking is used as an example. After the bubble 113 and the bubble 116 are marked as to-be-shared bubbles, the user interface shown in FIG. 4B may present as that shown in FIG. 4F. In this case, the bubble 113 and the bubble 116 in the to-be-shared photo may appear to be floating and shaking. In this way, the first user can intuitively know which selected to-be-shared bubbles are included.

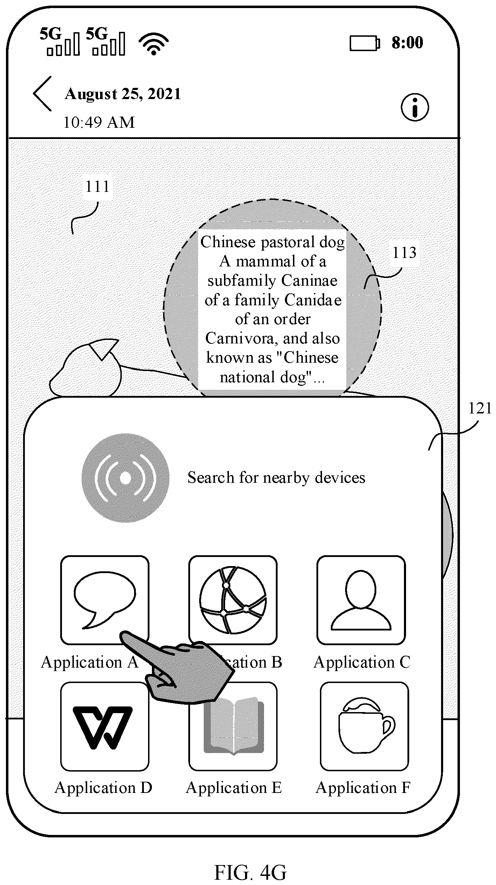

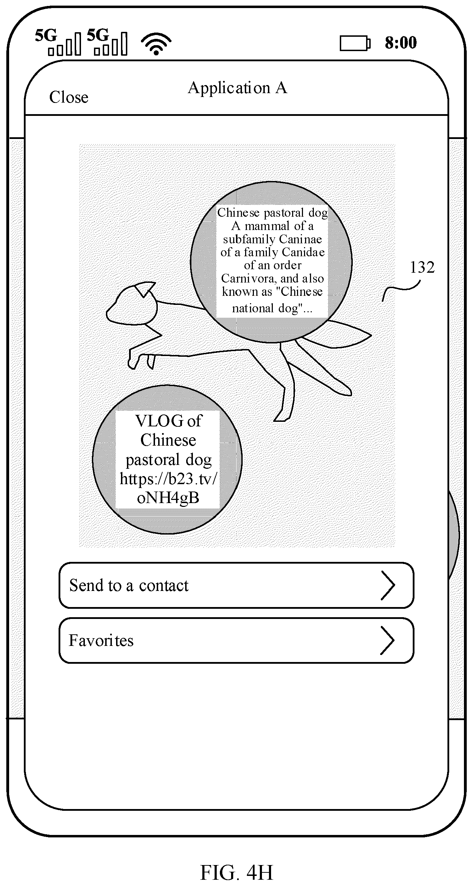

After determining the to-be-shared bubble, the first user may tap the confirm control 114. After detecting a user operation performed on the confirm control 114, the first electronic device may display a sharing window 121 in response to the operation. Refer to FIG. 4G. Further, in response to a user operation performed on the "application A", the first electronic device may display a user interface shown in FIG. 4H. In this case, content that may be displayed in the subwindow 132 includes the photo P and the to-be-shared bubble 113 and the to-be-shared bubble 116 that are selected by the first user, but does not include the unselected bubble 117 in FIG. 4B.

Then, with reference to the operations shown in FIG. 2F and FIG. 2G, the first electronic device may share the photo P, the to-be-shared bubble 113, and the to-be-shared bubble 116 displayed in the subwindow 132 with a contact specified by the first user.

According to the method shown in FIG. 4A to FIG. 4H, the first electronic device may generate a plurality of bubbles. In the plurality of bubbles, the first electronic device may choose to share some of the plurality of bubbles. In this way, the first user may choose to share different bubbles based on different sharing objects and/or different scenarios.

After generating the one or more bubbles, the first electronic device may further detect an operation of creating a new bubble by the user. The first electronic device may generate one or more bubbles based on an existing bubble in response to the operation.

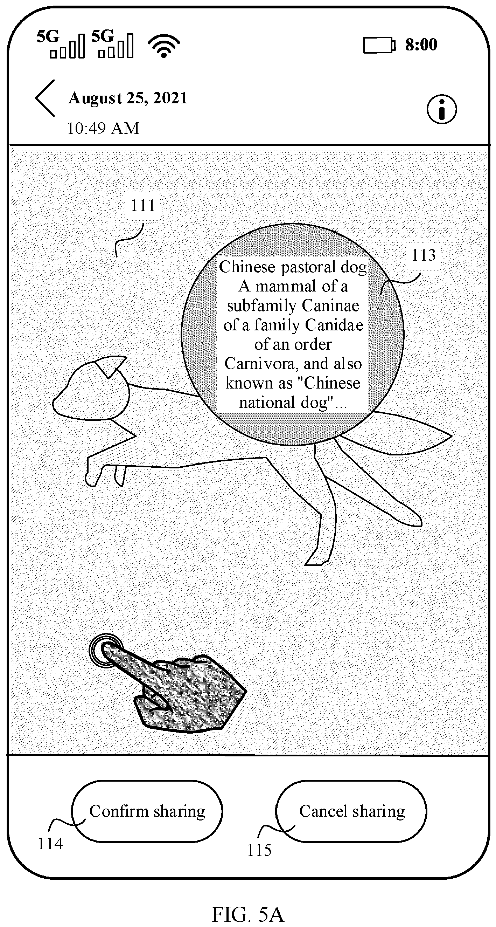

As shown in FIG. 5A, the first electronic device may detect a user operation performed on a blank area in the photo P. The blank area refers to an area that is not covered by a bubble in the to-be-shared picture P. The user operation is, for example, a double-tapping operation, a touching and holding operation, and the like. This is not limited in embodiments of this application.

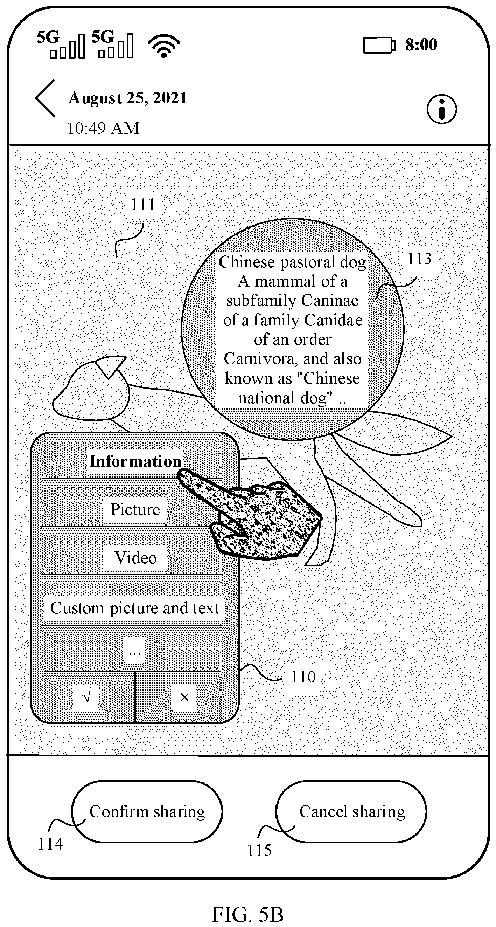

In response to the foregoing user operation, the first electronic device may display the window 110 in the photo P. Refer to FIG. 5B. A plurality of options are displayed in the window 110. In this case, the option in the window 110 may not include the option corresponding to an existing bubble. For example, a bubble of the "encyclopedia" type is already displayed on the user interface shown in FIG. 5B. In this case, the option in the window 110 may not include "encyclopedia".

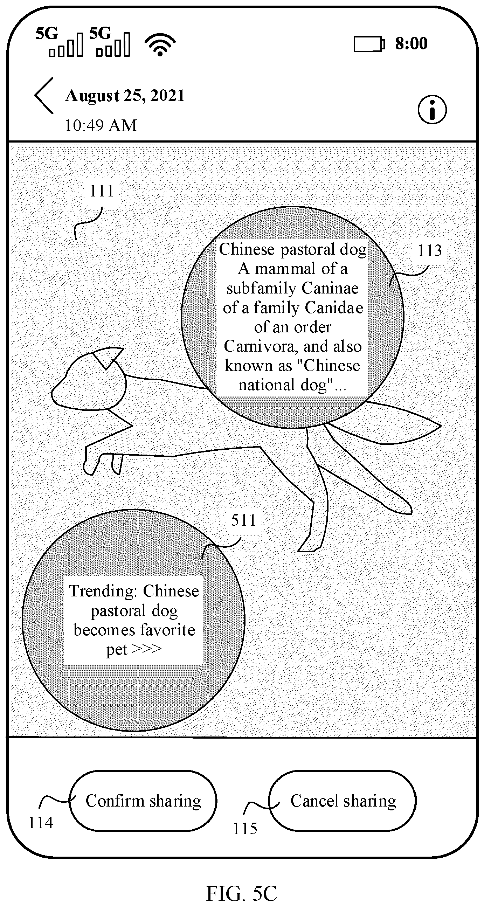

In response to a user operation performed on one or more options in the window 110, the first electronic device may re-create and display one or more bubbles corresponding to the options. For example, the first electronic device may detect a user operation performed on "information", and the first electronic device may display a bubble 511 in the photo P in response to the operation. Refer to FIG. 5C. In this case, a hot news about the Chinese pastoral dog may be displayed in the bubble 511. Similarly, after detecting a user operation performed on the bubble 511, the first electronic device may also display more detailed information displayed in the bubble 115. Refer to FIG. 4C to FIG. 4E. Details are not described herein again.

The options also include "custom picture and text". When detecting that the user selects an option of "custom picture and text", the first electronic device may further create an empty bubble. The empty bubble may receive and display data such as a text or a picture entered by the user.

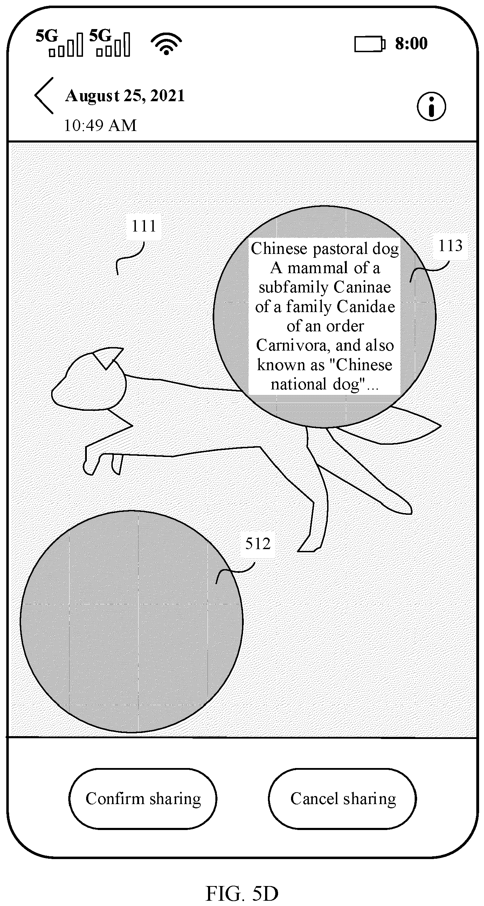

With reference to FIG. 5B, the first electronic device may detect a user operation performed on the option of "custom picture and text", and the first electronic device may display a bubble 512 in the photo P in response to the operation. Refer to FIG. 5D. Initially, the bubble 512 may be empty, that is, no information is displayed.

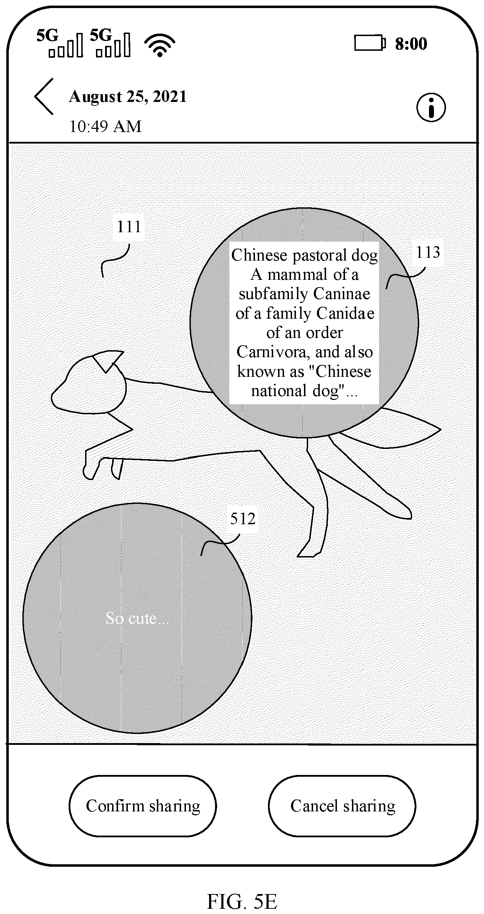

Then, the first electronic device may detect a user operation performed on the bubble 512. The first electronic device may receive, in response to the operation, data entered by the first user, including but not limited to a text, a picture, and the like. Subsequently, the first electronic device may display the data. Refer to the bubble 512 in FIG. 5E. For example, the first electronic device may receive a text entered by the first user: "so cute...". After the first user completes editing, the first electronic device may display "so cute..." in the bubble 114.

Optionally, a size of a bubble in the picture may be adjusted based on a length of content displayed in the bubble, to minimize blocking of the picture by the bubble. Optionally, a shape of a bubble is not limited to a circle, and may alternatively be a rectangle, a heart shape, or the like. This is not limited in embodiments of this application.

Optionally, the first electronic device may further support changing a location of a bubble. The bubble includes a bubble (the bubble 113, the bubble 116, and the bubble 117) generated by the first electronic device by recognizing picture content, and further includes a bubble (the bubble 512) generated in response to a bubble creation operation of the first user.

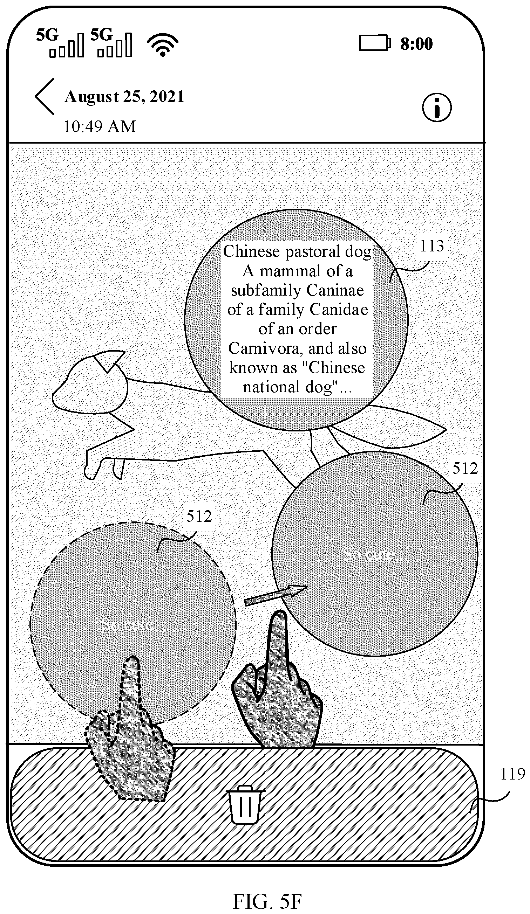

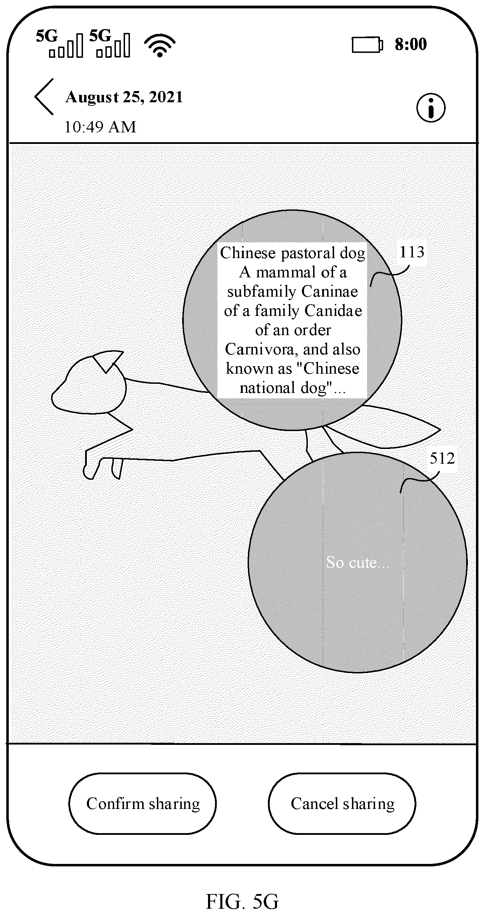

With reference to FIG. 5F, the first electronic device may detect a user operation performed on the bubble 512, and the bubble 512 may be in a floating state in response to the operation. Then, the first electronic device may detect an operation of the first user dragging the bubble 512 to move the bubble 512 from a location A to a location B. The first electronic device may then display the bubble 512 at the location B. Refer to FIG. 5G.

A user interface shown in FIG. 5F also includes a delete control 119. In a scenario in which the bubble location is changed, the first user may further move the selected bubble into the delete control 119. After detecting that the selected bubble is moved into the delete control 119, the first electronic device may delete the bubble.

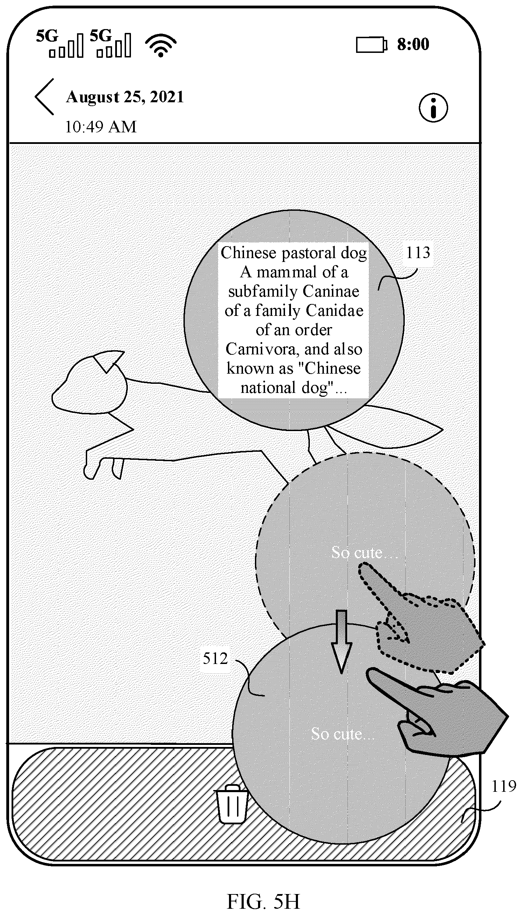

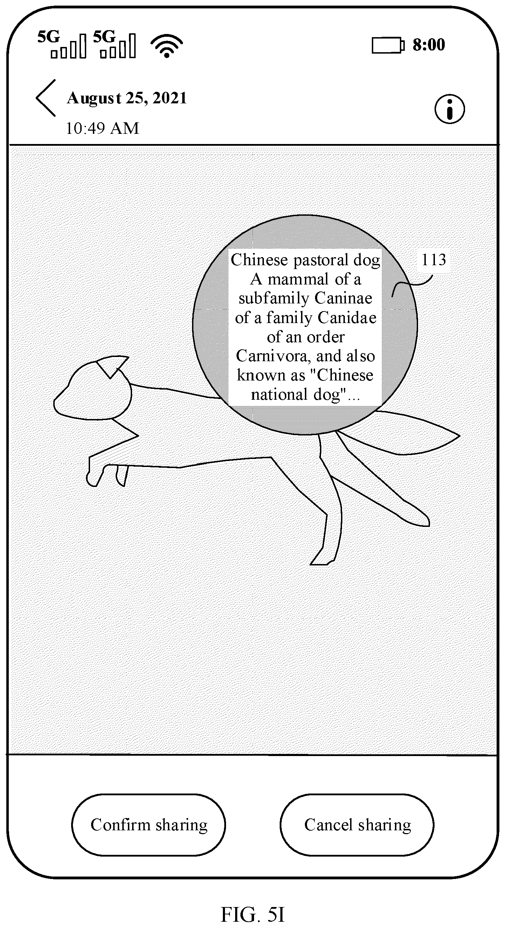

With reference to FIG. 5H, the first electronic device may detect that the selected bubble 512 is moved into the delete control 119. The first electronic device may delete the bubble 512 from the photo P in response to the operation. The photo P in which the bubble 512 is deleted may be shown in FIG. 5I. In this case, the photo P includes only the bubble 113, and does not include the bubble 512. Then, in response to a sharing operation of the user, the first electronic device may share the photo P in FIG. 5I and the bubble 113 carried in the photo P with another device.

According to the method shown in FIG. 5A to FIG. 5I, the first electronic device may add a new bubble or delete an existing bubble, or adjust a display location of an existing bubble based on a requirement of the first user.

### 2. The first electronic device obtains information carried in a downloaded picture, and generates a bubble that includes the information.

In some embodiments, a to-be-shared picture may alternatively be downloaded by the first user by using the Internet and stored to the first electronic device. In this case, when the picture is stored in the first electronic device, the first electronic device may further record a URL for downloading the image. Then, in a process of generating an interactive bubble, the first electronic device may generate a bubble on which URL information is displayed.

Specifically, for example, FIG. 6A shows an example of a shopping interface. A picture for displaying commodity information may be displayed on a user interface shown in FIG. 6A. For example, a commodity picture (a picture Q) is displayed in a window 611. For example, the picture Q is a commodity photo of a running shoe. The first electronic device may detect an operation performed on the picture, and the first electronic device may store the picture locally in response to the operation. In addition, the first electronic device may record a web page link for obtaining the picture. For example, it is assumed that the web page link corresponding to the shopping interface displayed with the picture Q is "https://m.xxx.cn/abcdefg123" and a title is "running shoes". In this case, when detecting a user operation of storing the picture Q, the first electronic device not only downloads and stores the picture Q, but also may obtain a URL (" https://m.xxx.cn/abcdefg123 ") and the title ("running shoes") describing the commodity, that is, a commodity name.

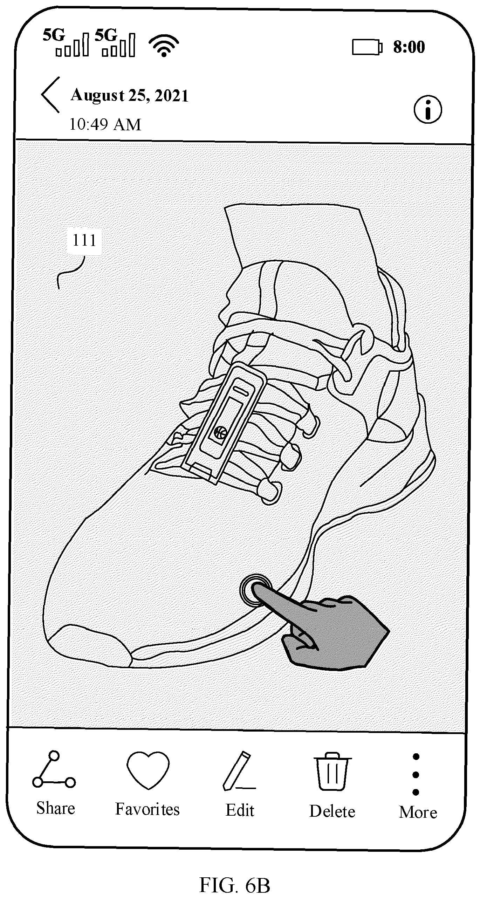

After the picture is stored locally, the first electronic device may display the picture Q. Refer to FIG. 6B. In a scenario shown in FIG. 6B, the first electronic device may detect an operation of creating a bubble. After detecting the user operation of creating a bubble, the first electronic device may display the window 110 in FIG. 2D. In this case, the window 110 may include a "source" option.

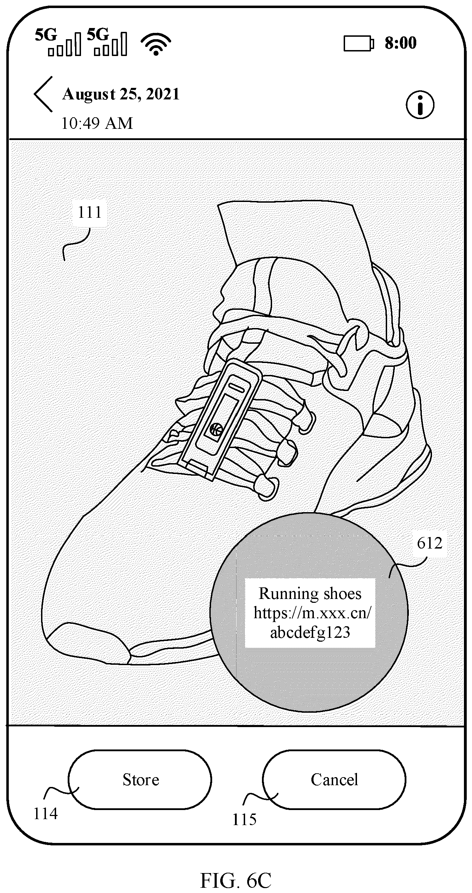

The first electronic device may detect a user operation performed on the "source" option. The first electronic device may then generate a bubble 612. Refer to FIG. 6C. The bubble 612 may display the title ("running shoes") obtained when the picture Q is stored, and the URL ("https://m.xxx.cn/abcdefg123 ") for obtaining the picture Q.

In this case, the first user and a user who receives the picture Q carrying the bubble 612 may view the commodity in the picture Q through the link in the bubble 612.

When the shared picture is a photo taken by the first electronic device, the source may be specifically device information of the first electronic device, and/or shooting information used when the first electronic device takes the photo. The device information may be, for example, a device name. The shooting information may be, for example, a shooting time, and a shooting location. Therefore, when detecting that the user selects the "source" option, the first electronic device may generate a bubble corresponding to the "source" option, that is, a "source" type of bubble. In this case, the device information and the shooting information may be displayed in the bubble.

According to the method shown in FIG. 6A to FIG. 6C, for a picture downloaded and stored locally, the first electronic device may record source information of the picture. When generating a bubble, the first electronic device may generate the bubble for displaying the source information, so that the user can view the source information of the picture. In a shopping scenario, the user may enter a commodity sales page based on a bubble displaying a commodity source, and then purchase a commodity, so that convenience is provided for the user.

### 3. The first electronic device generates an interactive bubble that provides a recommendation service based on location information of the first electronic device and image content in a to-be-shared picture.

In some embodiments, the to-be-shared picture selected by the user is a picture of a scenic spot area. In this case, in response to a sharing operation of the user, the first electronic device may recognize a scenic spot in the picture, and provide a travel recommendation for the user with reference to a current location of the first electronic device. The travel recommendation refers to determining a round-trip travel mode and a ticket recommendation for a corresponding travel mode based on a location of the scenic spot and the current location of the first electronic device.

As shown in FIG. 7A, a scenic spot in a picture R displayed in a window 111 is a famous scenic spot A. The famous scenic spot A is located in a city A. When a user operation performed on the picture R is detected, for example, a touching and holding operation, and similarly, after detecting a bubble creation operation, the first electronic device may display the window 110 shown in FIG. 2D. In this case, the options provided in the window 110 also include "recommendation". After detecting a user operation performed on "recommendation", the first electronic device may determine the location of the scenic spot in the picture and the current location of the first electronic device, and then generate travel recommendation information between the two locations.

After detecting a user operation that the user selects the "recommendation" option, the first electronic device may recognize the famous scenic spot A from the picture R, and determine the city A at which the famous scenic spot A is located. In addition, the first electronic device may invoke a positioning service to obtain the current location of the first electronic device, for example, a city B.

In this case, the first electronic device may obtain travel information between the city B and the city A. The travel information is, for example, flight information and rail transit information from the city B to the city A. The flight information includes a flight shift, a ticket price, and the like. Similarly, the rail transit information includes a high-speed rail shift, a train shift, a high-speed rail ticket price, a train ticket price, and the like. After detecting a plurality of travel modes, the first electronic device may display different types of travel recommendations based on a travel sequence preset by the first user, or the first electronic device may further perform intelligent recommendation based on prices and duration of the plurality of travel modes. The following uses the flight information as an example.

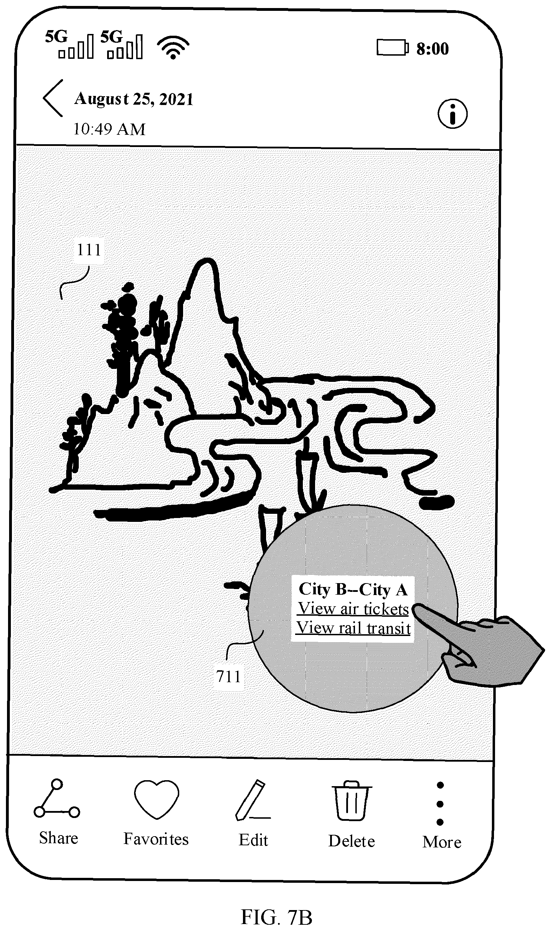

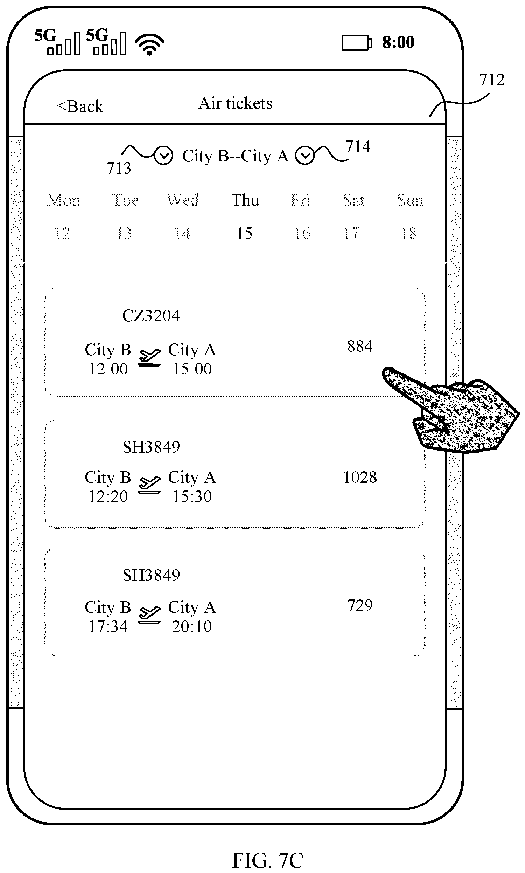

After determining the travel information, the first electronic device may generate a bubble 711 in the picture R. Refer to FIG. 7B. The bubble 711 may include the travel information. For example, interfaces for "view air tickets" and "view rail transit" may be displayed in the bubble 711. The "view air tickets" interface is used as an example. The first electronic device may detect a user operation performed on the "view air tickets" interface, and the first electronic device may display a window 712 in response to the operation. Refer to FIG. 7C. The window 712 may display flight information from the location (the city B) of the first electronic device to the famous scenic spot A (the city A) on a current day. In this way, the first user can quickly and conveniently obtain the travel information to the famous scenic spot A.

The window 712 may include a control 713 and a control 714. The control 713 and the control 714 may be used to change a departure location and a destination. For example, after detecting a user operation performed on the control 713, the first electronic device may display, in response to the operation, a plurality of cities, for example, a city R, a city P, and a city Q. In response to a user operation performed on a control of the city R, the first electronic device may change the departure location from the city B to the city R, and then display air tickets from the city R to the city A. The control 714 may be used to change the destination. Similarly, in response to a user operation performed on the control 714, the first electronic device may change the destination from the city A to another city selected by the user, and then display corresponding air tickets. Details are not described herein again.

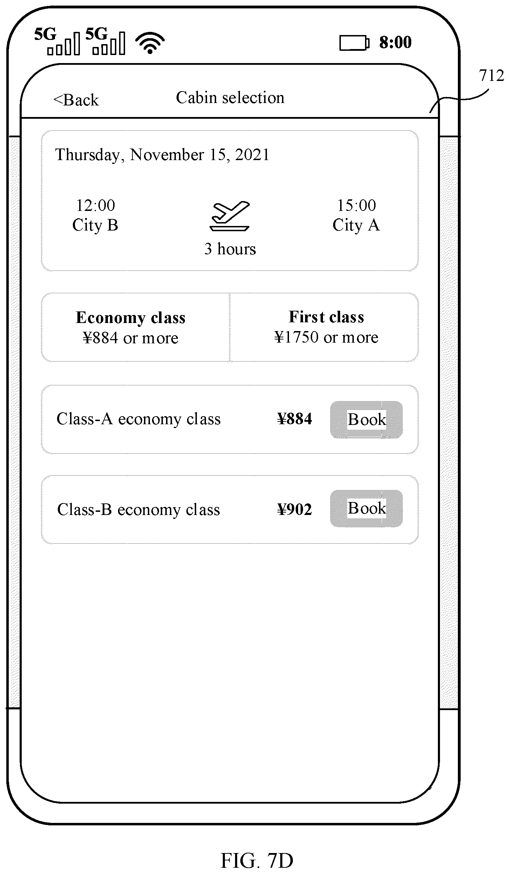

After detecting a user operation performed on any air ticket control, the first electronic device may display a user interface for purchasing the air ticket. For example, after detecting a user operation performed on a first air ticket ("flight CZ3204") in the window 712, the first electronic device may display a user interface shown in FIG. 7D. In this case, detailed information and purchase information of the first air ticket, such as a departure time, an arrival time, a date, a cabin class, and a price, may be displayed in the window 712.

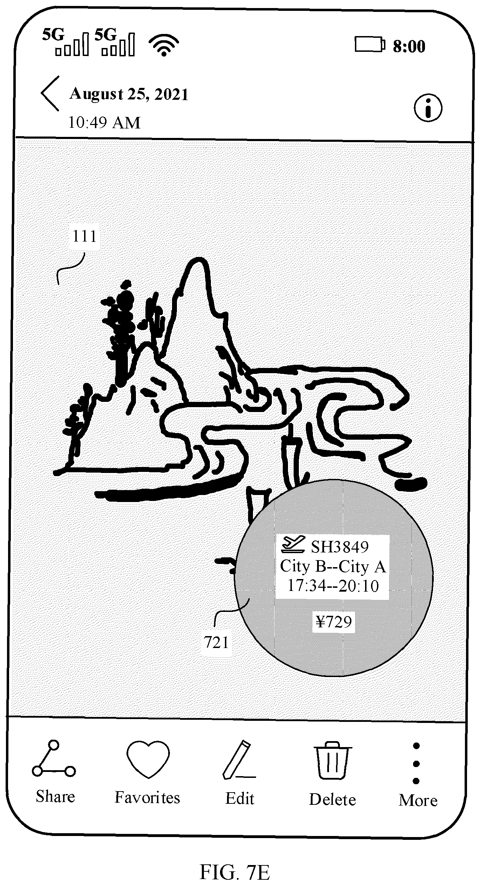

In some embodiments, in the scenario shown in FIG. 7A, in response to the user operation of creating a bubble, a recommendation bubble generated by the first electronic device may alternatively be shown as a bubble 721 in FIG. 7E. The bubble 721 may show a special-price air ticket from the city B to the city A, including a flight number, a departure time, an arrival time, a price, and the like of the air ticket. In this way, the user may intuitively learn about the flight information from the current location to the location in the picture, and a best-priced air ticket in the near future.

When detecting a user operation performed on the bubble 721, the first electronic device may display a user interface for purchasing the special-price air ticket. Refer to FIG. 7D. Details are not described herein again.

After the picture R and the bubble 711 (or the bubble 721) in the picture R are sent to the another electronic device (the second electronic device), the user (the second user) of the second electronic device may also view, based on the bubble 711, the flight information from the location (the city B) of the first electronic device to the famous scenic spot A (the city A). In addition, the second user may also indicate the second electronic device to generate a bubble carrying the travel information. Alternatively, after receiving the picture and the bubble that are shared by the first electronic device, the second electronic device may automatically generate a recommendation bubble that matches a current location of the second electronic device. Therefore, the second user may obtain travel information from the current location of the second user to the famous scenic spot A. Further, the second electronic device may share the picture carrying the bubble with another electronic device (a third electronic device) again.

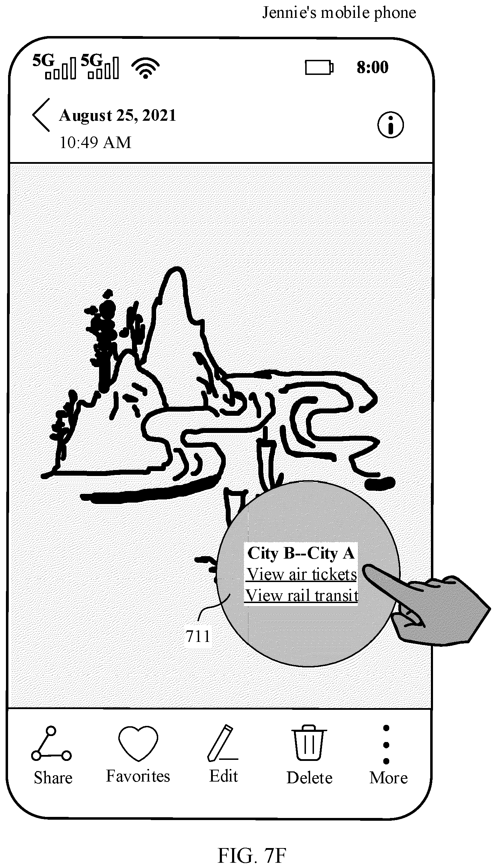

For example, with reference to the sharing operation shown in FIG. 2E to FIG. 2G, after the first electronic device sends the picture R and the bubble 711 in the picture R to "Jennie's mobile phone", "Jennie's mobile phone" may display a user interface shown in FIG. 7F. "Jennie" may be referred to as the second user. "Jennie's mobile phone" may be referred to as the second electronic device.

The picture R and the bubble 711 are displayed on the user interface shown in FIG. 7F. In this case, "Jennie's mobile phone" may detect a user operation performed on the bubble 711. "Jennie's mobile phone" may display the flight information in the window 712 in FIG. 7C in response to the operation, and details are not described herein again. Similarly, in response to the user operation performed on the bubble 721, the second electronic device may display the user interface shown in FIG. 7D. Refer to the foregoing description of the first electronic device. Details are not described herein again.

In this way, "Jennie" may learn about the famous scenic spot A through the picture R, and learn about the travel information of the first user to the famous scenic spot A through the bubble 711.

Further, in response to a request of creating a bubble made by "Jennie", "Jennie's mobile phone" may also generate a travel bubble in the picture R. In this case, the travel information included in the travel bubble is travel information between a location of "Jennie's mobile phone" and the city A. For example, it is assumed that "Jennie's mobile phone" obtains that a current location is in a city C based on a positioning service. In this case, the travel information displayed in the bubble generated by the second electronic device is travel information between the city C and the city A.

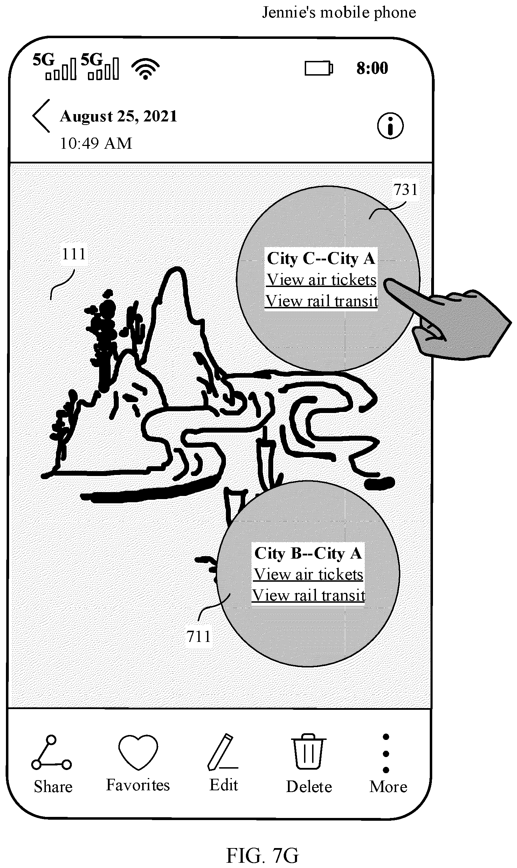

As shown in FIG. 7G, in response to a user operation of creating a bubble performed by "Jennie" (the second user), for example, an operation of "Jennie" touching and holding the picture R, "Jennie's mobile phone" (the second electronic device) may generate a bubble 731. The bubble 731 may also include interfaces for "view air tickets" and "view rail transit". Then, "Jennie" may view the travel information from the location (the city C) of "Jennie" to the famous scenic spot A (the city A) in the picture R through the interfaces.

In another embodiment, after receiving the picture R and the bubble 711 (or the bubble 721) that are sent by the first electronic device, the second electronic device may automatically obtain the current location of the second electronic device, and generate a recommendation bubble that matches the current location of the second electronic device. For example, after "Jennie's mobile phone" receives the picture R and the bubble 711 shown in FIG. 7F, "Jennie's mobile phone" may obtain the current location (the city C). Then, when the picture R and the bubble 711 shown in FIG. 7F are displayed, "Jennie's mobile phone" may also display the bubble 731. In this way, the method for automatically generating the travel recommendation bubble by the electronic device saves user operations, so that the user can obtain the travel information more conveniently.

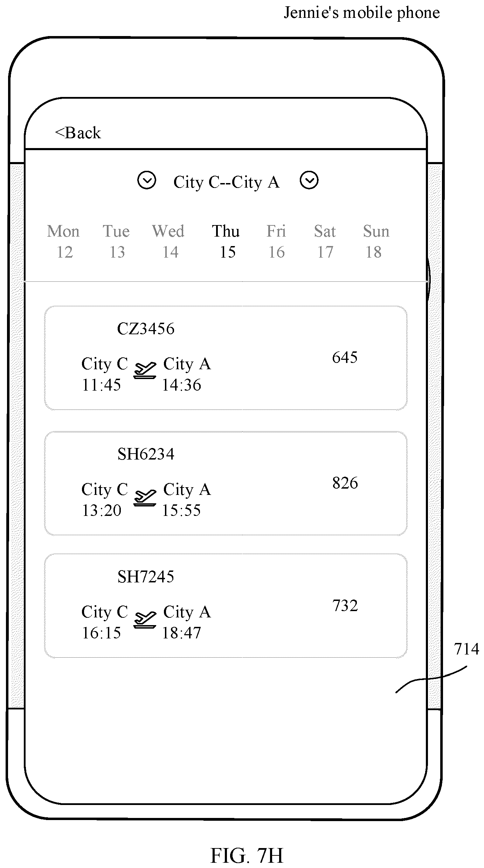

When an operation performed on the bubble 731 is detected, for example, a user operation in which the user taps "view air tickets", "Jennie's mobile phone" may display a user interface shown in FIG. 7H. A window 714 may be displayed on the interface. The window 714 may display information about air tickets from the city C to the city A. Refer to the window 712 in FIG. 7D. Details are not described herein again.

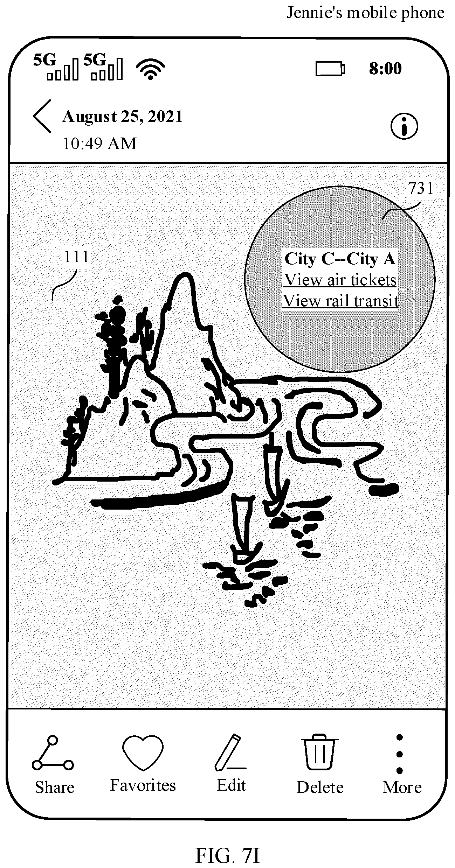

In some embodiments, in the scenario shown in FIG. 7B, after detecting the user operation of confirming sharing, the first electronic device may share the picture R with the second electronic device, but does not share the bubble 711. After receiving the picture R, the second electronic device may generate the bubble 731, and display, in the bubble 731, the travel information from the current location (the city C) of the second electronic device to the famous scenic spot A in the picture R. Refer to FIG. 7I. In this case, when displaying the bubble 731, the second electronic device does not display the bubble 711 that is generated by the first electronic device and that displays travel information from the city B to the famous scenic spot A.

Further, "Jennie's mobile phone" may further share the picture R with another electronic device (a third electronic device). The third electronic device may be the first electronic device, that is, "Jennie's mobile phone" that edits the picture R received from the first electronic device and then sends the picture R back to the first electronic device, or may be another electronic device other than the first electronic device and the second electronic device.

When the third electronic device receives the picture R, a third user (a user using the third device) may view the travel information of the previous user (the first user and/or the second user) through the bubble 711 and the bubble 731. In addition, the third electronic device may further generate travel information from a location of the third electronic device to the city A (a city at which the famous scenic spot A in picture R is located) based on an operation of creating a bubble by the third user.

In this case, same as the second electronic device, the third electronic device is also an electronic device that receives the sharing. A difference between the second electronic device and the third electronic device lies only in that the second electronic device is a device that receives the sharing of the first electronic device, and the third electronic device is a device that receives the sharing of the second electronic device. Therefore, for the third electronic device, refer to the second electronic device. Details are not described herein again.

Not limited to the location information, when generating the recommendation bubble, the electronic device may further obtain other information such as meteorological information and a to-do list. This is not limited in embodiments of this application. The various types of information may be referred to as device status information.

According to the method shown in FIG. 7A to FIG. 7I, the electronic device that initiates the sharing and receives the sharing may generate a bubble for recommendation for the user based on information such as a current location and weather. For example, the electronic device may generate, for the user based on the current location and the location indicated by the to-be-shared picture, the bubble that includes the travel recommendation, so that the user quickly and conveniently obtains a travel arrangement.

In the foregoing embodiments, in the picture sharing scenario shown in FIG. 2C to FIG. 2I, the interface shown in FIG. 2C displayed by the first electronic device may be referred to as a first interface, the picture displayed in the window 111 may be referred to as a first picture, and the animal in the picture may be referred to as a first object. The user operation performed on the "share" control may be referred to as a first user operation. The interface shown in FIG. 2E that is displayed after the user operation performed on the "share" control is detected may be referred to as a second interface. The bubble 113 shown in FIG. 2E may be referred to as a first control. The content displayed in the bubble 113 may be referred to as first content.

In FIG. 2E, the user operation performed on the "confirm sharing" control 114 may be referred to as a second user operation. The interface that includes the picture and the bubble 113 and is displayed by the second electronic device after the second electronic device receives the picture and the bubble 113 that are sent by the first electronic device may be referred to as a third page. The bubble 113 displayed on the second electronic device may be referred to as a second control.

The operation of tapping the bubble 113 detected on the second electronic device may be referred to as a third user operation, and the content displayed after the bubble 113 is tapped may be referred to as second content. With reference to FIG. 4C, on the second electronic device, after detecting the operation of tapping the bubble 113, the second electronic device may also display the interface shown in FIG. 4C, to display more information corresponding to the bubble 113. In this case, the more information is the second content.

The content displayed in the window 110 in FIG. 2D may be referred to as one or more options. The "encyclopedia" can be referred to as a first option. The operation in which the user selects the "encyclopedia" may be referred to as a fourth user operation. Correspondingly, the type of the bubble 113 displayed by the first electronic device is an encyclopedia type. The "picture" may be referred to as a second option. The operation in which the user selects the "encyclopedia" and the "picture" may be referred to as a fourth user operation. Correspondingly, the type of the bubble 113 displayed by the first electronic device is an encyclopedia type, and the type of the bubble 117 is a picture type.

After the "picture" option is selected, the bubble 117 displayed by the first electronic device may be referred to as a third control. The content displayed in the bubble 117 may be referred to as third content.

With reference to FIG. 4B, the operation of tapping the bubble 113 detected on the first electronic device may be referred to as a fifth user operation. After the fifth user operation is detected, the content shown in FIG. 4C displayed on the first electronic device may be referred to as fourth content. The first electronic device or the second electronic device may display the content in FIG. 4C through a link in the bubble 117. The link may be referred to as a first web address.

In FIG. 5D, the operation of tapping the bubble 512 to enter a text for the bubble 512 may be referred to as a seventh user operation. In this case, the bubble 512 may be referred to as a first control, and the content displayed in the bubble 512 may be referred to as first content. The content displayed in the bubble 512 after the text is entered may be referred to as sixth content. The first electronic device may also detect a sixth operation of editing the displayed first content in the bubble 113, and modify the first content in the bubble 113 to the sixth content.

Correspondingly, on the second electronic device, that the second electronic device detects the operation of modifying the first content displayed in the bubble may be referred to as a sixth user operation. After the modification, the content displayed in the bubble may be referred to as fifth content.

The content shown in FIG. 4C may be referred to as an encyclopedia introduction of the first object. The picture shown in FIG. 4D may be referred to as a picture that includes image content of the first object. The video shown in FIG. 4E may be referred to as a video that includes video content of the first object.

In FIG. 6C, the web address included in the bubble 612 may be referred to as a second web address. The content included in the interface shown in FIG. 6A displayed after the second bubble 612 is tapped may be referred to as second content.

The bubble 711 in FIG. 7B may be referred to as a first control, and the city A included in the bubble 711 may be referred to as first content. The city A (a geographical location indicated by the image content included in picture R) in the bubble 711 may be referred to as a first location, and the city B (a geographical location in which the first electronic device is currently located) may be referred to as a second location. In FIG. 7I, the bubble 731 may be referred to as a second control, and the city C (a geographical location in which the second electronic device is currently located) included in the bubble 731 may be referred to as a third location.

The "display air tickets" in the bubble 711 or the bubble 731 may be referred to as a flight travel option, and the "display rail transit" may be referred to as a train travel option. In addition, travel options that show car and bus travel options may be included. The "display air tickets" and "display rail transit" may be referred to as a third option.

The control 311 shown in FIG. 3E may be referred to as a fourth control.

**The following specifically describes a process in which the first electronic device and the second electronic device implement the picture sharing method shown in** **FIG. 2A to FIG. 2I****,** **FIG. 3A to FIG. 3E****,** **FIG. 4A to FIG. 4H****,** **FIG. 5A to FIG. 5I****,** **FIG. 6A to FIG. 6C****, and** **FIG. 7A to FIG. 7I****.**

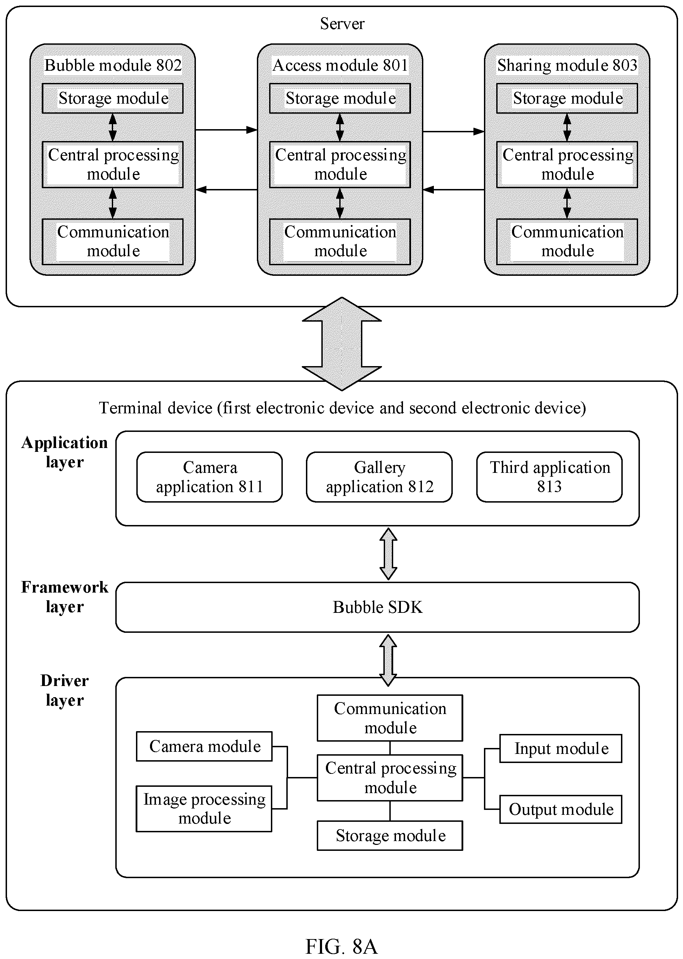

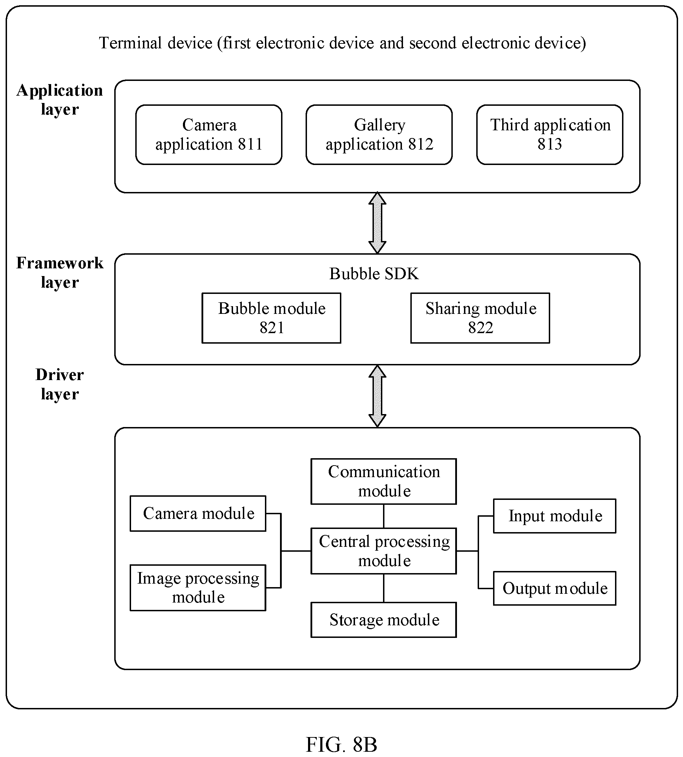

**In the scenario of implementing the system architecture shown in** **FIG. 1A****, software architectures of the terminal device (the first electronic device and the second electronic device) and the server are shown in** **FIG. 8A****. In the scenario of implementing the system architecture shown in** **FIG. 1B****, a software architecture of the terminal device (the first electronic device and the second electronic device) is shown in** **FIG. 8B****.**

First, with reference to FIG. 8A, the server may include an access module 801, a bubble module 802, and a sharing module 803. Each of the modules includes a storage module, a central processing module, and a communication module.

The software architecture of the first electronic device (or the second electronic device) may include three layers: an application layer, a framework layer, and a driver layer. The application layer may include a camera application 811, a gallery application 812, and a third application 813. The third application 813 refers to another application that is installed on the electronic device and that provides functions of browsing, displaying, and sharing a picture. The frame layer includes a bubble SDK. The driver layer includes a central processing unit module, a communication module, a storage module, an input module, an output module, a camera module, and an image processing module.

### (1) The access module 801, the bubble module 802, and the sharing module 803 in the server:

With reference to the access service, the bubble service, and the sharing service described in FIG. 1A, the access module 801, the bubble module 802, and the sharing module 803 in the server may separately provide the services.

The access module 801 may provide an access service for the terminal device (the first electronic device and the second electronic device). The access module 801 may receive a request sent by the terminal device, and send the request to the bubble module 802 or the sharing module 803 of the server. The request includes a request for creating a bubble, a request for modifying a bubble, a request for sharing a picture carrying a bubble to a specified user (the second user), and the like.

Similarly, the access module 801 in the server is optional. When a quantity of electronic devices is small, and a distance between the electronic device and the server is short, the server provides an access service. Correspondingly, the server does not need to include an access module.

The user operation of tapping the "share" control shown in FIG. 2C is used as an example. After detecting the user operation, the first electronic device may send a request for creating a bubble to the access module 801. After receiving the request, the access module 801 may send the request for creating a bubble to the bubble module 802, so that the bubble module 802 provides a bubble creation service for the first electronic device. In addition, a process such as adding a bubble, editing a bubble, and deleting a bubble in the first electronic device is also implemented by using the access module 801 to obtain a bubble service from the bubble module, and details are not described herein again.

The bubble module 802 may provide a bubble service for the terminal device (the first electronic device and the second electronic device). With reference to the description in FIG. 1A, the bubble service includes services such as creating a bubble and editing a bubble. The editing a bubble further includes changing a location and a form of a bubble, and information content carried by a bubble, deleting a bubble, marking a to-be-shared bubble in a plurality of bubbles, and the like.

The creating a bubble includes directional creation and custom creation. The directional creation refers to a bubble creation process in which the server automatically generates, based on image content of a to-be-shared picture, a bubble carrying information related to the image content. The custom creation refers to that the server creates a blank bubble, where information carried in the blank bubble is entered by a user.

For a process of directionally creating a bubble, refer to the process of generating the bubble 113 in FIG. 2D, the process of generating the bubble 612 in FIG. 6A to FIG. 6C, and the process of generating the bubble 711 in FIG. 7A and FIG. 7B. For a process of customizing a bubble, refer to the process of generating the bubble 512 in FIG. 5B.

In the process of directionally creating a bubble, the bubble module 802 may further match, for the to-be-shared picture, information associated with the picture content, and display the information in the bubble. In different scenarios, manners for matching information associated with content of a to-be-shared picture are diversified.

In some embodiments, when the to-be-shared picture is a photo taken by the first electronic device, after content in the picture is recognized by using an image recognition technology, the bubble module 802 may obtain, by searching an image library, related information describing the image content. The image library is a preset database that records massive image content and descriptive information of the image content. For example, the data image content stored in the image library and the descriptive information of the image content may be shown in Table 1.

**Table 1**

| Image content | Title | Description |
|---|---|---|
| Chinese pastoral dog | A mammal of a subfamily Caninae of a family Canidae of an order Carnivora | The Chinese pastoral dogs are mainly distributed in low-altitude areas that are centered on the central region and that are south of the Great Wall and east of the Qinghai-Tibet Plateau, and are widely found in Chinese rural areas and Southeast Asia. The Chinese pastoral dog is also known as "Chinese national dog". |
| Tulip | A perennial plant of a Tulip genus of a family Liliaceae | Tulips originated in ancient China's Western Regions and Tibet and Xinjiang. In Europe and the United States, tulip is regarded as a symbol of victory and beauty, and is also the national flower of Turkey, the Netherlands, Hungary and other countries. |
| ... | ... | ... |

The user interfaces shown in FIG. 2C and FIG. 2D are used as an example. By using the image recognition technology, the bubble module 802 may recognize the "Chinese pastoral dog" based on the to-be-shared picture in the window 111. Then, by searching the content in Table 1, the bubble module 802 may determine information associated with the to-be-shared picture, that is, information recorded in the "title" and the "description" corresponding to the "Chinese pastoral dog" in Table 1.

It may be understood that the image library shown in Table 1 is merely an example, and should not constitute a limitation on embodiments of this application.

In some embodiments, the bubble module 802 may further use the recognized image content as a search keyword to determine and display, by using a search engine, information associated with the image content. For example, after the "Chinese pastoral dog" in the image is recognized, the bubble module 802 may enter the "Chinese pastoral dog" as a search keyword into the search engine, and then obtain a plurality of search entries about the "Chinese pastoral dog", for example, "more pictures of Chinese pastoral dogs", and "VLOG of Chinese pastoral dogs".

The first electronic device may further classify, based on the type of the preset information carried by the bubble, the search entries that are found and that are related to the image content based on the type. After the information type selected by the user is determined, a search entry that matches the information type is displayed in a bubble that may be generated by the first electronic device. In this way, the user can quickly and conveniently obtain more information related to the to-be-shared picture.

In some embodiments, the bubble module 802 may further determine and display, based on information attached to the picture and the recognized image content, information associated with the image content. With reference to the user interfaces shown in FIG. 6A to FIG. 6C, the picture displayed in the window 111 carries a web page link (for example, " https://m.xxx.cn/abcdefg123 ") of the picture obtained by the first electronic device. In this case, the bubble module 802 may obtain the link and determine that the link is information associated with the picture displayed in the window 111. Thus, the bubble module 802 may generate the bubble 612 that displays the link.

In some embodiments, the bubble module 802 may further determine and display, based on the device status information and the recognized image content, information associated with the image content. With reference to the user interfaces shown in FIG. 7A and FIG. 7B, after detecting a tapping operation requesting to create a bubble, the first electronic device may send the current location (the city B) of the first electronic device to the bubble module 802. The first electronic device may provide a positioning service by using a mobile communication module or a wireless communication module, for example, a global positioning system (global positioning system, GPS), or a BeiDou navigation satellite system (BeiDou navigation satellite system, BDS).

In addition, the bubble module 802 may recognize the "famous scenic spot A" based on the picture displayed in the window 111, and determine the location of the scenic spot, for example, the city A. Then, the bubble module 802 may generate one or more travel recommendation bubbles from the city B to the city A (or from the city A to the city B) based on the current location (the city B) of the first electronic device and the location (the city A) recognized from the picture. Refer to the bubble 711 in FIG. 7B. In this case, the travel recommendation information displayed in the bubble is information associated with the image content of the picture displayed in the window 111.

The editing a bubble includes changing a location and a form of a bubble, and information content carried by a bubble, deleting a bubble, and marking a to-be-shared bubble in a plurality of bubbles. The changing a location of the bubble includes moving the bubble from one location on a screen to another location, for example, the process of moving the bubble 512 from the lower left to the upper right of the screen as shown in FIG. 5F. The changing a form of a bubble includes zooming in or out of the bubble, and changing a shape of the bubble (circular, rectangular, and the like). The changing information content carried by a bubble includes modifying content such as a text, an image, or a link displayed in the bubble, for example, the process in which the bubble 512 receives the text input by the user as shown in FIG. 5E.

The deleting a bubble refers to deleting the bubble that is generated and displayed in the to-be-shared picture. The process of moving the bubble 512 into the area to which the delete control 119 is located, as shown in FIG. 5H, may be referred to as deleting the bubble.

The marking a to-be-shared bubble is used to provide a service for the user to share one or more of generated bubbles. With reference to the user interfaces shown in FIG. 4F to FIG. 4H, the first electronic device may detect a user operation that the user selects the bubble 113 and the bubble 116, and the first electronic device may mark, in response to the operation, the two bubbles as to-be-shared bubbles. When sending the to-be-shared picture and the bubble describing the picture to the user or the electronic device that receives the sharing, the bubble module 802 may send only the to-be-shared picture and the selected to-be-shared bubbles.

The sharing module 803 is configured to provide the first electronic device with a service of sharing the to-be-shared picture selected by the user and/or the bubble describing the picture with another electronic device (the second electronic device) or a user (the second user).

In some embodiments, the sharing module 803 may scan a nearby electronic device, and provide the first electronic device with a service of sharing a picture to the nearby electronic device. The nearby electronic device may be an electronic device in a same local area network as the first electronic device. The local area network is, for example, high-fidelity wireless communication (wireless fidelity, Wi-Fi) networking, Bluetooth (Bluetooth) networking, and the like. Refer to FIG. 1B. After the nearby electronic device is found by scanning, the sharing module 803 may provide, for the first electronic device, a service of establishing a trusted connection to the scanned nearby electronic device. Based on the trusted connection, the sharing module 803 may send, to one or more of the nearby electronic devices, the picture and the bubble that the first electronic device determines to share.

With reference to the control 122 in FIG. 2E, after a user operation of tapping the control 122 is detected, the sharing module 803 may provide the user with a service of searching for a nearby electronic device. With reference to the sharing interface of "Jennie's mobile phone" in FIG. 2H, after a user operation performed on the sharing interface of "Jennie's mobile phone" is detected, the sharing module 803 may provide the user with a service of establishing a communication connection to "Jennie's mobile phone" and transmitting data through the communication connection.

In some embodiments, the sharing module 803 may also invoke a sharing interface provided by an application, to send the to-be-shared picture and the bubble included in the picture to the application installed on the first electronic device. Then, based on a sending and receiving service provided by the application, the picture and the bubble are sent to an electronic device of another contact. Refer to the sharing process shown in FIG. 2E to FIG. 2G.

The access module 801, the bubble module 802, and the sharing module 803 each include a storage module, a central processing module, and a communication module.

The storage module may be configured to store data. In the access module 801, the storage module may be configured to store communication data sent by the first electronic device (or the second electronic device). In the bubble module 802, the storage module may be configured to store data such as a to-be-shared picture, a text, and a link (URL). In the sharing module 803, the storage module may be configured to store a to-be-shared picture, a contact registration table, and the like. The contact registration table records a plurality of electronic devices that can receive the sharing and device information of the electronic devices.

The communication module may be configured to send and receive communication messages between different devices or between different software modules of a same device.

For example, the communication module of the access module 801 may receive a request of the first electronic device (or the second electronic device) for applying for a bubble service, a request of applying for sharing a picture, and the like. On this basis, the communication module of the access module 801 may communicate with the communication module of the bubble module 802, and transmit, to the bubble module 802, a request for applying for a bubble service by the first electronic device (or the second electronic device). The communication module of the access module 801 may communicate with the communication module of the sharing module 803, and transmit, to the sharing module 803, a request for applying for sharing a picture by the first electronic device (or the second electronic device).

The central processing module may be configured to perform an action such as judgment, analysis, and calculation, send a control instruction to another module based on an execution result of the action, and cooperate with each module to execute a corresponding program in an orderly manner.

The central processing module of the access module 801 is used as an example. After the first electronic device detects the sharing operation of the user, the first electronic device may send the request for obtaining the bubble service to the access module 801 by using the communication module of the access module 801. The communication module of the access module 801 may transmit the request to the central processing module of the access module 801. In this case, the central processing module of the access module 801 may determine that a terminal device requests a bubble service from the server. Therefore, the central processing module of the access module 801 may send a request creating a bubble to the bubble module 802.

### (2) The application, the interface, and the driver in the terminal device (the first electronic device and the second electronic device):

**The application layer of the terminal device may include the camera application 811, the gallery application 812, and the third application 813.**

First, the camera application 811 is an application that is installed on the terminal device and that can invoke a camera to provide a shooting service. In embodiments of this application, the to-be-shared picture selected by the user may be a photo taken by the terminal device by using the camera application 811.

The gallery application 812 may be configured to display an image resource such as a picture or a video stored in the terminal device. The picture includes a picture taken by the camera application 811 and a picture obtained by the terminal device through the Internet and stored locally. When determining the to-be-shared picture selected by the user, the terminal device may access the picture stored in the terminal device by using the gallery application 812. Refer to the user interface shown in FIG. 2C. The gallery application 812 may further provide another picture editing operation, for example, adding a picture to favorites, setting a picture as a home screen, and the like. This is not limited in embodiments of this application.

In some embodiments, the third application 813 is further installed on the terminal device. The third application 813 is an application that has permission to access an image resource stored in the terminal device and that can provide a sharing service for a user, for example, a social application that has an image sharing capability. This is not limited in embodiments of this application.

The user may view, by using the gallery application 812 or the third application 813, the image resource stored in the terminal device. Then, the terminal device may share, based on a sharing capability provided by the gallery application 812 or the third application 813, the image resource stored in the terminal device with another user or another electronic device.

**The framework layer of the terminal device may include the bubble SDK.** The bubble SDK may send data to the server or receive data sent by the server, so that the terminal device can obtain a service provided by the server, to implement the picture sharing method provided in embodiments of this application.

The bubble SDK may include a plurality of interfaces for obtaining an access service, a bubble service, or a sharing service from the server, for example, an interface for obtaining a bubble service by the access server, an interface for requesting the server to create a bubble, and an interface for requesting sharing a picture and a bubble.

An example in which the server is requested to create a bubble is used. The bubble SDK may include an interface for creating a bubble. The terminal device may invoke the interface to request the server to create a bubble. Specifically, the gallery application 812 or the third application 813 may invoke the interface to request the server to create a bubble. The bubble module 802 of the server may receive the request. In response to the request, the bubble module 802 may generate, based on the to-be-shared picture, a bubble associated with the picture content, and then the bubble module 802 may send the bubble back to the terminal device. Further, the gallery application 812 or the third application 813 on the terminal device may display the bubble.

It may be understood that, if the server includes the access module 801, the access module 801 may first receive a request for creating a bubble sent by the terminal device, and then the access module 801 may send the request to the bubble module 802.

In a process of sharing a picture carrying a bubble, the gallery application 812 or the third application 813 invokes the sharing interface provided by the bubble SDK to request a sharing service from the server. In response to the request, the sharing module 803 may search for a device that can receive the sharing. The device that can receive the sharing includes a remote device that uses a same account as the first electronic device, a nearby electronic device that enables a sharing capability, or the like. After the device that receives the sharing is determined by the user, the sharing module 803 may send the to-be-shared picture to the determined electronic device for receiving the sharing.

**The driver layer of the terminal device may include the central processing unit module, the communication module, the storage module, the input module, the output module, the camera module, and the image processing module.** The camera application 811, the gallery application 812, the third application 813, and the bubble SDK depend on the foregoing modules to implement capabilities.

In the terminal device, actions such as determining, analyzing, and computing performed by the central processing module further include: controlling the camera application 811 to shoot a photo, controlling the gallery application 812 to display a picture, invoking the bubble SDK to obtain a bubble service based on a detected user operation of sharing a picture, and the like. The data stored in the storage module further includes program code of an application such as the camera application 811, the gallery application 812, and the third application 813, a picture stored in the terminal device, and the like. That the device invokes the bubble SDK to obtain the bubble service also depends on the communication service provided by the communication module.

The input module may be configured to receive an instruction input by the user, for example, receive, by using a sensor such as a touch or a microphone, a control instruction input by the user. The output module may be configured to output information to the user, for example, output feedback to the user by using a screen, a loudspeaker, or the like. The terminal device displays the user interfaces shown in FIG. 2A to FIG. 2I, FIG. 3A to FIG. 3E, FIG. 4A to FIG. 4H, FIG. 5A to FIG. 5I, FIG. 6A to FIG. 6C, and FIG. 7A to FIG. 7I depending on the input module and the output module. Details are not described herein again.

The camera module may be configured to collect an image, and convert an optical signal into an electrical signal. The image processing module may be configured to generate a photo by using the image obtained by the camera module. The camera application 811 invokes the camera to shoot a picture or a video, depending on the camera module and the image processing module.

**In the scenario of the system architecture shown in** **FIG. 1B****, that is, in a scenario in which the initiating device is directly connected to the receiving device, the bubble service and the sharing service provided by the server may also be integrated into the terminal device (the first electronic device and the second electronic device).**

Specifically, with reference to FIG. 8B, a framework layer of the terminal device may include a bubble module 821 and a sharing module 822 (a bubble SDK). The bubble module 821 may correspond to the bubble module 802 in the server in FIG. 8A. The sharing module 822 may correspond to the sharing module 803 in the server in FIG. 8A. In the system framework shown in FIG. 1B, the bubble module 821 may provide services such as creating a bubble, displaying a bubble, and editing a bubble for the first electronic device or the second electronic device. The sharing module 822 may provide a service of sharing a picture and a bubble for the first electronic device. The sharing module 822 may provide a service for receiving a picture and a bubble for the second electronic device.

For modules such as a camera application 811, a gallery application 812, and a third application 813 at an application layer in FIG. 8B, and a central processing unit module, a communication module, and a storage module at a driver layer, refer to the description in FIG. 8A. Details are not described herein again.

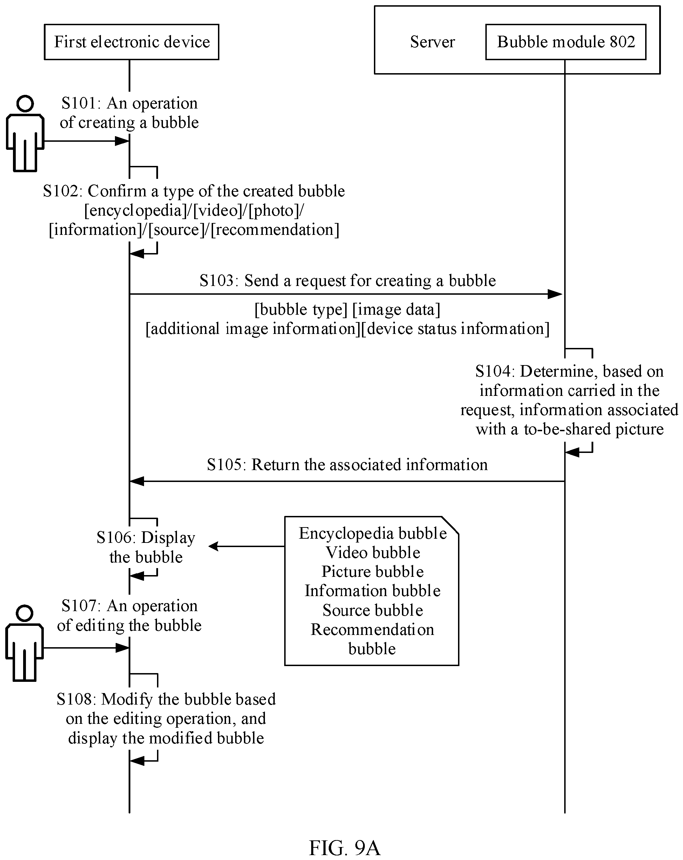

**In** the following, FIG. 9A is an example of a flowchart in which a first electronic device displays a bubble based on a detected operation of creating a bubble by a user.

As shown in FIG. 9A, S101: The first electronic device may detect a user operation of creating a bubble.

Before determining a to-be-shared picture, the first electronic device may display an image resource stored in the first electronic device. With reference to the user interfaces shown in FIG. 2C, FIG. 6B, and FIG. 7A, a picture displayed in the window 111 in FIG. 2C, FIG. 6B, and FIG. 7A is an image resource stored in the first electronic device. The user may view, based on the foregoing process of displaying the picture by the first electronic device, the image resource stored in the first electronic device. Further, the user may choose to share an image resource such as a currently displayed picture or a video.

Then, in a process of displaying an image resource such as a picture or a video, the first electronic device may detect a user operation of creating a bubble. The user operation of creating a bubble is, for example, an operation of tapping the "share" control in FIG. 2C, an operation of touching and holding or double-tapping on the to-be-shared picture in FIG. 3A, and an operation performed on the control 311 in FIG. 3E.

After detecting the user operation of creating a bubble, the first electronic device may determine that the currently displayed picture or video is a picture selected by the user for sharing, that is, the to-be-shared picture. A picture is used as an example in embodiments of this application. In another embodiment, the first electronic device may also add a bubble to the video, and share the video of the video in a video sharing process.

In FIG. 2C, when the first electronic device detects that the "share" control is tapped, the picture displayed in the window 111 is the to-be-shared picture. Similarly, in FIG. 3A, when the first electronic device detects an operation performed on the window 111, the picture displayed in the window 111 is the to-be-shared picture. In FIG. 3E, when the first electronic device detects the operation performed on the control 311, the picture displayed in the window 111 is the to-be-shared picture.

**S102: The first electronic device determines a type of the bubble that the user selects to create.**

After detecting the user operation of creating a bubble and determining the to-be-shared picture, the first electronic device may first determine the type of the bubble. The type of the bubble may indicate a type of information that is displayed in the bubble and that is associated with image content of the to-be-shared picture.

With reference to the user interface shown in FIG. 2D, the type of bubble may correspond to the options in the window 110: "encyclopedia", "information", "picture", "video", "source", "recommendation", and the like.

The "encyclopedia" may indicate the first electronic device to display an encyclopedia bubble. The encyclopedia bubble may display an encyclopedia introduction of the image content of the to-be-shared picture. Generally, the information displayed in the bubble is limited, so the encyclopedia bubble may display an overview of the encyclopedia introduction of the image content. When detecting a user operation performed on the encyclopedia bubble, the first electronic device may display a complete encyclopedia introduction. FIG. 4B and FIG. 4C show the process.

Subsequently, other types of bubbles may also display an overview or a part of the content in the bubbles. When detecting a user operation performed on the bubble, the first electronic device may display complete information corresponding to the overview. Details are not described herein again.

The "information" may indicate the first electronic device to display a news information bubble. The information bubble may display an overview of a report or an article that includes the image content of the to-be-shared picture.

The "picture" may indicate the first electronic device to display a picture bubble. The picture bubble may display an overview of another picture that includes the image content of the to-be-shared picture. When detecting a user operation performed on the bubble, the first electronic device may display another found picture that includes the image content of the to-be-shared picture.

The "video" may indicate the first electronic device to display a video bubble. The video bubble may display another video that includes the image content of the to-be-shared picture. When detecting a user operation performed on the bubble, the first electronic device may display another found video that includes the image content of the to-be-shared picture.

The "source" may indicate the first electronic device to display a source bubble. The source bubble may be used to display a location (URL positioning) of the to-be-shared picture downloaded by the first electronic device, or device information of the first electronic device, or shooting information when the first device takes a photo. When the to-be-shared picture is a picture locally downloaded by the first electronic device through a network, the "source" may indicate the first electronic device to display the location at which the to-be-shared picture is downloaded, so that the user knows a network source of the to-be-shared picture. When the to-be-shared picture is a picture taken by the first electronic device, the "source" may indicate the first electronic device to display the information about the first electronic device or the shooting information when the first device takes the photo, for example, a name, a model, a camera parameter, a shooting time, or a shooting location of the first electronic device.

The "recommendation" may indicate the first electronic device to display a recommendation bubble. The recommendation bubble may be used to display a travel recommendation generated based on a geographical location indicated by the image content in the to-be-shared picture and a current location of the first electronic device.

The first electronic device may detect a user operation performed on the options. The first electronic device determines, based on the user operation, the type of the bubble that the user selects to create.

For example, with reference to FIG. 4A, the first electronic device may detect a user operation performed on the "encyclopedia", the "picture", or the "video". Therefore, the first electronic device may determine that the type of the bubble that the user selects to create is an encyclopedia bubble, a picture bubble, and a video bubble.

In some embodiments, the options are preset and fixed. In some embodiments, the options displayed in the window 110 may change depending on an image recognition result.

In a scenario in which a variable option is displayed, after detecting a user operation of creating a bubble, the first electronic device may recognize the image content in the to-be-shared picture. Then, the first electronic device may filter, based on the recognized image content, the options displayed in the window 110, and delete an option that cannot match the type of the associated information.

**S103: The first electronic device sends a request for creating a bubble to the bubble module 802.**

After determining the type of the bubble that the user selects to create, the first electronic device may send the request for creating a bubble to the bubble module 802. The request may include at least one of the following parameters: a bubble type, image data, additional image information, and device status information. The image data may be complete image data of the to-be-shared picture, a part of image data of the to-be-shared picture, or an image feature.

The picture P displayed in the window 111 in FIG. 2C is used as an example. The complete image data of the to-be-shared picture is complete image data of the picture P (the complete image data of the to-be-shared picture). The part of image data of the to-be-shared picture is, for example, image data of an area in which the "Chinese pastoral dog" is located in the picture P (the part of image data of the to-be-shared picture). The image feature may be a pixel combination that is obtained by recognizing the picture P and that indicates the "Chinese pastoral dog", where the image feature may further indicate that the image content in the picture P is the "Chinese pastoral dog".

The additional image information refers to some information obtained when the first electronic device obtains the to-be-shared picture, including a source (a source of the to-be-shared picture), an obtaining time, and the like. In the application scenario shown in FIG. 6A to FIG. 6C, the URL address for downloading the picture Q by the first electronic device may be referred to as a source of the picture Q. If the to-be-shared picture is a picture taken by the first electronic device by invoking a camera, the first electronic device may be referred to as a source of the to-be-shared picture. The device information of the first electronic device, for example, a device model or a device name, that is, source information, indicates that the picture is a picture taken by the first electronic device.

The device status information refers to data that reflects a running status of the first electronic device when the to-be-shared picture is determined, for example, a current location that is of the first electronic device and that is located by the communication module, or a current system time of the first electronic device. In the application scenario shown in FIG. 7A and FIG. 7B, the device status information includes the location information that reflects the current location of the first electronic device. Not limited to the location information, when generating the recommendation bubble, the electronic device may further obtain other information such as meteorological information and a to-do list. This is not limited in embodiments of this application.

Based on the bubble type determined in S102, data carried in the request for creating a bubble sent in S103 is different.

Specifically, when the bubble type is an encyclopedia, information, a picture, or a video, a parameter carried in the request may include a bubble type and image data. In this case, the bubble type is an encyclopedia, information, a picture, or a video. When the bubble type is a source, a parameter carried in the request may include a bubble type, image data, and additional image information. When the bubble type is a recommendation, a parameter carried in the request may include a bubble type, image data, and device status information.

**S104: The bubble module 802 determines, based on the information carried in the request, information associated with the to-be-shared picture.**

After receiving the request, the bubble module 802 may determine, based on the information carried in the request, the information associated with the to-be-shared picture.

When the bubble type is an encyclopedia, information, a picture, or a video, a parameter carried in the request may include a bubble type and image data. In this case, the bubble module 802 may determine an information type of the associated information based on the bubble type. In this way, the bubble module 802 may search for the type of information corresponding to the image content of the to-be-shared picture. For example, when the bubble type is an encyclopedia, the bubble module 802 may search for an encyclopedia introduction corresponding to the image content of the to-be-shared picture.

The bubble module 802 may determine the image content of the to-be-shared picture based on the image data. The bubble module 802 may then determine the associated information corresponding to the information type of the image content.

When the image data in the request is complete image data of the to-be-shared picture or a part of image data of the to-be-shared picture, the bubble module 802 may first recognize the image data, and determine the image content indicated by the image data. The bubble module 802 may determine the information associated with the image content.

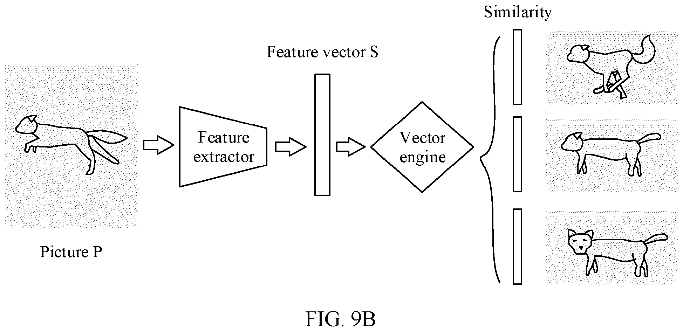

Specifically, the bubble module 802 includes an image recognition model. The image recognition model is established based on an image recognition algorithm, and is a model for recognizing image content included in a picture. The bubble module 802 may recognize the image content of the to-be-shared picture by using the image recognition model. **FIG. 9B** **shows an example of a schematic diagram of recognizing image content by using an image recognition model.** As shown in FIG. 9B, the image recognition model includes a feature extractor and a vector engine.

The feature extractor is obtained by training a large number of labeled pictures by using the image recognition algorithm, and is a device configured to obtain features of the image content in the picture. The image recognition algorithm includes but is not limited to an artificial neural network algorithm and the like. This is not limited in embodiments of this application.

The feature extractor can convert an input picture into an N-dimensional feature vector, where N can be any positive integer. The N-dimensional feature vector may be used to calculate a similarity between images, and further used to determine image content included in the input picture.

The vector engine is a searcher based on a clustering algorithm. The vector engine may cluster massive pictures based on a distance between feature vectors. When receiving a group of input feature vectors, the vector engine may search for a clustering center closest to the input feature vectors, and then perform traversal search in the clustering center to determine a candidate feature most similar to the input feature vectors. A candidate feature has a unique identifier (ID) that marks the candidate feature. The vector engine determines, based on the unique ID of the matched candidate feature, image content information included in the picture.

After the request for creating a bubble, the bubble module 802 may input the image data carried in the request into the image recognition model. In this case, the image data is an input image input to the image recognition model.

After the input image is determined, the feature extractor in the image recognition model may obtain a feature vector of the input image from the input image. The feature vector may be used to describe the image content in the input image. For example, the feature extractor may extract a group of feature vectors from the image data of the picture P, and the feature vectors are denoted as feature vectors S. The feature vectors S may be used to reflect the image content included in the picture P: the "Chinese pastoral dog".

Then, the feature vectors extracted by the feature extractor can be input to the vector engine. After receiving the input feature vectors, the vector engine may calculate a candidate feature closest to the input feature vectors, that is, a candidate feature most similar to the input feature vectors. Further, the vector engine may determine, based on a unique ID of the candidate feature, a feature included in the input image. For example, the vector engine may determine, based on a clustering algorithm, a candidate feature M (feature vector M) closest to the feature vectors S. Image content described by the candidate feature M is "Chinese pastoral dog". Therefore, the vector engine may determine that image content indicated by the input feature vectors S is the "Chinese pastoral dog", that is, the image content included in the picture P is the "Chinese pastoral dog".

Subsequently, the bubble module 802 may determine information associated with the image content based on the image content recognized in the foregoing process.

With reference to the description of the bubble module 802 in FIG. 8A, in some embodiments, an image library is preset in the bubble module 802. After recognizing the image content in the to-be-shared picture, the bubble module 802 may search for the image library to obtain the associated information ("title" and "description") that matches the image content. FIG. 8A further describes another method for determining the associated information that matches the image content, for example, using a search engine to determine the information that includes the image content. Details are not described herein again.

Optionally, the first electronic device may perform simple image recognition. Therefore, the image data carried in the request may also be an image feature or even a recognition result. For example, the image data is a pixel feature indicating that the image content is the "Chinese pastoral dog", or the image data is directly a recognition result of the "Chinese pastoral dog". In this way, the bubble module 802 may directly match the associated information based on the image feature or the recognition result, that is, no image recognition needs to be performed on the original to-be-shared picture.

When the bubble type carried in the request sent in step S103 is a source, the signal carried in the request further includes additional image information. In this case, the bubble module 802 may determine that the additional image information is information that needs to be displayed in the source bubble, that is, information associated with the image content of the to-be-shared picture.

In some embodiments, when the bubble type is a source, the first electronic device may generate the source type bubble independently, and then when sharing the bubble, send the parameter of the bubble and the carried information to the sharing module 803. In this case, when creating the bubble of the above-described type, the first electronic device does not need to send a creation request to the bubble module 802, and does not need to request the bubble module 802 to provide a service of matching information that needs to be displayed in the bubble.

When the bubble type is a recommendation, the bubble type carried in the request sent in step S103 may indicate that the type of the bubble to be created by the bubble module 802 is a recommendation. A signal carried in the request also includes device status information. The bubble module 802 may generate recommendation content based on the device status information, that is, information associated with the image content of the to-be-shared picture.

In embodiments of this application, the device status information is a real-time geographical location of the first electronic device. Not limited to the location information, when generating the recommendation bubble, the electronic device may further obtain other schedule information such as meteorological information and a to-do list. This is not limited in embodiments of this application. For example, when the meteorological information is obtained, current meteorological information may be displayed in the recommendation bubble displayed by the first electronic device. When the schedule information is obtained, a schedule may be displayed in the recommendation bubble displayed by the first electronic device. Details are not described herein again.

The real-time geographical location of the first electronic device is used as an example. The first electronic device may add the location information to the request for creating a bubble and send the request to the bubble module 802.

After receiving the request, the bubble module 802 may obtain the location information from the request. In addition, the bubble module 802 may determine, based on the image data in the request, the location information indicated by the picture image content. Then, the location information carried in the request and the location information obtained by recognizing the picture are input into a flight search engine, and the bubble module 802 may determine flight information between locations indicated by the two pieces of location information. The flight search engine is an existing engine that can be used to search for a flight arrangement between two locations based on an entered departure location and a destination. The flight information is the information associated with the image content of the to-be-shared picture.

With reference to the user interfaces shown in FIG. 7A and FIG. 7B, the request for creating a bubble sent by the first electronic device to the bubble module 802 may carry the picture R and the city B. The picture R (the picture in the window 111 in FIG. 7A) is the to-be-shared picture. The city B is the current location of the first electronic device. By recognizing the picture R, the bubble module 802 may determine the location indicated by the picture R: the city A. If the first electronic device recognizes the picture R and determines that the picture R indicates the famous scenic spot A, the request may also carry the famous scenic spot A instead of the picture R. In this way, the bubble module 802 may determine the city A based on the famous scenic spot A, so that redundant calculation is avoided. Then, the bubble module 802 may input the city B and the city A into the flight search engine, so that the bubble module 802 may obtain the flight information from the city B to the city A. The flight information is the information associated with the image content of the to-be-shared picture.

**S105: The bubble module 802 returns the associated information to the first electronic device.** The associated information is information that is associated with the image content of the to-be-shared picture and that is determined by the bubble module 802.

For example, after determining to create an encyclopedia bubble, the bubble module 802 may search for, based on the bubble type and the image data that are carried in the request, an encyclopedia introduction that matches the image content of the to-be-shared picture. Then, the bubble module 802 may send a found encyclopedia introduction back to the first electronic device, so that the first electronic device displays the encyclopedia bubble.

With reference to the bubble 113 in FIG. 4B, after determining to create an encyclopedia bubble, the bubble module 802 may search for an encyclopedia introduction of the "Chinese pastoral dog" based on the "Chinese pastoral dog" (image content) in the picture P. Then, the bubble module 802 may transmit the encyclopedia introduction of the "Chinese pastoral dog" back to the first electronic device. In this way, the first electronic device displays the bubble 113 in FIG. 4B.

Because a capability of displaying information by the bubble is limited, in some embodiments, the bubble module 802 may further extract the matched associated information, to determine an overview and a main text of the associated information. In this way, the first electronic device may display the overview in the bubble, and then display the main text after an operation performed on the bubble is detected. With reference to FIG. 4B and FIG. 4C, details are not described herein again. In this case, content directly displayed in the bubble may be referred to as the overview, and content displayed after an operation performed on the bubble is detected may be referred to as the main text.

Preferably, the bubble may display the main text by using a URL, so that occupation of storage space of the first electronic device is reduced. For example, the data carried in a web page of the encyclopedia introduction of the "Chinese pastoral dog" searched by the bubble module 802 may be encyclopedia associated information of the picture P. In this case, the bubble module 802 may determine that the data carried in the web page is a full text of the associated information. Further, the bubble module 802 may extract an overview from the data carried in the above-described page (Chinese pastoral dog, a mammal of a subfamily Caninae of a family Canidae of an order Carnivora, and the like). Then, the bubble module 802 may send the overview and the URL of the web page to the first electronic device. For other types of bubbles, refer to the foregoing description, and details are not described herein again.

With reference to the bubble 116 in FIG. 4B, after determining to create a video bubble, the bubble module 802 may search for a video about the "Chinese pastoral dog" based on the "Chinese pastoral dog" in the picture P. In this case, the bubble module 802 may send, to the first electronic device, searched information about a video matching the to-be-shared picture, for example, a title and a cover of the video. The first electronic device may further extract the received video information, to obtain and display an overview of the video, for example, "VLOG of Chinese pastoral dog". In some embodiments, the bubble module 802 may send an address at which the found video is displayed, and then send the address to the first electronic device. The first electronic device may display the address in the bubble. When detecting an operation performed on the bubble 116, the first electronic device displays the video (full text) that matches the to-be-shared picture and that is sent by the bubble module 802. Refer to FIG. 4E.

With reference to the bubble 117 in FIG. 4B, after determining to create a picture bubble, the bubble module 802 may search for a picture about the "Chinese pastoral dog" based on the "Chinese pastoral dog" in the picture P. In this case, the bubble module 802 may send, to the first electronic device, a found picture that matches the to-be-shared picture. The first electronic device may further extract the received picture information, to obtain and display an overview of the picture, for example, "more pictures of Chinese pastoral dog". Similarly, the bubble module 802 may send an address on which the picture is displayed. When detecting an operation performed on the bubble 117, the first electronic device displays the picture (full text) that matches the to-be-shared picture and that is sent by the bubble module 802. Refer to FIG. 4D.

When the type of the created bubble is information, the associated information returned by the bubble module 802 to the first electronic device is news information related to the image content of the to-be-shared picture. For example, when the image content of the to-be-shared picture is the "Chinese pastoral dog", the bubble module 802 searches for news information about the "Chinese pastoral dog", and then the bubble module 802 may send the news information of the "Chinese pastoral dog" to the first electronic device. In this case, the first electronic device may display a title (overview) of the news in the bubble. Refer to the bubble 511 in FIG. 5C. When detecting an operation performed on the bubble, the first electronic device displays a full text of the news information.

When the type of the created bubble is a source, with reference to FIG. 6A, the bubble module 802 may determine that the additional image information carried in the request shown in S103 is the associated information. Then, the bubble module 802 may indicate to the first electronic device that the additional image information is the associated information.

Preferably, the first electronic device may determine the associated information in the source bubble independently. That is, the first electronic device may determine that the obtained web page address of the to-be-shared picture is the associated information, or information such as a name and a model of the first electronic device, and a geographical location at which the to-be-shared picture is shot may be referred to as the associated information. The source information of the to-be-shared picture displayed in the source bubble may be determined by the first electronic device independently, without depending on a service provided by the bubble module.

When the type of the created bubble is a recommendation, the associated information returned by the bubble module 802 to the first electronic device is a travel scheme determined based on the geographical location indicated by the to-be-shared picture and the current location of the first electronic device, for example, the travel scheme from the city B to the city A shown in FIG. 7B and FIG. 7C. The information displayed in the bubble 711 in FIG. 7B may be referred to as an overview of the travel scheme.

**S106: The first electronic device displays the bubble.**

The first electronic device may display a bubble control at a location at which an operation performed by the user to create a bubble is detected. Then, the first electronic device may determine, based on the received associated information returned by the bubble module 802, content that needs to be displayed in the bubble control and content of a link.

For example, after receiving the encyclopedia introduction of the "Chinese pastoral dog", the first electronic device may display the bubble 113 in FIG. 4B. The bubble 113 may show all or a part of the encyclopedia introduction of the "Chinese pastoral dog". For example, the first electronic device may receive the associated information of ["image content": Chinese pastoral dog; "title": a mammal of a subfamily Caninae of a family Canidae of an order Carnivora; "description": The Chinese pastoral dogs are mainly distributed in low-altitude areas that are centered on the central region and that are south of the Great Wall and east of the Qinghai-Tibet Plateau, and are widely found in Chinese rural areas and Southeast Asia. The Chinese pastoral dog is also known as "Chinese national dog"]. Therefore, all or a part of the associated information may be displayed in the bubble 113. When a display area of the bubble 113 is insufficient to display all the associated information, the bubble 113 may display a part of the associated information.

After receiving the video information that matches the "Chinese pastoral dog", the first electronic device may display the bubble 116 in FIG. 4B. A summary of the video that matches the "Chinese pastoral dog" may be displayed in the bubble 116. The first electronic device may further display a picture bubble, an information bubble, a source bubble, a recommendation bubble, and the like. Examples are not provided herein.

Optionally, after the bubble is created, the first electronic device may detect a user operation of editing the bubble. The first electronic device may change, in response to the operation, content displayed in the bubble.

**S107: The first electronic device detects the operation of editing the bubble.**

With reference to the user interfaces shown in FIG. 5A to FIG. 5I, the first electronic device may detect an editing operation performed on the created bubble to modify the bubble. The operation of editing the bubble includes changing a location and a form of the bubble and the information content carried by the bubble, and deleting the bubble.

FIG. 5F shows an editing operation for changing a display location of the bubble 512. The first electronic device may further detect an operation performed on the bubble 512 to adjust a size or a shape of the bubble 512, such as zooming out the bubble, and changing a round bubble into a rectangle bubble. The operation may be referred to as an editing operation of changing the form of the bubble. The first electronic device may further detect an operation of changing content displayed in the bubble, for example, changing "so cute" displayed in the bubble 512 to "a little cute" and the like. FIG. 5H shows an editing operation to delete the bubble 512.

S108: The first electronic device modifies the bubble based on the editing operation, and displays the modified bubble.

With reference to FIG. 5F, after detecting the operation of changing the location of the bubble 512, the first electronic device may obtain changed location data of the displayed bubble. Then, the first electronic device may display the bubble at the changed location. With reference to FIG. 5I, after detecting the operation of deleting the bubble 512, the first electronic device may terminate displaying the bubble 512.

S107 and S108 are optional steps. After detecting the editing operation, the first electronic device performs the foregoing steps to change the bubble. When no editing operation is detected, the first electronic device does not perform the foregoing steps.

**It may be understood that when the software architecture shown in** **FIG. 8B** **is used, the bubble module 802 in** **FIG. 9A** **may be the bubble module 821. The bubble module 821 may provide a bubble service for the first electronic device. A function provided by the bubble module 821 for the first electronic device is similar to a function provided by the bubble module 802, and details are not described herein again.**

In addition, when the server includes the access module 801, the data sent by the terminal device to the server and the data sent back by the server to the terminal device may pass through the access module 801, and details are not described herein again.

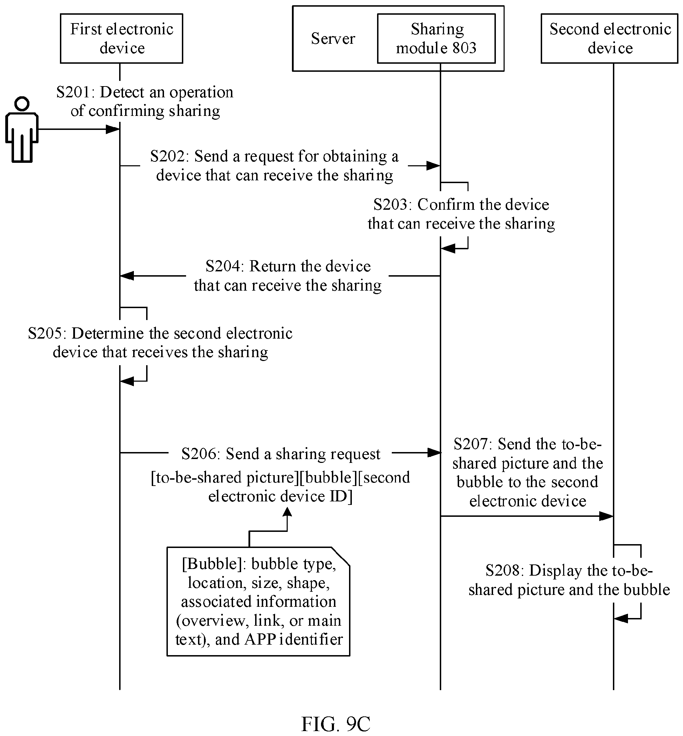

FIG. 9C is an example of a flowchart of sharing, by a first electronic device, a to-be-shared picture and a bubble included in the picture with another electronic device.

**S201: The first electronic device detects an operation of confirming sharing.**

With reference to the user interface shown in FIG. 2E, the operation of tapping "confirm sharing" by the user may be referred to as an operation of confirming the sharing by the user. In FIG. 3C, the operation of tapping "share" by the user may also be referred to as an operation of confirming the sharing by the user.

**S202: The first electronic device may send, to the sharing module 803, a request for obtaining a user or a device that can receive the sharing.**

**S203: The sharing module 803 determines a device that can receive the sharing.**

In response to the request, the sharing module 803 searches for a device that can receive the sharing. The device that can receive the sharing may include a near-field device and a remote device. The near-field device refers to a device that is close to the first electronic device and that is in a same local area network as the first electronic device. The remote device refers to an electronic device that is geographically far away from the first electronic device and that needs to be forwarded to establish a network. User operations that are logged in to the near field device and the remote device include a same user account and a second user account. The first user account is an account that is logged in to the first electronic device. The second user account is an account different from the first user account that is logged in to the first electronic device.

With reference to the user interface shown in FIG. 2I, "my mobile phone" and "my television" in the window 121 may be referred to as devices that are logged in with a same user account as the first electronic device. The device may be a near-field device or a remote device. "Jennie's mobile phone" may be an electronic device logged in with the second user account. In this case, generally, "Jennie's mobile phone" is a near-field device.

In the sharing process shown in FIG. 2F to FIG. 2H, a user such as "Lisa" and "Lia" may be referred to as a second user. In this case, the electronic device logged in with the second user account may be a near-field device, or may be a remote device.

**S204: The sharing module 803 returns, to the first electronic device, the device that can receive the sharing.**

The sharing module 803 may determine device information of the device that can receive the sharing. The device information includes but is not limited to one or more of a device type (mobile phone, watch, television, and the like), a name ("my mobile phone", "my television", "Jennie's mobile phone"), a logical address, a physical address, and the like. Then, the sharing module 803 may send the device information to the first electronic device.

**S205: The first electronic device determines a second electronic device that receives** the sharing.

The first electronic device may determine, based on the device information, a device that can receive the sharing, and simultaneously display a control corresponding to the device.

With reference to the user interface shown in FIG. 2I, after the sharing module 803 returns the device that can receive the sharing, the first electronic device may display the window 121. The window 121 may display a plurality of devices that can receive the sharing, including a near-field electronic device and a remote electronic device, "my mobile phone", "my television", "Jennie's mobile phone" and corresponding icons displayed in the window 121 are controls.

Then, the first electronic device may detect a user operation performed on a control in the window 121, for example, a user operation performed on "Jennie's mobile phone". The first electronic device determines, in response to the operation, that the electronic device that receives the sharing is "Jennie's mobile phone". In this case, "Jennie's mobile phone" may be referred to as the second electronic device. A user using "Jennie's mobile phone" may be referred to as the second user.

**S206: The first electronic device sends a sharing request to the sharing module 803.**

Specifically, the request may carry image data, a bubble, and a second electronic device ID. The image data is a to-be-shared picture, for example, the picture P, the picture Q, and the picture R in the foregoing embodiments. The bubble is a bubble of the to-be-shared picture, and includes information fields such as a "bubble type", a "location", a "size", a "shape", and "associated information".

When the picture P is used as an example, the bubble may be one or more of a bubble 113, a bubble 116, a bubble 117, a bubble 511, or a bubble 512. When the picture Q is used as an example, the bubble may be a bubble 612. When the picture R is used as an example, the bubble may be a bubble 711 or a bubble 721.

Further, the bubble 113 is used as an example. The request may carry a bubble type ("encyclopedia"), a location (a display location in the picture P), a size (a display area in the picture P), a shape (circle), and associated information (content that is displayed in the bubble and content that is not fully displayed) of the bubble 113.

The bubble field in the request may further include an "APP identifier" field. The "APP identifier" may be used to record an application associated with the bubble. When detecting an operation performed on the bubble, the first electronic device may determine, based on the "APP identifier", to display an application that carries more information. For example, in the scenario shown in FIG. 6A to FIG. 6C, the "APP identifier" field may record an identifier of an application that can provide the user with a commodity to purchase. In this way, the first electronic device may determine, based on the identifier, an application that provides a shopping service, and then the first electronic device may open 612 by using the application, to further provide a convenient and convenient shopping service for the user.

The second electronic device ID may indicate, for the sharing module 803, an electronic device that receives the sharing. After receiving IDs of a plurality of electronic devices from the sharing module 803, the first electronic device may determine, based on an operation of the user, a device ID of the electronic device (the second electronic device) that receives the sharing. For example, the device ID of the second electronic device may be a device name of the second electronic device, for example, "Jennie's mobile phone". In this case, the first electronic device may send the device ID of the second electronic device to the sharing module 803. The sharing module 803 may determine an address of the ID of the second electronic device based on the device name, for example, a logical address or a physical address.

**S207: The sharing module 803 sends the to-be-shared picture and the bubble to the second electronic device.**

After receiving the sharing request sent by the first electronic device, the sharing module 803 may determine, based on the second electronic device ID carried in the request, the address of the second electronic device that receives the sharing. Then, the sharing module 803 sends the to-be-shared picture and the bubble in the picture to the second electronic device based on the address.

**S208: The second electronic device displays the to-be-shared picture and the bubble.**

After receiving the to-be-shared picture and the bubble that are sent by the sharing module 803, the second electronic device may display the to-be-shared picture. In addition, the second electronic device may further draw a bubble based on information carried in the bubble, for example, information such as the "bubble type", the "location", the "size", the "shape", the "associated information", and the "APP identifier", and display the bubble in the to-be-shared picture. The picture displayed on the second electronic device and the bubble in the picture are the same as those in the first electronic device. Refer to the picture and the bubble displayed in the window 111 in FIG. 2E or FIG. 4B. Details are not described herein again.

Generally, a bubble displayed on the second electronic device is exactly the same as a bubble displayed on the first electronic device. Optionally, the "location" and the "size" of the bubble displayed on the second electronic device may be different from those of the bubble on the first electronic device. In this case, the bubble field in the sharing request sent by the first electronic device to the sharing module 803 may not include a "location" field or a "size" field. The second electronic device may generate and display the bubble based on a preset parameter.

**Optionally, when the software architecture shown in** **FIG. 8B** **is used, the sharing module 803 in** **FIG. 9C** **is the sharing module 822.** In this case, the first electronic device and the second electronic device are located in a same Wi-Fi network, or a short-range wireless connection such as a Bluetooth connection or a ZigBee connection is established between the first electronic device and the second electronic device. The first electronic device and the second electronic device may perform point-to-point picture sharing based on the same Wi-Fi network or the Bluetooth connection or the ZigBee connection. In this case, the service module 821 in the electronic device may provide a service for generating a bubble (corresponding to the bubble module 802 in the server), and the sharing module 822 may provide a sharing service. The sharing service that can be provided by the sharing module 822 for the first electronic device corresponds to the sharing module 803, and details are not described herein again. In addition, when the server includes the access module 801, the data sent by the terminal device to the server and the data sent back by the server to the terminal device may pass through the access module 801, and details are not described herein again.

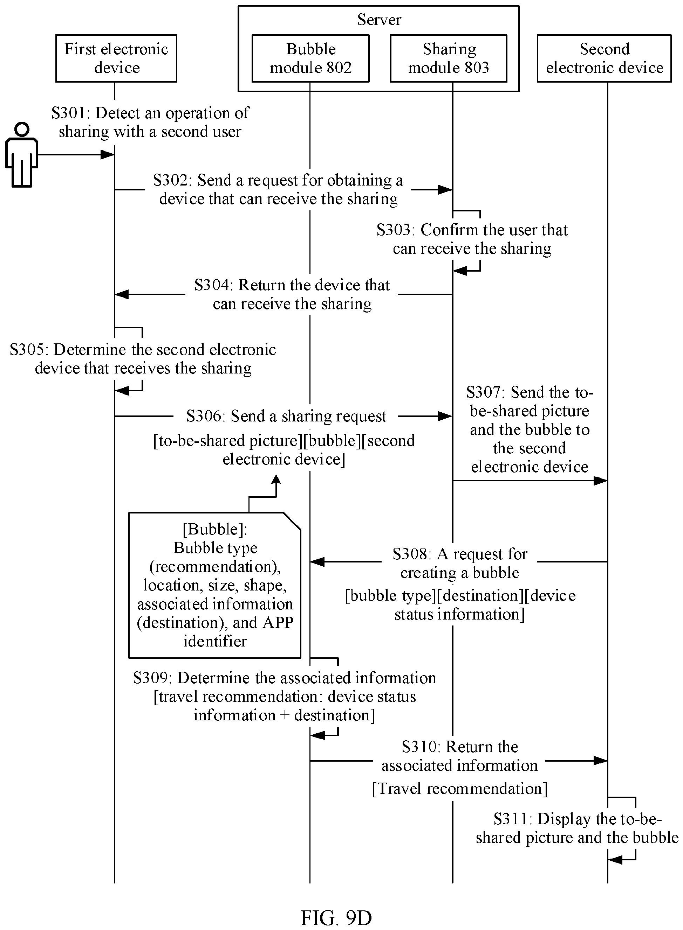

**In the sharing scenario shown in** **FIG. 7A to FIG. 7I****, for a sharing process of the first electronic device and a receiving and displaying process of the second electronic device, refer to** **FIG. 9D****.** As shown in FIG. 9D, for steps S301 to S305 in FIG. 9D, refer to the description of S201 to S205 in FIG. 9C. Details are not described herein again.

**S306: The first electronic device sends a sharing request to the sharing module 803.**

In this case, the "bubble type" of the bubble is "recommendation". In this case, the "associated information" may include only a location (destination) indicated by the recognized to-be-shared picture, for example, a city A. In this way, when generating a new recommendation bubble, the second electronic device may no longer recognize picture content, but directly determine new travel recommendation information based on the location carried in the request and the current location of the second electronic device. In this way, repeated redundant image recognition can be avoided, computing resources can be saved, and a problem that a travel recommendation error may be caused by inconsistent recognition results obtained by two times of image recognition can be avoided.

In the scenario in which the second electronic device displays both the recommendation bubble (bubble 711) of the first electronic device and the recommendation bubble (bubble 731) of the second electronic device shown in FIG. 7G, the bubble field in the request may record information about a plurality of bubbles. For the recommendation bubble of the second electronic device, the "associated information" field of the bubble may include only a location (destination) indicated by the recognized to-be-shared picture. Refer to the foregoing description. For the recommendation bubble of the first electronic device, the "associated information" field of the bubble should record all associated information carried in the bubble. In this way, the second electronic device may directly draw the recommendation bubble of the first electronic device based on the information carried in the bubble field, without performing additional calculation.

Similarly, in the sharing scenario shown in FIG. 7A to FIG. 7I, the bubble field in the request may not carry information such as a "location" and a "size". This is because the location and size of the bubble displayed by the second electronic device do not necessarily need to be exactly the same as those displayed by the first electronic device.

**S307: The sharing module 803 sends the to-be-shared picture and the bubble to the second electronic device. Refer to S207, and details are not described herein again.**

**S308: The second electronic device sends a request for creating a bubble to the bubble module 802.**

After receiving the picture and the bubble that the first electronic device determines to share, the second electronic device may send the request for creating a bubble to the bubble module 802. The request may carry the "bubble type", the "destination", and the "device status information" of the second electronic device. In the sharing scenario shown in FIG. 7A to FIG. 7I, the device status information includes location information.

**S309: The bubble module 802 determines the associated information.**

After receiving the request for creating a bubble sent by the second electronic device, the bubble module 802 may determine, based on the "recommendation" bubble type, to generate the travel recommendation information of the second electronic device by using the "destination" (the location information indicated by the original to-be-shared picture) and the "device status information" (the current location of the second electronic device). Specifically, for a process in which the bubble module 802 generates the travel recommendation information based on the location information of the second electronic device and the location information in the original to-be-shared picture, refer to the description of S 104 in FIG. 9A. Details are not described herein again.

With reference to the user interface shown in FIG. 7I, when receiving the picture R shared by the first electronic device, the second electronic device may simultaneously receive a destination that is indicated by image content in the picture R and that is obtained by the first electronic device by recognizing the picture R: the city A. Then, the second electronic device invokes a positioning service to determine the current location of the second electronic device: the city C. Subsequently, the second electronic device sends the request for creating a bubble to the bubble module 802, where the request may carry the destination (the city A) and the location information (the city C) of the second electronic device. Thus, the bubble module 802 may determine flight information from the city C to the city A by using the city C and the city A and a flight search engine.

**S310: The bubble module 802 returns the associated information to the first electronic device.** In this case, the associated information is a trip determined based on the destination and the current location of the second electronic device.

**S311: The second electronic device displays the to-be-shared picture and the bubble.**

After receiving the associated information returned by the bubble module 802, the second electronic device may display the picture shared by the first electronic device. In addition, the first electronic device may display, in a process of displaying the picture, a travel bubble generated based on the current location of the first electronic device. Optionally, after receiving the picture shared by the first electronic device (S307), the second electronic device may display the picture. When displaying the picture, the second electronic device may obtain the associated information from the bubble module 802.

With reference to the user interface shown in FIG. 7I, the second electronic device may display the received picture R and the bubble 731 generated based on the current location of the second electronic device. A travel scheme between the city C and the city A may be displayed in the bubble 731. After detecting the user operation performed on the bubble 731, the second electronic device may display the specific travel scheme shown in FIG. 7H, so that the user can learn of the travel information from the location of the second electronic device to the location in the picture R, including flight information, rail transit information, and the like.

Similarly, adaptively, in the system architectures of short-range sharing in FIG. 1B and FIG. 8B, the bubble module 802 and the sharing module 803 that adapt to the system architectures in FIG. 1A and FIG. 8A may be correspondingly replaced with the bubble module 821 and the sharing module 822. For services supported by the bubble module 821 and the sharing module 822, and functions that can be implemented, refer to the bubble module 802 and the sharing module 803, and details are not described herein again.

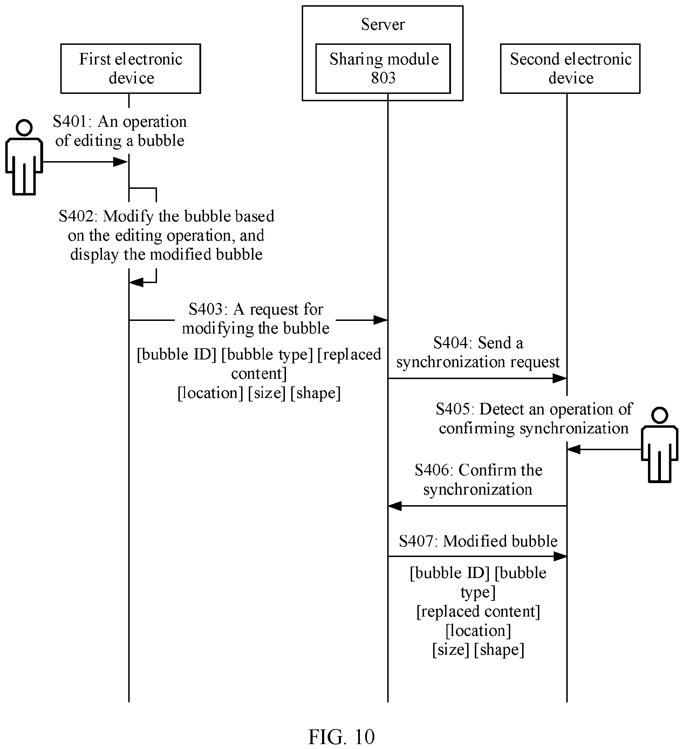

After the sharing, the first electronic device and the second electronic device may detect an operation of editing a bubble. The electronic device may change, in response to the operation, a parameter of the bubble and displayed content. In some embodiments, the first electronic device and the second electronic device only change the parameter of the bubble and the content displayed by the bubble of the first electronic device and the second electronic device respectively. In some embodiments, the first electronic device and the second electronic device may synchronize edited bubbles. Specifically, FIG. 10 is an example of a flowchart of synchronizing bubbles between the first electronic device and the second electronic device.

As shown in FIG. 10, S401: The first electronic device detects an operation of editing a bubble. S402: Modify the bubble based on the editing operation, and display the modified bubble. For S401 and S402, refer to the descriptions of S107 and S108 in FIG. 9A. Details are not described herein again.

**S403: The first electronic device sends a request for modifying the bubble to the sharing module 803.**

Specifically, the request may include a bubble identifier (ID) and a bubble type. The bubble ID can be used to recognize a bubble. The sharing module 803 may determine an edited bubble based on the bubble ID. The request may further include one or more of the following: replaced content, a location, a size, and a shape.

When the editing operation is an operation of changing the content displayed in the bubble, the replaced content field may record edited content entered by the user. When the editing operation is an operation of changing the location of the bubble, the location field may record a changed location of the bubble. When the editing operation is an operation of changing the size of the bubble, the size field may record a changed size of the bubble. When the editing operation is an operation of changing the shape of the bubble, the shape field may record a changed shape or the like.

**S404: The sharing module 803 sends a synchronization request to the second electronic device.**

After receiving the request for modifying a bubble, the sharing module 803 may send a synchronization prompt to the second electronic device. The prompt may ask whether the second electronic device synchronizes the bubble.

**S405: The second electronic device detects a user operation of confirming synchronization.**

After receiving the synchronization prompt, the second electronic device may ask the user whether to synchronize the bubble. For example, the second electronic device may display a prompt window. The synchronization prompt can be displayed in the window. The user may choose to confirm the synchronization or cancel the synchronization. The second electronic device may detect the user operation of confirming the synchronization.

**S406: The second electronic device sends a synchronization acknowledgment to the sharing module 803.**

**S407: The sharing module 803 sends the modified bubble to the second electronic device.**

After receiving the indication for confirming the synchronization, the sharing module may send, to the second electronic device, a modified bubble parameter carried in the bubble modification request. The parameter includes the bubble ID, the bubble type, the replaced content, the location, the size, the shape, and the like. After receiving the parameter, the second electronic device may display the edited bubble based on the parameter.

Similarly, the second electronic device may also detect an operation of editing a bubble. With reference to the method shown in FIG. 10, the second electronic device may also send the request for modifying a bubble to the sharing module 803. After receiving an instruction indicating that the first electronic device determines the synchronization, the sharing module 803 may send the modified parameter of the bubble to the first electronic device, to update the location, the size, the displayed content, and the like of the bubble in the first electronic device.

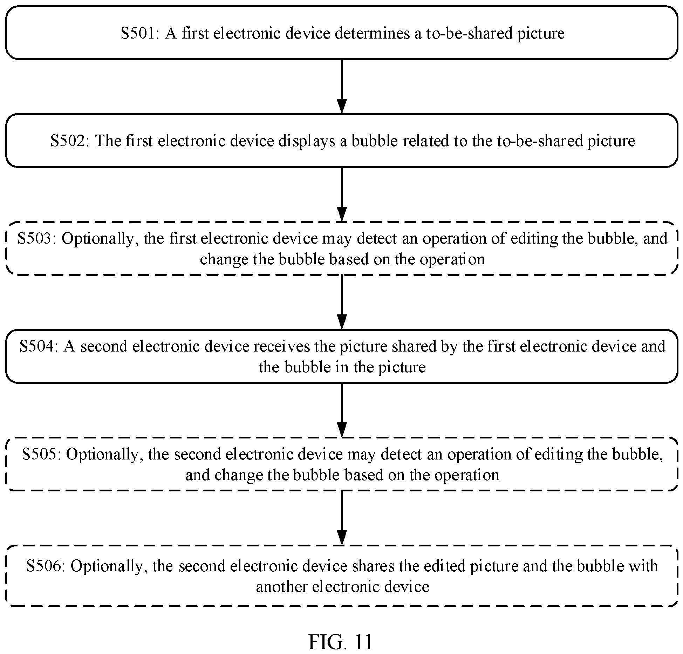

FIG. 11 is an example of a flowchart in which a first electronic device implements a picture sharing method according to an embodiment of this application to share a picture with a second electronic device.

**S501: The first electronic device determines a to-be-shared picture.**

With reference to S101 shown in FIG. 9A, the first electronic device may detect an operation of creating a bubble, and determine, based on the operation of creating a bubble, a picture that a user wants to share, that is, the to-be-shared picture.

In some embodiments, with reference to the user interface shown in FIG. 2C, the first electronic device may detect a tapping operation performed on the sharing control. The tapping operation is the operation of creating a bubble. In this case, the picture displayed in the window 111 is the to-be-shared picture.

**S502: The first electronic device displays a bubble related to the to-be-shared picture.**

With reference to S102 shown in FIG. 9A, after detecting the operation of creating a bubble, the first electronic device may display one or more options indicating a bubble type. The user may indicate, by using the option, the information displayed in the bubble generated by the first electronic device. The first electronic device may determine, based on the bubble type, the associated information matching the image content of the to-be-shared picture, that is, information to be displayed in the bubble. The first electronic device may detect a user operation performed on a plurality of options. The first electronic device may generate a plurality of different types of bubbles. Thus, the user may obtain various different types of information associated with the image content.

After determining the associated information, the first electronic device may display the associated information. Specifically, the first electronic device may display a bubble control at a location at which the operation of creating a bubble is detected. Then, the first electronic device may display a part or all of the associated information on the bubble control, so that the user views the associated information. When an area supported by the bubble control to display the information is insufficient to display all the associated information, the bubble control may display a part of the associated information.

**S503: Optionally, the first electronic device may detect an operation of editing the bubble, and change the bubble based on the operation.**

After the first electronic device creates the bubble and before the first electronic device shares the bubble, the first electronic device may further detect an operation of editing a bubble. Refer to S 107 and S108. After detecting the editing operation, the first electronic device performs the foregoing steps to change the bubble. When no editing operation is detected, the first electronic device does not perform the foregoing steps.

**S504: The second electronic device receives the picture shared by the first electronic device and the bubble in the picture.**

Specifically, based on the bubble type, the first electronic device shares the picture and the bubble in different manners.

In some embodiments, when the content displayed in the bubble is related only to the image content of the to-be-shared picture, the second electronic device may display, in the second electronic device based on the parameter of the bubble sent by the first electronic device, the same bubble in the first electronic device. In this case, for a process in which the first electronic device sends the to-be-shared picture and the bubble to the second electronic device, refer to FIG. 9C.

For example, when the bubble type is an encyclopedia, a video, a picture, information, or a source, the bubble displayed in the second electronic device is consistent with the bubble displayed in the first device. The sharing method shown in FIG. 9C is applicable to the sharing process.

In some embodiments, when the content displayed in the bubble is not only related to the image content of the to-be-shared picture, but also related to the device that displays the bubble, for a process in which the first electronic device sends the to-be-shared picture and the bubble to the second electronic device, refer to FIG. 9D. For example, when the bubble type is a recommendation, the sharing method shown in FIG. 9D is applicable to the sharing process.

**S505: Optionally, the second electronic device may detect an operation of editing the bubble, and change the bubble based on the operation.**

After receiving the picture and the bubble that are shared by the first electronic device, the second electronic device may change the bubble based on the operation of editing the bubble by the user, including changing content displayed in the bubble, a location, a size, and a shape of the bubble, and deleting the bubble.

In some embodiments, the bubble edited by the second electronic device is not synchronized to the first electronic device. When the second electronic device determines to share the edited bubble with the first electronic device, the second electronic device sends the edited bubble to the first electronic device, to update the bubble in the first electronic device. In this way, the electronic device that receives the sharing can be prevented from arbitrarily modifying the data stored in the first electronic device, so that independence of the data stored in the first electronic device is reduced.

In some embodiments, the bubble edited by the second electronic device may be synchronized to the first electronic device. Specifically, for the synchronization process, refer to FIG. 10. In this way, the first electronic device may determine, in real time at any time, a change of the bubble made by the electronic device that receives the sharing.

**S506: Optionally, the second electronic device shares the edited picture and the bubble with another electronic device.**

After receiving the picture and the bubble that are shared by the first electronic device, the second electronic device may share the picture and the bubble with another electronic device. The another electronic device may be the first electronic device, or may be another electronic device other than the first electronic device and the second electronic device.

In this case, the picture and the bubble that are shared by the second electronic device may be the unedited picture and the bubble shared by the first electronic device, or may be edited by the second electronic device. In this way, the user (the second user) of the second electronic device may not only obtain, based on the bubble, more information that introduces the picture content, but also perform personalized editing on the information in the existing bubble, and then further share the information.

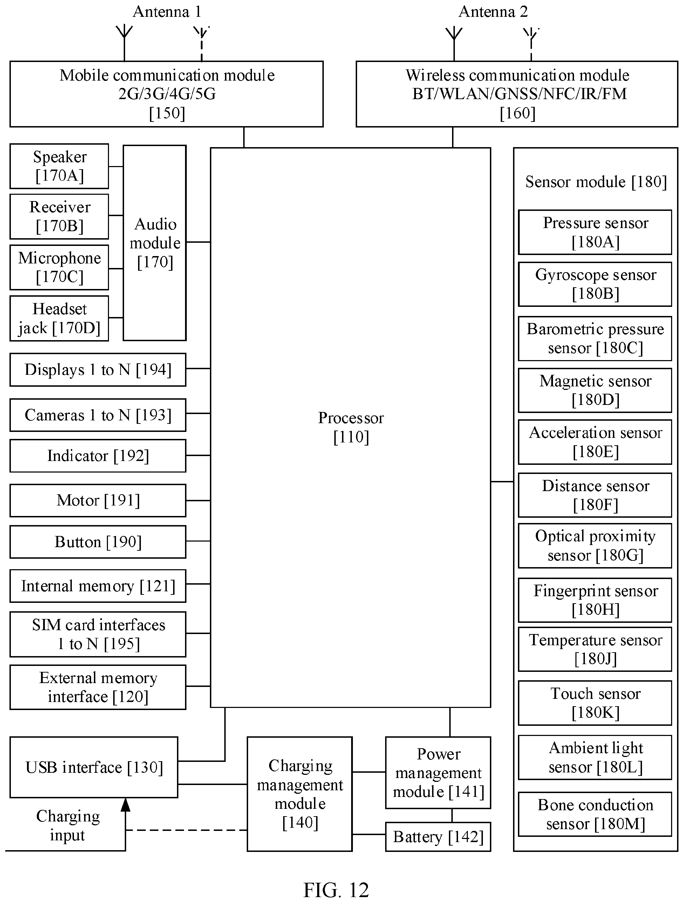

**FIG. 12** **is a schematic diagram of a hardware structure of a first electronic device (or a second electronic device).**

The first electronic device (or the second electronic device) may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the first electronic device (or the second electronic device). In some other embodiments of this application, the first electronic device (or the second electronic device) may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

A wireless communication function of the first electronic device (or the second electronic device) may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the first electronic device (or the second electronic device) may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the first electronic device (or the second electronic device) and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules of the processor 110.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that is applied to the first electronic device (or the second electronic device) and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and transmits a processed signal to the processor 110. The wireless communication module 160 may further receive a to-be-transmitted signal from the processor 110, perform frequency modulation and amplification on the signal, and convert the signal into an electromagnetic wave for radiation through the antenna 2.

In some embodiments, the antenna 1 and the mobile communication module 150 in the first electronic device (or the second electronic device) are coupled, and the antenna 2 and the wireless communication module 160 in the first electronic device (or the second electronic device) are coupled, so that the first electronic device (or the second electronic device) can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

**In embodiments of this application, data (a request, a control command, an image, a bubble, and the like) sent and received between the first electronic device, the second electronic device, and the server depends on a wireless communication function provided by the antenna 1, the antenna 2, the mobile communication module 150, the wireless communication module 160, the modem processor, and the baseband processor.**

The first electronic device (or the second electronic device) may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display 194 includes a display panel. The display panel may be a liquid crystal display (liquid crystal display, LCD). The display panel may be manufactured by using an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like production department. In some embodiments, the electronic device may include one or N displays 194, where N is a positive integer greater than 1.

**In embodiments of this application, a process of displaying the user interfaces shown in** **FIG. 2A to FIG. 2I****,** **FIG. 3A to FIG. 3E****,** **FIG. 4A to FIG. 4H****,** **FIG. 5A to FIG. 5I****,** **FIG. 6A to FIG. 6C****, and** **FIG. 7A to FIG. 7E** **on the first electronic device, and displaying the user interfaces shown in** **FIG. 7E to FIG. 7I** **on the second electronic device depends on a display capability provided by the GPU, the display 194, the application processor, and the like.**

The first electronic device (or the second electronic device) may implement a shooting function through the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a shooting scenario. In some embodiments, the ISP may be disposed in the camera 193.

The camera 193 may be configured to capture a static image or a video. An optical image of an object is generated through a lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the first electronic device (or the second electronic device) may include one or N cameras 193, where N is a positive integer greater than 1.

The digital signal processor is configured to process a digital signal, and may process another digital signal in addition to the digital image signal. For example, when the first electronic device (or the second electronic device) selects a frequency, the digital signal processor is configured to perform Fourier transformation on frequency energy.

The video codec is configured to compress or decompress a digital video. The first electronic device (or the second electronic device) may support one or more video codecs. In this way, the first electronic device (or the second electronic device) may play or record videos in a plurality of coding formats, for example, moving picture experts group (moving picture experts group, MPEG)-1, MPEG-2, MPEG-3, and MPEG-4.

**In embodiments of this application, the to-be-shared picture may be a photo taken by the first electronic device by using a camera. The first electronic device shoots the photo depending on a shooting capability provided by the ISP, the camera 193, the video codec, the GPU, the display 194, and the application processor.**

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM is usually referred to as a DDR5 SDRAM), and the like. The non-volatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia Card, eMMC), and the like according to storage specifications.

The random access memory may be directly read and written by using the processor 110. The random access memory may be configured to store an executable program (for example, machine instructions) in an operating system or another running program, and may be further configured to store data of a user, data of an application, and the like.

The non-volatile memory may also store the executable programs, the data of the users and the applications, and the like, and may be loaded into the random access memory in advance, to be directly read and written by the processor 110.

The external memory interface 120 may be configured to connect to an external non-volatile memory, to expand a storage capability of the first electronic device (or the second electronic device). The external non-volatile memory communicates with the processor 110 through the external memory interface 120, to implement a data storage function. For example, files such as music and videos are stored in the external non-volatile memory.

**Application program code for implementing the picture sharing method provided in embodiments of this application may be stored in the non-volatile memory connected to the external memory interface 120. When the first electronic device runs the program code, the first electronic device may load the program code into the internal memory 121, and execute the program code, to implement a capability of providing the image sharing method for the user.**

The first electronic device (or the second electronic device) is further preset with a plurality of sensors, for example, a pressure sensor 180A, a gyroscope sensor 180B, a barometric pressure sensor 180C, a magnetic sensor 180D, an acceleration sensor 180E, a distance sensor 180F, an optical proximity sensor 180G, an ambient light sensor 180L, a fingerprint sensor 180H, a temperature sensor 180J, a touch sensor 180K, a bone conduction sensor 180M, and the like.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided by using the display 194. In some other embodiments, the touch sensor 180K may also be disposed on a surface of the first electronic device (or the second electronic device) at a location different from that of the display 194.

**In embodiments of this application, the first electronic device (or the second electronic device) detects an operation performed by the user on the first electronic device, and receives input data of the user depending on a touch control capability provided by the touch sensor 180K.**

The first electronic device (or the second electronic device) further includes components such as a button 190, a motor 191, an indicator 192, and a SIM card interface 195. The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

A term "user interface (user interface, UI)" in the specification, claims, and accompanying drawings of this application is a medium interface for interaction and information exchange between a user and an application or an operating system, and implements conversion between an internal form of information and a form acceptable to the user. A user interface of an application program is source code written through a specific computer language such as Java or an extensible markup language (extensible markup language, XML). The interface source code is parsed and rendered on a terminal device, and finally presented as content that can be recognized by a user, for example, a control such as a picture, a text, or a button. A control (control) is also called a widget (widget), and is a basic element of a user interface. Typical controls include a toolbar (toolbar), a menu bar (menu bar), a text box (text box), a button (button), a scroll bar (scroll bar), a picture, and text. An attribute and content of a control on the interface are defined through a tag or node. For example, in an XML file, the control on the interface is defined through the node such as <Textview>, <ImgView>, or <VideoView>. A node corresponds to a control or attribute on the interface. After being parsed and rendered, the node is displayed as visible content. In addition, an interface of many applications, such as a hybrid application (hybrid application), usually further includes a web page. The web page, also referred to as a page, may be understood as a special control embedded in a user interface of an application. The web page is source code written in a specific computer language, for example, a hypertext markup language (hypertext markup language, HTML), cascading style sheets (cascading style sheets, CSS), or JavaScript (JavaScript, JS). The web page source code may be loaded and displayed as user-recognizable content by a browser or a web page display component with a function similar to a function of the browser. Specific content contained in the web page is also defined by tags or nodes in the web page source code. For example, GTML defines elements and attributes of the web page through <p>, <img>, <video>, and <canvas>.

The user interface is usually represented in a form of a graphical user interface (graphical user interface, GUI), and is a user interface that is related to a computer operation and that is displayed in a graphic manner. It may be an interface element such as an icon, a window, or a control displayed on a display of the electronic device. The control may include a visual interface element such as an icon, a button, a menu, a tab, a text box, a dialog box, a status bar, a navigation bar, and a widget.

All operations related to user data, such as data collection and calculation performed by the terminal device in this application, are performed only with permission of the user.

As used in the specification and appended claims of this application, terms "a", "one", "the", "the foregoing", and "this" of singular forms are intended to also include plural forms, unless otherwise clearly specified in the context. It should also be understood that the term "and/or" used in this application means and includes any or all possible combinations of one or more listed items. According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in embodiments may be implemented by a computer program instructing related hardware. The program may be stored in a computer-readable storage medium. When the program is run, the procedures of the methods in embodiments are performed. The foregoing storage medium includes any medium that can store program code, such as a ROM, a random access memory RAM, a magnetic disk, or an optical disc.

## Claims

1. A picture sharing method, applied to a first electronic device, wherein the method comprises:
displaying, by the first electronic device, a first interface, wherein a first picture is displayed on the first interface;
detecting, by the first electronic device, a first user operation;
displaying, by the first electronic device, a second interface in response to the first user operation, wherein the second interface comprises the first picture and a first control, the first control comprises first content, and the first content is associated with a first object in the first picture;
detecting, by the first electronic device, a second user operation; and
sending, by the first electronic device, a first message to a second electronic device in response to the second user operation, wherein the first message comprises the first picture and the first content, the first message is used by the second electronic device to display the first picture and a second control, and the second control comprises the first content.

2. The method according to claim 1, wherein before the displaying, by the first electronic device, a second interface, wherein the second interface comprises the first picture and a first control, the method further comprises:
displaying one or more options; and
the displaying, by the first electronic device, a second interface, wherein the second interface comprises the first picture and a first control comprises:
detecting a fourth user operation performed on a first option, wherein the first option is one of the one or more options; and
displaying, by the first electronic device, the first control in the first picture in response to the fourth user operation, wherein the first option is used to determine a type of the first control.

3. The method according to claim 2, wherein the fourth user operation comprises an operation of selecting the first option and a second option, the second option is one of the one or more options, and the method further comprises:
the second interface further comprises a third control, the third control comprises third content, the third content is associated with the first object in the first picture, and the third content is different from the first content.

4. The method according to any one of claims 1 to 3, wherein before the detecting, by the first electronic device, a second user operation, the method further comprises:
detecting, by the first electronic device, a fifth user operation performed on the first control; and
displaying, by the first electronic device, fourth content in response to the fifth user operation, wherein the fourth content is associated with the first content.

5. The method according to claim 4, wherein the first message comprises a first web address, and the fourth content is content comprised in a page corresponding to the first web address.

6. The method according to any one of claims 1 to 5, wherein the method further comprises:
detecting, by the first electronic device, a seventh user operation performed on the first control; and
modifying, by the first electronic device, the first content comprised in the first control to sixth content in response to the seventh user operation, wherein
after the first electronic device modifies the first content comprised in the second control to the sixth content, the sixth content may be used to replace the first content displayed in the second control of the second electronic device.

7. The method according to any one of claims 2 to 6, wherein the one or more options comprise one or more of the following: an encyclopedia, a picture, a video, information, a source, and a recommendation.

8. The method according to claim 7, wherein
if the first option is an encyclopedia, the fourth content comprises an encyclopedia introduction of the first object; or
if the first option is a picture, the fourth content comprises a picture whose image content is the first object; or
if the first option is a video, the fourth content comprises a video whose video content is the first object; or
if the first option is information, the fourth content comprises news information that introduces the first object; or
if the first option is a source, the first content comprises a second web address, the second web address is a web address used by the first electronic device to obtain the first picture, and the fourth content is content comprised in a web page indicated by the second web address.

9. The method according to claim 8, wherein if the first option is a source, the first content comprises a second web address, the second web address is a web address provided by shopping software, and the first picture is an image comprised in a page indicated by the second web address.

10. The method according to claim 7, wherein
the first control comprises travel information corresponding to a first location and a second location, wherein the first location is related to the first object, the second location is related to the first electronic device, and the first content comprises the first location; and
the second control comprises travel information corresponding to a third location and the first location, and the third location is related to the second electronic device.

11. The method according to claim 10, wherein the first message comprises first location information.

12. The method according to claim 10 or 11, wherein the travel information comprises at least one of the following travel options: a train, a flight, or a bus;
the fifth user operation is an operation performed on a third option in the at least one travel option; and
the fourth content comprises a timetable and a ticket price that are of the second option and that are between the third location and the first location, and the timetable comprises one or more of a shift number, a departure location, a destination, a departure time, and an arrival time.

13. The method according to claim 1, wherein
the first user operation is an operation of touching and holding the first picture; or
the first user operation is an operation of tapping a fourth control on the first interface.

14. A picture sharing method, applied to a second electronic device, wherein the method comprises:
receiving a first message sent by a first electronic device, wherein the first message comprises a first picture and first content, and the first content is associated with a first object in the first picture; and
displaying, by the second electronic device, a third interface based on the first message, wherein the first picture and a second control are displayed on the third interface, and the second control comprises the first content.

15. The method according to claim 14, wherein the method further comprises:
detecting, by the second electronic device, a third user operation performed on the second control; and
displaying, by the second electronic device, second content in response to the third user operation, wherein the second content is associated with the first content.

16. The method according to claim 11 or 15, wherein
the first message further comprises third content, the third interface further comprises a third control, the third control comprises the third content, the third content is associated with the first object in the first picture, and the third content is different from the first content in the second control.

17. The method according to any one of claims 14 to 16, wherein the first message comprises a first web address, and the second content comprises page content corresponding to the first web address.

18. The method according to any one of claims 14 to 17, wherein the method further comprises:
detecting, by the second electronic device, a sixth user operation performed on the second control; and
modifying, by the second electronic device in response to the sixth user operation, the first content comprised in the second control to fifth content, wherein
after the second electronic device modifies the first content comprised in the second control to the fifth content, the fifth content may be used to replace the first content displayed in the first control of the first electronic device.

19. The method according to any one of claims 15 to 18, wherein a type of the second content comprises one or more of the following: an encyclopedia, a picture, a video, information, a source, and a recommendation.

20. The method according to claim 19, wherein
if the type is an encyclopedia, the second content comprises an encyclopedia introduction of the first object; or
if the type is a picture, the second content comprises a picture whose image content is the first object; or
if the type is a video, the second content comprises a video whose video content is the first object; or
if the type is information, the second content comprises news information that introduces the first object; or
if the type is a source, the first content comprises a second web address, the second web address is a web address used by the first electronic device to obtain the first picture, and the second content is content comprised in a web page indicated by the second web address.

21. The method according to claim 20, wherein if the type is a source, the first content comprises a second web address, the second web address is a web address provided by shopping software, and the first picture is an image comprised in a page indicated by the second web address.

22. The method according to claim 19, wherein
the second control comprises travel information corresponding to a first location and a third location, wherein the first location is related to the first object, and the third location is related to the second electronic device.

23. The method according to claim 22, wherein the first message comprises first location information.

24. The method according to claim 22 or 23, wherein the travel information comprises at least one of the following travel options: a train, a flight, or a bus;
the third user operation is an operation performed on a second option in the at least one travel option; and
the second content comprises a timetable and a ticket price that are of the second option and that are between the third location and the first location, and the timetable comprises one or more of a shift number, a departure location, a destination, a departure time, and an arrival time.

25. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the method according to any one of claims 1 to 13 or the method according to any one of claims 14 to 24 is performed.

26. A computer-readable storage medium, comprising instructions, wherein when the instructions are run on an electronic device, the method according to any one of claims 1 to 13 or the method according to any one of claims 14 to 24 is performed.
